# EUROPEAN PATENT APPLICATION

(11) **EP 4 016 418 A1**
(43) Date of publication of application: **22.06.2022**
(21) Application number: 21215152.6
(22) Date of filing: 16.12.2021
(51) Int. Cl.: G06Q 10/06, G06Q 10/00

(54) **MANAGEMENT OF A PORTFOLIO OF ASSETS**

(30) Priority: 18.12.2020 US 202063127559 P; 04.01.2021 US 202163133652 P; 26.08.2021 IN 202111038629; 09.12.2021 US 202117546943
(71) Applicant: Honeywell International Inc., Charlotte, NC 28202 (US)
(72) Inventor: KRISHNASWAMY, Meenakshi Sundaram, Charlotte, 28202 (US); VIENGKHAM, Manyphay, Charlotte, 28202 (US); REDVERS, Simon, Charlotte, 28202 (US); BHANDARI, Ajit, Charlotte, 28202 (US); RAJASEKARAN, Sasi Alias Ezil Madhavan, Charlotte, 28202 (US); RICE, Eric L., Charlotte, 28202 (US); RYSKO, Garrett M., Charlotte, 28202 (US); PILLUTLA, Krishna, Charlotte, 28202 (US); DHOLAKIA, Ashoomi, Charlotte, 28202 (US)
(74) Representative: Stepney, Gregory John

(57) **Abstract**

Various embodiments described herein relate to management of a portfolio of assets. In this regard, a request to generate a dashboard visualization associated with a portfolio of assets received. The request includes an asset descriptor describing one or more assets in the portfolio of assets. Furthermore, in response to the request, aggregated data associated with the portfolio of assets is obtained based on the asset descriptor and metrics for an asset hierarchy associated with the portfolio of assets are determined based on a model related to a time series mapping of attributes for the aggregated data. The dashboard visualization comprising the metrics for an asset hierarchy associated with the portfolio of assets is also provided to an electronic interface of a computing device.

## Description

### CROSS REFERENCE TO RELATED APPLICATIONS

This application claims the benefit of U.S. Provisional Patent Application No. 63/127,559, titled "CONTEXTUAL ROLLUP OF INDUSTRIAL METRICS," and filed on December 18, 2020, U.S. Provisional Patent Application No. 63/133,652, titled "MANAGEMENT OF A PORTFOLIO OF ASSETS WITH CENTRALIZED CONTROL," and filed on January 4, 2021, and India Patent Application No. 202111038629, titled "VIRTUAL ASSISTANT FOR A PORTFOLIO OF ASSETS," and filed on August 26, 2021, the entireties of which are hereby incorporated by reference.

### TECHNICAL FIELD

The present disclosure relates generally to real-time asset analytics, and more particularly to real-time asset analytics for a portfolio of assets.

### BACKGROUND

Traditionally, data analytics and/or digital transformation of data related to assets generally involves human interaction. However, often times a specialized worker (e.g., a manager) is responsible for a large portfolio of assets (e.g., 1000 buildings each with 100 assets such as a boiler, a chiller, a pump, sensors, etc.). Therefore, it is generally difficult to identify and/or fix issues with the large portfolio of assets. For example, in certain scenarios, multiple assets (e.g., 25 assets) from the large portfolio of assets may have an issue. Furthermore, a limited amount of time is traditionally spent on modeling of data related to assets to, for example, provide insights related to the data. As such, computing resources related to data analytics and/or digital transformation of data related to assets are traditionally employed in an inefficient manner.

### SUMMARY

The details of some embodiments of the subject matter described in this specification are set forth in the accompanying drawings and the description below. Other features, aspects, and advantages of the subject matter will become apparent from the description, the drawings, and the claims.

In an embodiment, a system comprises one or more processors, a memory, and one or more programs stored in the memory. The one or more programs comprise instructions configured to receive a request to generate a dashboard visualization associated with a portfolio of assets. The request comprises an asset descriptor describing one or more assets in the portfolio of assets. In response to the request, the one or more programs comprise instructions configured to obtain, based on the asset descriptor, aggregated data associated with the portfolio of assets. In response to the request, the one or more programs also comprise instructions configured to determine metrics for an asset hierarchy associated with the portfolio of assets based on a model related to a time series mapping of attributes for the aggregated data. In response to the request, the one or more programs also comprise instructions configured to provide the dashboard visualization to an electronic interface of a computing device, the dashboard visualization comprising the metrics for an asset hierarchy associated with the portfolio of assets.

In another embodiment, a method comprises, at a device with one or more processors and a memory, receiving a request to generate a dashboard visualization associated with a portfolio of assets. The request comprises an asset descriptor describing one or more assets in the portfolio of assets. In response to the request, the method comprises obtaining, based on the asset descriptor, aggregated data associated with the portfolio of assets. In response to the request, the method also comprises determining metrics for an asset hierarchy associated with the portfolio of assets based on a model related to a time series mapping of attributes for the aggregated data. In response to the request, the method also comprises providing the dashboard visualization to an electronic interface of a computing device, the dashboard visualization comprising the metrics for an asset hierarchy associated with the portfolio of assets.

In yet another embodiment, a non-transitory computer-readable storage medium comprises one or more programs for execution by one or more processors of a device. The one or more programs include instructions which, when executed by the one or more processors, cause the device to receive a request to generate a dashboard visualization associated with a portfolio of assets. The request comprises an asset descriptor describing one or more assets in the portfolio of assets. In response to the request, the one or more programs include instructions which, when executed by the one or more processors, cause the device to obtain, based on the asset descriptor, aggregated data associated with the portfolio of assets. In response to the request, the one or more programs also include instructions which, when executed by the one or more processors, cause the device to determine metrics for an asset hierarchy associated with the portfolio of assets based on a model related to a time series mapping of attributes for the aggregated data. In response to the request, the one or more programs also include instructions which, when executed by the one or more processors, cause the device to provide the dashboard visualization to an electronic interface of a computing device, the dashboard visualization comprising the metrics for an asset hierarchy associated with the portfolio of assets.

### BRIEF DESCRIPTION OF THE DRAWINGS

The description of the illustrative embodiments can be read in conjunction with the accompanying figures. It will be appreciated that for simplicity and clarity of illustration, elements illustrated in the figures have not necessarily been drawn to scale. For example, the dimensions of some of the elements are exaggerated relative to other elements. Embodiments incorporating teachings of the present disclosure are shown and described with respect to the figures presented herein, in which:
FIG. 1 illustrates an exemplary networked computing system environment, in accordance with one or more embodiments described herein;
FIG. 2 illustrates a schematic block diagram of a framework of an IoT platform of the networked computing system, in accordance with one or more embodiments described herein;
FIG. 3 illustrates a system that provides an exemplary environment, in accordance with one or more embodiments described herein;
FIG. 4 illustrates another system that provides an exemplary environment, in accordance with one or more embodiments described herein;
FIG. 5 illustrates an exemplary computing device, in accordance with one or more embodiments described herein;
FIG. 6 illustrates an exemplary centralized control database, in accordance with one or more embodiments described herein;
FIG. 7 illustrates an exemplary system, in accordance with one or more embodiments described herein;
FIG. 8 illustrates another exemplary system, in accordance with one or more embodiments described herein;
FIG. 9 illustrates an exemplary system associated with digital twins, in accordance with one or more embodiments described herein;
FIG. 10 illustrates an exemplary system associated with a dashboard visualization, in accordance with one or more embodiments described herein;
FIG. 12 illustrates another exemplary system associated with a dashboard visualization, in accordance with one or more embodiments described herein;
FIG. 13 illustrates an exemplary system associated with a voice input, in accordance with one or more embodiments described herein;
FIG. 14 illustrates an exemplary system associated with natural language processing with respect to a voice input, in accordance with one or more embodiments described herein;
FIG. 15 illustrates an exemplary electronic interface, in accordance with one or more embodiments described herein;
FIG. 16 illustrates another exemplary electronic interface, in accordance with one or more embodiments described herein;
FIG. 17 illustrates another exemplary electronic interface, in accordance with one or more embodiments described herein;
FIG. 18 illustrates another exemplary electronic interface, in accordance with one or more embodiments described herein;
FIG. 19 illustrates another exemplary electronic interface, in accordance with one or more embodiments described herein;
FIG. 20 illustrates another exemplary electronic interface, in accordance with one or more embodiments described herein;
FIG. 21 illustrates another exemplary electronic interface, in accordance with one or more embodiments described herein;
FIG. 22 illustrates another exemplary electronic interface, in accordance with one or more embodiments described herein;
FIG. 23 illustrates another exemplary electronic interface, in accordance with one or more embodiments described herein;
FIG. 24 illustrates a schematic view of a material handling system including LiDAR based vision system, in accordance with one or more embodiments described herein;
FIG. 25 illustrates a schematic view of a target area of the material handling system including the LiDAR based vision system, in accordance with one or more embodiments described herein;
FIG. 26 illustrates an example scenario depicting monitoring of an operation performed by a worker in a material handling environment by using LiDAR based vision system, in accordance with one or more embodiments described herein;
FIG. 27 illustrates another example scenario depicting another operation performed in a material handling environment that can be monitored by using LiDAR based vision system, in accordance with one or more embodiments described herein;
FIG. 28 illustrates a flow diagram for creating create a dashboard visualization of metrics for an asset hierarchy associated with a portfolio of assets, in accordance with one or more embodiments described herein;
FIG. 29 illustrates a flow diagram for aggregating data across a portfolio of assets to create a dashboard visualization of prioritized actions for the portfolio of assets, in accordance with one or more embodiments described herein;
FIG. 30 illustrates a flow diagram for performing a natural language query to obtain data across a portfolio of assets and to create a dashboard visualization report for the portfolio of assets, in accordance with one or more embodiments described herein;
FIG. 31 illustrates a flow diagram for generating a voice input to create a dashboard visualization report for a portfolio of assets, in accordance with one or more embodiments described herein; and
FIG. 32 illustrates a functional block diagram of a computer that may be configured to execute techniques described in accordance with one or more embodiments described herein.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments. The term "or" is used herein in both the alternative and conjunctive sense, unless otherwise indicated. The terms "illustrative," "example," and "exemplary" are used to be examples with no indication of quality level. Like numbers refer to like elements throughout.

The phrases "in an embodiment," "in one embodiment," "according to one embodiment," and the like generally mean that the particular feature, structure, or characteristic following the phrase can be included in at least one embodiment of the present disclosure, and can be included in more than one embodiment of the present disclosure (importantly, such phrases do not necessarily refer to the same embodiment).

The word "exemplary" is used herein to mean "serving as an example, instance, or illustration." Any implementation described herein as "exemplary" is not necessarily to be construed as preferred or advantageous over other implementations.

If the specification states a component or feature "can," "may," "could," "should," "would," "preferably," "possibly," "typically," "optionally," "for example," "often," or "might" (or other such language) be included or have a characteristic, that particular component or feature is not required to be included or to have the characteristic. Such component or feature can be optionally included in some embodiments, or it can be excluded.

In general, the present disclosure provides for an "Internet-of-Things" or "IoT" platform for enterprise performance management that uses real-time accurate models and visual analytics to deliver intelligent actionable recommendations for sustained peak performance of an enterprise or organization. The IoT platform is an extensible platform that is portable for deployment in any cloud or data center environment for providing an enterprise-wide, top to bottom view, displaying the status of processes, assets, people, and safety. Further, the IoT platform of the present disclosure supports end-to-end capability to execute digital twins against process data and to translate the output into actionable insights, as detailed in the following description.

Traditionally, data analytics and/or digital transformation of data related to assets generally involves human interaction. However, often times a specialized worker (e.g., a manager) is responsible for a large portfolio of assets (e.g., 1000 buildings each with 100 assets such as a boiler, a chiller, a pump, sensors, etc.). Therefore, it is generally difficult to identify and/or fix issues with the large portfolio of assets. For example, in certain scenarios, multiple assets (e.g., 25 assets) from the large portfolio of assets may have an issue. Furthermore, a limited amount of time is traditionally spent on modeling of data related to assets to, for example, provide insights related to the data. As such, computing resources related to data analytics and/or digital transformation of data related to assets are traditionally employed in an inefficient manner.

As an example, it is generally desirable for management personnel (e.g., executives, managers, etc.) to be provided with an understanding of which assets from a portfolio of assets require service, which assets from a portfolio of assets should be serviced first, etc. For example, it is often desirable for management personnel (e.g., executives, plant managers, etc.) to be provided with a common view of rolled up metrics related to an industrial environment (e.g., an industrial plant) to, for example, increase asset and/or operation performance. However, in spite of various dashboard technology available today, metrics displayed do not provide insight to improve and/or adjust execution strategy by management personnel (e.g., executives, plant managers, etc.) without depending on technical personnel (e.g., engineers, etc.). Hence, management personnel (e.g., executives, plant managers, etc.) generally heavily depend on engineering analysis, which is generally involves extensive and/or time-consuming analysis in order to obtain metrics for an industrial environment. Additionally, it is generally desirable for management personnel (e.g., executives, managers, etc.) to be provided with improved technology to facilitate servicing of assets from a portfolio of assets. For example, traditional dashboard technology generally involves manual configuration of the dashboard to, for example, provide different insights for assets. Furthermore, traditional dashboard technology employed with dashboard data modelling of assets is generally implemented outside of a core application and/or asset model. Therefore, it is generally difficult to execute data modelling for assets in an efficient and/or accurate manner.

Thus, to address these and/or other issues, technologies and/or techniques to manage a portfolio of assets is provided. In various embodiments, the technologies and/or techniques disclosed herein are employed to manage asset performance to, for example, improve performance of one or more assets in a portfolio of assets.

In one or more embodiments, management of a portfolio of assets with centralized control to facilitate asset performance management is provided. In various embodiments, data associated with one or more assets is ingested, cleaned and aggregated to provide aggregated data. Furthermore, in various embodiments, one or more metrics are determined from the aggregated data to provide opportunity and/or performance insights for the assets. According to various embodiments, a dashboard visualization that presents issues associated with one or more assets from a portfolio of assets is provided. In various embodiments, the dashboard visualization is an enterprise application that allows a portfolio operator to remotely manage, investigate, and/or resolve issues associated with a portfolio of assets. In various embodiments, the dashboard visualization facilitates aggregation of asset performance data into a score or metric value such as, for example, a key performance indicator (KPI). In various embodiments, the dashboard visualization additionally or alternatively facilitates providing recommendations to improve asset performance. In various embodiments, the dashboard visualization additionally or alternatively facilitates remote control and/or altering of asset set points. In one or more embodiments, the issues associated with the one or more assets are ordered such that issues with a largest impact with respect to the portfolio of assets is presented first via the dashboard visualization. Impact may be based on cost to repair an asset, energy consumption associated with issues related to the one or more assets, savings lost associated with issues related to the one or more assets, etc.

In various embodiments, a user may employ the dashboard visualization to identify issues associated with the portfolio of assets, to make adjustments with respect to the portfolio of assets, and/or to make work orders associated with the portfolio of assets. In various embodiments, a user may be subscribed to a performance management category (e.g., Energy Optimization, Digitized Maintenance, etc.) to facilitate determining issues for the portfolio of assets to be resolved and/or to facilitate determining an ordering for prioritized actions related to the portfolio of assets. For example, an ordering of prioritized actions may be different for Energy Optimization than Digitized Maintenance. In various embodiments, the dashboard visualization provides an alerts list that combines alerts from an on-premise building management system (BMS). In various embodiments, cloud analytics is performed to group alerts based on issues and/or to prioritize the issues based on one or more algorithms. In various embodiments, the dashboard visualization provides an issue analysis triage solution that employs one or more data models to automatically present information to facilitate analysis and/or actions related to alerts. In various embodiments, the dashboard visualization provides a service case management solution that is integrated into a building management technical solution to create issue-based cases related alerts and/or asset links. In various embodiments, the dashboard visualization centralizes portfolio operations to a single location to allow operators to easily understand an operational status of assets, to investigate issues related to assets, and/or to make control changes related to assets. As such, according to various embodiments, asset and/or workforce use is optimized, and highest priority issues related to the portfolio of assets is presented to a user in an optimal manner. Additionally, according to various embodiments, facility operating and/or maintenance costs are reduced while also improving equipment up-time, service operational efficiency, and/or environmental conditions by employing the dashboard visualization. Additionally, by employing the dashboard visualization according to various embodiments, remote triage of faults and/or remote resolution of asset issues is provided. Additionally, according to various embodiments, the dashboard visualization provides centralized capability to review, manage and/or control assets.

In one or more embodiments, a virtual assistant for a portfolio of assets to facilitate real-time asset analytics is additionally or alternatively provided. For instance, in various embodiments, a smart industrial virtual assistant (e.g., a chatbot, etc.) to improve operation and/or maintenance of assets in a portfolio of assets is provided. In various embodiments, the dashboard visualization provides visualizations configured for mobile devices and/or remote monitoring of the portfolio of assets. In various embodiments, conversational artificial intelligence is provided over an enterprise performance management application to build the dashboard visualization of portfolio operations for the portfolio of assets. In various embodiments, a natural language query is provided to build the dashboard visualization and/or real-time asset analytics related to the portfolio of assets. In various embodiments, multiple datastores are abstracted to facilitate generation of the dashboard visualization and/or real-time asset analytics related to the portfolio of assets. In various embodiments, multiple models are integrated and/or a natural language query is employed to build the dashboard visualization related to data associated with the multiple models. In various embodiments, the dashboard visualization provides visibility to an end-user across multiple layers of an enterprise (e.g., multiple layers with respect to the portfolio of assets, multiple layers of a warehouse process, multiple layers of an industrial process, etc.). In various embodiments, the dashboard visualization provides real-time asset analytics associated with sensors (e.g., vibration, power, etc.), control devices (e.g., key performance indicators (KPIs), equipment states, etc.), labor management (e.g., allocation, utilization, quality, etc.), warehouse execution (e.g., orders, routing, etc.), inventory management (e.g., location, quantity, slotting, etc.), and/or one or more other layers of an enterprise. In various embodiments, the dashboard visualization provides a high-level view of respective layers of an enterprise to facilitate enterprise performance management.

In various embodiments, the dashboard visualization facilitates alert and/or case management related to the portfolio of assets. For example, in various embodiments, the dashboard visualization provides a consolidated view of alerts from analytical products and/or directly from on-site systems that are combined into rich service cases. In various embodiments, the dashboard visualization facilitates triage and control. For example, in various embodiments, the dashboard visualization provides real-time data and/or historical trends related to assets. In various embodiments, features, attributes and/or relationships associated with the real-time data and/or historical trends are determined based on one or more artificial intelligence systems to, for example, trouble-shoot equipment faults, control equipment, and/or change set-points to resolve issues within the dashboard visualization.

In various embodiments, the dashboard visualization facilitates display of graphics and/or other visualizations related to the portfolio of assets. For example, in various embodiments, the dashboard visualization provides dynamically generated graphics that show configuration of, relationships between, and/or location of assets in the portfolio of assets to, for example, enable knowledge associated with remote facilities, aiding of fault diagnosis, and/or performing actions related to issues. In various embodiments, the dashboard visualization facilitates operations and/or scheduling associated with the portfolio of assets. For example, in various embodiments, the dashboard visualization facilitate temporary or long-term changes to operational modes of assets can be made through scheduling changes and/or manual switching to allow for events, seasonal changes, maintenance periods and/or other changes to asset use or operations.

In various embodiments, the dashboard visualization presents alerts from different sources and/or different system types into a single alert screen to provide a prioritized view of issues related to a portfolio of assets. According to various embodiments, the alerts include alarms from on-premises BMS, security, fire and other systems. Additionally or alternatively, according to various embodiments, the alerts include alerts from analytics and/or rule-based cloud-located systems with respect to current states and/or historical states of assets. Additionally or alternatively, according to various embodiments, the alerts include alerts from systems monitoring an asset environment and/or health and safety conditions associated with assets. Additionally or alternatively, according to various embodiments, the alerts include alerts from cyber security systems. Additionally or alternatively, according to various embodiments, the alerts include alerts from systems monitoring of the health of assets. Additionally or alternatively, according to various embodiments, the alerts include manually entered alerts that may arise due to calls from building occupants, staff, technicians, etc. In various embodiments, the alerts are logically grouped and/or presented to an operator via the dashboard visualization. In various embodiments, the alerts are logically grouped based on location (e.g., geographic areas or buildings) and/or related assets. In various embodiments, the alerts are presented via the dashboard visualization such that the highest priority issues are at the top of the list of alerts. In various embodiments, prioritization of the alerts is determined based on type of asset, type of facility, use and size of area affected by the issues, number of assets, number of issues, types assigned priority of individual alerts, and/or other features associated with the assets. In various embodiments, machine learning is employed to logically grouped and/or present the alerts. In various embodiments, machine learning is employed to identify alerts that optimally reflect use by an operator of the dashboard visualization.

In various embodiments, an extensible object model is employed to provide automated display of real-time properties and trends related to service cases into tabular and graphical displays. Additionally or alternatively, in various embodiments, an extensible object model is employed to provide automated generation and display of equipment schematic diagrams and configurations using standard or modular diagrams populated by model data. Additionally or alternatively, in various embodiments, an extensible object model is employed to create a graph model view of relationships between assets in the portfolio of assets (e.g., between equipment and/or other assets in the facilities, between building and physical spaces within buildings, etc.). Additionally or alternatively, in various embodiments, an extensible object model is employed to determine relationships between models such that nodes in the graph visually indicates whether the portfolio of assets is associated with one or more alarms related to the nodes. Additionally or alternatively, in various embodiments, an extensible object model is employed to provide information notifications via the nodes with asset data and/or links to other information.

In various embodiments, the dashboard visualization is provided to drive and/or provide opportunity at an asset level, a plant level, a site level, and/or an enterprise level based on metrics such as metrics related to safety, risk, energy/utility cost, overall equipment effectiveness (OEE), performance indicators, etc. In various embodiments, metric monitoring for one or more assets is customizable. For example, in one or more embodiments, metric monitoring for one or more assets is configurable for different reporting intervals of time (e.g., daily metric monitoring (1-24hr), monthly metric monitoring (first day of month to last day of month), yearly metric monitoring first month to last month of a year), etc.). In another example, in one or more embodiments, a start of a reporting period for metric monitoring and end of a reporting period for metric monitoring is configurable (e.g., metric monitoring starting at 7am and ending at 3pm, metric monitoring starting at the first day of the month and ending at the tenth day of the month, metric monitoring starting in April and ending in December, etc.).

In one or more embodiments, contextual rollup of industrial metrics to facilitate asset performance management is additionally or alternatively provided. In various embodiments, rollup of data related to a model (e.g., by rolling data from assets) is provided to drive and/or provide opportunity at an asset level, a plant level, a site level, and/or an enterprise level based on metrics such as metrics related to safety, risk, energy/utility cost, OEE, performance indicators, etc. In various embodiments, a contribution model is provided for controllable analysis to drive one or more actions in order to provide economic impacts/savings. For example, in order to improve a specific target metric for one or more assets, the contribution model provides one or more insights with respect to controllable variables contribution to loss in order to facilitate one or more with respect to one or more changes associated with the one or more assets (e.g., such as main steam temperature deviation from an expected value provided by a digital twin model cost). In various embodiments, the one or more insights are provided to the user via a dashboard visualization. In various embodiments, a lightweight design for data aggregation, data storage, and/or data rollup is provided to provide one or more metrics across an enterprise. In various embodiments, one or more overlapping and/or non-overlapping metrics are defined to facilitate evaluation of data associated with one or more assets.

In various embodiments, a hierarchy for role-based metrics aggregation and/or reporting is provided. In various embodiments, the hierarchy is mapped to role to aggregate relevant metrics for one or more underlying assets. For example, in one or more embodiments, asset availability for a maintenance engineer is provided based on rotating asset hierarchy and/or instrument asset hierarchy. In various embodiments, a metrics evaluator is integrated with streaming data from one or more assets to report one or more metrics associated with the one or more assets. In one or more embodiments, the streaming data is aggregated and/or rolled over (e.g., moved) between different data structures and/or different locations within a data structure. In various embodiments, a dynamic cache that aggregates the data is configured as a cascaded waterfall stack to roll over data using a chain of responsibility flow pattern starting from an hourly interval of time to a daily interval of time to a monthly interval of time. In various embodiments, the dynamic cache is additionally or alternatively configured for rollup of data via a hierarchy of assets such as plant level, asset level, site level, area level, etc. In various embodiments, a dynamic waterfall cache provides improved cost and/or performance. In various embodiments, data aggregation and/or data rollup is provided in real-time (e.g., hour to day, via daily metrics, etc.). In various embodiments, the dynamic cache is a time series database and/or a time series transaction store for metrics. In various embodiments, performance for data storage is improved via dynamic caching. In various embodiments, what-if and/or offline recalculation for sensitivity analysis with respect to the dynamic cache is provided. In one or more embodiments, one or more portions of a dynamic cache is cloned and/or employed for rerun of one or more calculations.

In various embodiments, a dashboard visualization across various user identities is provided via a templated dashboard model using, for example, an extensible object model. In various embodiments, a dashboard visualization for a particular user identity (e.g., a maintenance is reported at various hierarchy levels such as an enterprise level, a site level, a plant level, a unit level (e.g., an asset level), etc. In various embodiments, metrics associated with a first asset hierarchy level (e.g., an enterprise level) includes metrics or goals (e.g., OEE, etc.). In various embodiments, metrics associated with a second asset hierarchy level (e.g., a site level) includes metrics that influence a target goal (e.g., availability, energy, performance, quality). In various embodiments, metrics associated with a third asset hierarchy level (e.g., a plant level) includes identification of undesirable actor assets that influences targeted goal OEE. In various embodiments, metrics associated with a fourth asset hierarchy level (e.g., an asset level) includes events or exception that are related to a target goal.

In various embodiments, a dashboard visualization is modified based on context (e.g., a dashboard is changed to energy context and displays a same level of details based on modelling of assets and/or metrics via an extensible object model). In various embodiments, a configured model is employed to present relevant metrics based on user role, user context of invoking the dashboard, and/or hierarchy mapped for a metrics model. In various embodiments, a metrics model provides a KPI summary data set related to a hierarchy of assets and/or one or more schedules (e.g., one or more intervals of time) to aggregate and/or rollup storage of data. In various embodiments, a metrics model provides rollup of data to calculate one or more targets and/or to identify opportunity (e.g., actual vs limit & target) at asset level, plant level, site level, and/or enterprise level based on metrics such as safety risk, energy/utility cost, OEE by rolling data from assets. In various embodiments, an application programming interface is employed to integrate different visualization tools and/or different reporting tools (e.g., via the dashboard visualization). In one or more embodiments, a user-interactive graphical user interface is generated. For instance, in one or more embodiments, the graphical user interface renders a visual representation of the dashboard visualization. In one or more embodiments, one or more notifications for user devices are generated based on metrics associated with one or more assets at different levels in a hierarchy of assets.

In various embodiments, an application programming interface is employed to integrate different visualization tools and/or different reporting tools (e.g., via the dashboard visualization). In one or more embodiments, a user-interactive graphical user interface is generated. For instance, in one or more embodiments, the graphical user interface renders a visual representation of the dashboard visualization. In one or more embodiments, one or more notifications for user devices are generated based on metrics associated with one or more assets of the portfolio of assets.

In one or more embodiments, the dashboard visualization allows a user to see how one or more assets are performing against one or more metrics (e.g., one or more KPIs). In one or more embodiments, the dashboard visualization allows a user to identify what next steps with respect to assets will provide an optimal return on investment for the action (e.g., repair device #1 vs. device #2) depending on the metrics (e.g., fixing device #1 will save X% energy, whereas repairing device #2 will save $Y). In one or more embodiments, the dashboard visualization allows a user to view individual assets through the dashboard (e.g., boiler #1 is operating at 90% efficiency, or will fail in X weeks, Y days, Z hours unless action is taken; and repairing the boiler #1 within a first interval of time will save $X, whereas repairing within a second interval of time will save $Y). In one or more embodiments, the dashboard visualization allows a user to change individual settings for an asset remotely. In one or more embodiments, the dashboard visualization notifies a user that changing settings for an asset from X to Y will save X% energy or $Y.

As such, by employing one or more techniques disclosed herein, asset performance is optimized. Moreover, by employing one or more techniques disclosed herein, improved insights for opportunity and/or performance insights for assets is provided to a user via improved visual indicators associated with a graphical user interface. For instance, by employing one or more techniques disclosed herein, additional and/or improved asset insights as compared to capabilities of conventional techniques can be achieved across a data set. Additionally, performance of a processing system associated with data analytics is improved by employing one or more techniques disclosed herein. For example, a number of computing resources, a number of a storage requirements, and/or number of errors associated with data analytics is reduced by employing one or more techniques disclosed herein.

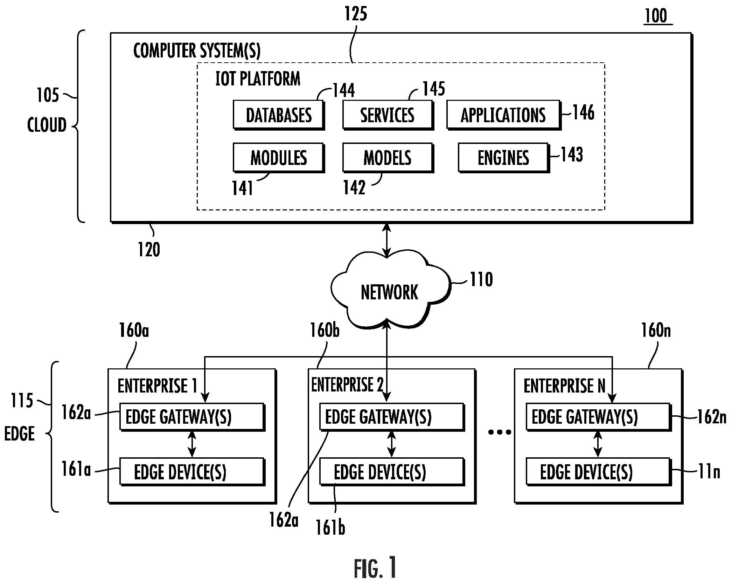

FIG. 1 illustrates an exemplary networked computing system environment 100, according to the present disclosure. As shown in FIG. 1, networked computing system environment 100 is organized into a plurality of layers including a cloud 105 (e.g., cloud layer 105), a network 110 (e.g., network layer 110), and an edge 115 (e.g., edge layer 115). As detailed further below, components of the edge 115 are in communication with components of the cloud 105 via network 110.

In various embodiments, network 110 is any suitable network or combination of networks and supports any appropriate protocol suitable for communication of data to and from components of the cloud 105 and between various other components in the networked computing system environment 100 (e.g., components of the edge 115). According to various embodiments, network 110 includes a public network (e.g., the Internet), a private network (e.g., a network within an organization), or a combination of public and/or private networks. According to various embodiments, network 110 is configured to provide communication between various components depicted in FIG. 1. According to various embodiments, network 110 comprises one or more networks that connect devices and/or components in the network layout to allow communication between the devices and/or components. For example, in one or more embodiments, the network 110 is implemented as the Internet, a wireless network, a wired network (e.g., Ethernet), a local area network (LAN), a Wide Area Network (WANs), Bluetooth, Near Field Communication (NFC), or any other type of network that provides communications between one or more components of the network layout. In some embodiments, network 110 is implemented using cellular networks, satellite, licensed radio, or a combination of cellular, satellite, licensed radio, and/or unlicensed radio networks.

Components of the cloud 105 include one or more computer systems 120 that form a so-called "Internet-of-Things" or "IoT" platform 125. It should be appreciated that "IoT platform" is an optional term describing a platform connecting any type of Internet-connected device, and should not be construed as limiting on the types of computing systems useable within IoT platform 125. In particular, in various embodiments, computer systems 120 includes any type or quantity of one or more processors and one or more data storage devices comprising memory for storing and executing applications or software modules of networked computing system environment 100. In one embodiment, the processors and data storage devices are embodied in server-class hardware, such as enterprise-level servers. For example, in an embodiment, the processors and data storage devices comprise any type or combination of application servers, communication servers, web servers, super-computing servers, database servers, file servers, mail servers, proxy servers, and/ virtual servers. Further, the one or more processors are configured to access the memory and execute processor-readable instructions, which when executed by the processors configures the processors to perform a plurality of functions of the networked computing system environment 100.

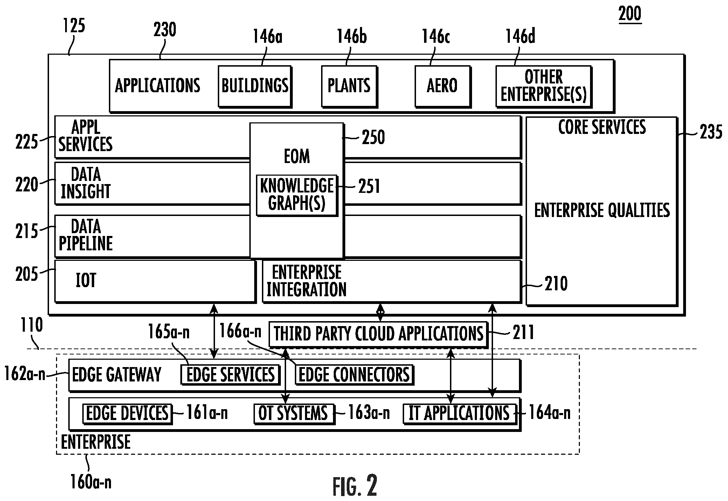

Computer systems 120 further include one or more software components of the IoT platform 125. For example, in one or more embodiments, the software components of computer systems 120 include one or more software modules to communicate with user devices and/or other computing devices through network 110. For example, in one or more embodiments, the software components include one or more modules 141, models 142, engines 143, databases 144, services 145, and/or applications 146, which may be stored in/by the computer systems 120 (e.g., stored on the memory), as detailed with respect to FIG. 2 below. According to various embodiments, the one or more processors are configured to utilize the one or more modules 141, models 142, engines 143, databases 144, services 145, and/or applications 146 when performing various methods described in this disclosure.

Accordingly, in one or more embodiments, computer systems 120 execute a cloud computing platform (e.g., IoT platform 125) with scalable resources for computation and/or data storage, and may run one or more applications on the cloud computing platform to perform various computer-implemented methods described in this disclosure. In some embodiments, some of the modules 141, models 142, engines 143, databases 144, services 145, and/or applications 146 are combined to form fewer modules, models, engines, databases, services, and/or applications. In some embodiments, some of the modules 141, models 142, engines 143, databases 144, services 145, and/or applications 146 are separated into separate, more numerous modules, models, engines, databases, services, and/or applications. In some embodiments, some of the modules 141, models 142, engines 143, databases 144, services 145, and/or applications 146 are removed while others are added.

The computer systems 120 are configured to receive data from other components (e.g., components of the edge 115) of networked computing system environment 100 via network 110. Computer systems 120 are further configured to utilize the received data to produce a result. According to various embodiments, information indicating the result is transmitted to users via user computing devices over network 110. In some embodiments, the computer systems 120 is a server system that provides one or more services including providing the information indicating the received data and/or the result(s) to the users. According to various embodiments, computer systems 120 are part of an entity which include any type of company, organization, or institution that implements one or more IoT services. In some examples, the entity is an IoT platform provider.

Components of the edge 115 include one or more enterprises 160a-160n each including one or more edge devices 161a-161n and one or more edge gateways 162a-162n. For example, a first enterprise 160a includes first edge devices 161a and first edge gateways 162a, a second enterprise 160b includes second edge devices 161b and second edge gateways 162b, and an nth enterprise 160n includes nth edge devices 161n and nth edge gateways 162n. As used herein, enterprises 160a-160n represent any type of entity, facility, or vehicle, such as, for example, companies, divisions, buildings, manufacturing plants, warehouses, real estate facilities, laboratories, aircraft, spacecraft, automobiles, ships, boats, military vehicles, oil and gas facilities, or any other type of entity, facility, and/or entity that includes any number of local devices.

According to various embodiments, the edge devices 161a-161n represent any of a variety of different types of devices that may be found within the enterprises 160a-160n. Edge devices 161a-161n are any type of device configured to access network 110, or be accessed by other devices through network 110, such as via an edge gateway 162a-162n. According to various embodiments, edge devices 161a-161n are "IoT devices" which include any type of network-connected (e.g., Internet-connected) device. For example, in one or more embodiments, the edge devices 161a-161n include assets, sensors, actuators, processors, computers, valves, pumps, ducts, vehicle components, cameras, displays, doors, windows, security components, boilers, chillers, pumps, HVAC components, factory equipment, and/or any other devices that are connected to the network 110 for collecting, sending, and/or receiving information. Each edge device 161a-161n includes, or is otherwise in communication with, one or more controllers for selectively controlling a respective edge device 161a-161n and/or for sending/receiving information between the edge devices 161a-161n and the cloud 105 via network 110. With reference to FIG. 2, in one or more embodiments, the edge 115 include operational technology (OT) systems 163a-163n and information technology (IT) applications 164a-164n of each enterprise 161a-161n. The OT systems 163a-163n include hardware and software for detecting and/or causing a change, through the direct monitoring and/or control of industrial equipment (e.g., edge devices 161a-161n), assets, processes, and/or events. The IT applications 164a-164n includes network, storage, and computing resources for the generation, management, storage, and delivery of data throughout and between organizations.

The edge gateways 162a-162n include devices for facilitating communication between the edge devices 161a-161n and the cloud 105 via network 110. For example, the edge gateways 162a-162n include one or more communication interfaces for communicating with the edge devices 161a-161n and for communicating with the cloud 105 via network 110. According to various embodiments, the communication interfaces of the edge gateways 162a-162n include one or more cellular radios, Bluetooth, WiFi, near-field communication radios, Ethernet, or other appropriate communication devices for transmitting and receiving information. According to various embodiments, multiple communication interfaces are included in each gateway 162a-162n for providing multiple forms of communication between the edge devices 161a-161n, the gateways 162a-162n, and the cloud 105 via network 110. For example, in one or more embodiments, communication are achieved with the edge devices 161a-161n and/or the network 110 through wireless communication (e.g., WiFi, radio communication, etc.) and/or a wired data connection (e.g., a universal serial bus, an onboard diagnostic system, etc.) or other communication modes, such as a local area network (LAN), wide area network (WAN) such as the Internet, a telecommunications network, a data network, or any other type of network.

According to various embodiments, the edge gateways 162a-162n also include a processor and memory for storing and executing program instructions to facilitate data processing. For example, in one or more embodiments, the edge gateways 162a-162n are configured to receive data from the edge devices 161a-161n and process the data prior to sending the data to the cloud 105. Accordingly, in one or more embodiments, the edge gateways 162a-162n include one or more software modules or components for providing data processing services and/or other services or methods of the present disclosure. With reference to FIG. 2, each edge gateway 162a-162n includes edge services 165a-165n and edge connectors 166a-166n. According to various embodiments, the edge services 165a-165n include hardware and software components for processing the data from the edge devices 161a-161n. According to various embodiments, the edge connectors 166a-166n include hardware and software components for facilitating communication between the edge gateway 162a-162n and the cloud 105 via network 110, as detailed above. In some cases, any of edge devices 161a-n, edge connectors 166a-n, and edge gateways 162a-n have their functionality combined, omitted, or separated into any combination of devices. In other words, an edge device and its connector and gateway need not necessarily be discrete devices.

FIG. 2 illustrates a schematic block diagram of framework 200 of the IoT platform 125, according to the present disclosure. The IoT platform 125 of the present disclosure is a platform for enterprise performance management that uses real-time accurate models and visual analytics to deliver intelligent actionable recommendations and/or analytics for sustained peak performance of the enterprise 160a-160n. The IoT platform 125 is an extensible platform that is portable for deployment in any cloud or data center environment for providing an enterprise-wide, top to bottom view, displaying the status of processes, assets, people, and safety. Further, the IoT platform 125 supports end-to-end capability to execute digital twins against process data and to translate the output into actionable insights, using the framework 200, detailed further below.

As shown in FIG. 2, the framework 200 of the IoT platform 125 comprises a number of layers including, for example, an IoT layer 205, an enterprise integration layer 210, a data pipeline layer 215, a data insight layer 220, an application services layer 225, and an applications layer 230. The IoT platform 125 also includes a core services layer 235 and an extensible object model (EOM) 250 comprising one or more knowledge graphs 251. The layers 205-235 further include various software components that together form each layer 205-235. For example, in one or more embodiments, each layer 205-235 includes one or more of the modules 141, models 142, engines 143, databases 144, services 145, applications 146, or combinations thereof. In some embodiments, the layers 205-235 are combined to form fewer layers. In some embodiments, some of the layers 205-235 are separated into separate, more numerous layers. In some embodiments, some of the layers 205-235 are removed while others may be added.

The IoT platform 125 is a model-driven architecture. Thus, the extensible object model 250 communicates with each layer 205-230 to contextualize site data of the enterprise 160a-160n using an extensible graph based object model (or "asset model"). In one or more embodiments, the extensible object model 250 is associated with knowledge graphs 251 where the equipment (e.g., edge devices 161a-161n) and processes of the enterprise 160a-160n are modeled. The knowledge graphs 251 of EOM 250 are configured to store the models in a central location. The knowledge graphs 251 define a collection of nodes and links that describe real-world connections that enable smart systems. As used herein, a knowledge graph 251: (i) describes real-world entities (e.g., edge devices 161a-161n) and their interrelations organized in a graphical interface; (ii) defines possible classes and relations of entities in a schema; (iii) enables interrelating arbitrary entities with each other; and (iv) covers various topical domains. In other words, the knowledge graphs 251 define large networks of entities (e.g., edge devices 161a-161n), semantic types of the entities, properties of the entities, and relationships between the entities. Thus, the knowledge graphs 251 describe a network of "things" that are relevant to a specific domain or to an enterprise or organization. Knowledge graphs 251 are not limited to abstract concepts and relations, but can also contain instances of objects, such as, for example, documents and datasets. In some embodiments, the knowledge graphs 251 include resource description framework (RDF) graphs. As used herein, a "RDF graph" is a graph data model that formally describes the semantics, or meaning, of information. The RDF graph also represents metadata (e.g., data that describes data). According to various embodiments, knowledge graphs 251 also include a semantic object model. The semantic object model is a subset of a knowledge graph 251 that defines semantics for the knowledge graph 251. For example, the semantic object model defines the schema for the knowledge graph 251.

As used herein, EOM 250 includes a collection of application programming interfaces (APIs) that enables seeded semantic object models to be extended. For example, the EOM 250 of the present disclosure enables a customer's knowledge graph 251 to be built subject to constraints expressed in the customer's semantic object model. Thus, the knowledge graphs 251 are generated by customers (e.g., enterprises or organizations) to create models of the edge devices 161a-161n of an enterprise 160a-160n, and the knowledge graphs 251 are input into the EOM 250 for visualizing the models (e.g., the nodes and links).

The models describe the assets (e.g., the nodes) of an enterprise (e.g., the edge devices 161a-161n) and describe the relationship of the assets with other components (e.g., the links). The models also describe the schema (e.g., describe what the data is), and therefore the models are self-validating. For example, in one or more embodiments, the model describes the type of sensors mounted on any given asset (e.g., edge device 161a-161n) and the type of data that is being sensed by each sensor. According to various embodiments, a KPI framework is used to bind properties of the assets in the extensible object model 250 to inputs of the KPI framework. Accordingly, the IoT platform 125 is an extensible, model-driven end-to-end stack including: two-way model sync and secure data exchange between the edge 115 and the cloud 105, metadata driven data processing (e.g., rules, calculations, and aggregations), and model driven visualizations and applications. As used herein, "extensible" refers to the ability to extend a data model to include new properties/columns/fields, new classes/tables, and new relations. Thus, the IoT platform 125 is extensible with regards to edge devices 161a-161n and the applications 146 that handle those devices 161a-161n. For example, when new edge devices 161a-161n are added to an enterprise 160a-160n system, the new devices 161a-161n will automatically appear in the IoT platform 125 so that the corresponding applications 146 understand and use the data from the new devices 161a-161n.

In some cases, asset templates are used to facilitate configuration of instances of edge devices 161a-161n in the model using common structures. An asset template defines the typical properties for the edge devices 161a-161n of a given enterprise 160a-160n for a certain type of device. For example, an asset template of a pump includes modeling the pump having inlet and outlet pressures, speed, flow, etc. The templates may also include hierarchical or derived types of edge devices 161a-161n to accommodate variations of a base type of device 161a-161n. For example, a reciprocating pump is a specialization of a base pump type and would include additional properties in the template. Instances of the edge device 161a-161n in the model are configured to match the actual, physical devices of the enterprise 160a-160n using the templates to define expected attributes of the device 161a-161n. Each attribute is configured either as a static value (e.g., capacity is 1000 BPH) or with a reference to a time series tag that provides the value. The knowledge graph 251 can automatically map the tag to the attribute based on naming conventions, parsing, and matching the tag and attribute descriptions and/or by comparing the behavior of the time series data with expected behavior. In one or more embodiments, each of the key attribute contributing to one or more metrics to drive a dashboard is marked with one or more metric tags such that a dashboard visualization is generated.

The modeling phase includes an onboarding process for syncing the models between the edge 115 and the cloud 105. For example, in one or more embodiments, the onboarding process includes a simple onboarding process, a complex onboarding process, and/or a standardized rollout process. The simple onboarding process includes the knowledge graph 251 receiving raw model data from the edge 115 and running context discovery algorithms to generate the model. The context discovery algorithms read the context of the edge naming conventions of the edge devices 161a-161n and determine what the naming conventions refer to. For example, in one or more embodiments, the knowledge graph 251 receives "TMP" during the modeling phase and determine that "TMP" relates to "temperature." The generated models are then published. The complex onboarding process includes the knowledge graph 251 receiving the raw model data, receiving point history data, and receiving site survey data. According to various embodiments, the knowledge graph 251 then uses these inputs to run the context discovery algorithms. According to various embodiments, the generated models are edited and then the models are published. The standardized rollout process includes manually defining standard models in the cloud 105 and pushing the models to the edge 115.

The IoT layer 205 includes one or more components for device management, data ingest, and/or command/control of the edge devices 161a-161n. The components of the IoT layer 205 enable data to be ingested into, or otherwise received at, the IoT platform 125 from a variety of sources. For example, in one or more embodiments, data is ingested from the edge devices 161a-161n through process historians or laboratory information management systems. The IoT layer 205 is in communication with the edge connectors 165a-165n installed on the edge gateways 162a-162n through network 110, and the edge connectors 165a-165n send the data securely to the IoT platform 205. In some embodiments, only authorized data is sent to the IoT platform 125, and the IoT platform 125 only accepts data from authorized edge gateways 162a-162n and/or edge devices 161a-161n. According to various embodiments, data is sent from the edge gateways 162a-162n to the IoT platform 125 via direct streaming and/or via batch delivery. Further, after any network or system outage, data transfer will resume once communication is re-established and any data missed during the outage will be backfilled from the source system or from a cache of the IoT platform 125. According to various embodiments, the IoT layer 205 also includes components for accessing time series, alarms and events, and transactional data via a variety of protocols.

The enterprise integration layer 210 includes one or more components for events/messaging, file upload, and/or REST/OData. The components of the enterprise integration layer 210 enable the IoT platform 125 to communicate with third party cloud applications 211, such as any application(s) operated by an enterprise in relation to its edge devices. For example, the enterprise integration layer 210 connects with enterprise databases, such as guest databases, customer databases, financial databases, patient databases, etc. The enterprise integration layer 210 provides a standard application programming interface (API) to third parties for accessing the IoT platform 125. The enterprise integration layer 210 also enables the IoT platform 125 to communicate with the OT systems 163a-163n and IT applications 164a-164n of the enterprise 160a-160n. Thus, the enterprise integration layer 210 enables the IoT platform 125 to receive data from the third-party applications 211 rather than, or in combination with, receiving the data from the edge devices 161a-161n directly.

The data pipeline layer 215 includes one or more components for data cleansing/enriching, data transformation, data calculations/aggregations, and/or API for data streams. Accordingly, in one or more embodiments, the data pipeline layer 215 pre-processes and/or performs initial analytics on the received data. The data pipeline layer 215 executes advanced data cleansing routines including, for example, data correction, mass balance reconciliation, data conditioning, component balancing and simulation to ensure the desired information is used as a basis for further processing. The data pipeline layer 215 also provides advanced and fast computation. For example, cleansed data is run through enterprise-specific digital twins. According to various embodiments, the enterprise-specific digital twins include a reliability advisor containing process models to determine the current operation and the fault models to trigger any early detection and determine an appropriate resolution. According to various embodiments, the digital twins also include an optimization advisor that integrates real-time economic data with real-time process data, selects the right feed for a process, and determines optimal process conditions and product yields.

According to various embodiments, the data pipeline layer 215 employs models and templates to define calculations and analytics. Additionally or alternatively, according to various embodiments, the data pipeline layer 215 employs models and templates to define how the calculations and analytics relate to the assets (e.g., the edge devices 161a-161n). For example, in an embodiment, a pump template defines pump efficiency calculations such that every time a pump is configured, the standard efficiency calculation is automatically executed for the pump. The calculation model defines the various types of calculations, the type of engine that should run the calculations, the input and output parameters, the preprocessing requirement and prerequisites, the schedule, etc. According to various embodiments, the actual calculation or analytic logic is defined in the template or it may be referenced. Thus, according to various embodiments, the calculation model is employed to describe and control the execution of a variety of different process models. According to various embodiments, calculation templates are linked with the asset templates such that when an asset (e.g., edge device 161a-161n) instance is created, any associated calculation instances are also created with their input and output parameters linked to the appropriate attributes of the asset (e.g., edge device 161a-161n).

According to various embodiments, the IoT platform 125 supports a variety of different analytics models including, for example, first principles models, empirical models, engineered models, user-defined models, machine learning models, built-in functions, and/or any other types of analytics models. Fault models and predictive maintenance models will now be described by way of example, but any type of models may be applicable.

Fault models are used to compare current and predicted enterprise 160a-160n performance to identify issues or opportunities, and the potential causes or drivers of the issues or opportunities. The IoT platform 125 includes rich hierarchical symptom-fault models to identify abnormal conditions and their potential consequences. For example, in one or more embodiments, the IoT platform 125 drill downs from a high-level condition to understand the contributing factors, as well as determining the potential impact a lower level condition may have. There may be multiple fault models for a given enterprise 160a-160n looking at different aspects such as process, equipment, control, and/or operations. According to various embodiments, each fault model identifies issues and opportunities in their domain, and can also look at the same core problem from a different perspective. According to various embodiments, an overall fault model is layered on top to synthesize the different perspectives from each fault model into an overall assessment of the situation and point to the true root cause.

According to various embodiments, when a fault or opportunity is identified, the IoT platform 125 provides recommendations about an optimal corrective action to take. Initially, the recommendations are based on expert knowledge that has been pre-programmed into the system by process and equipment experts. A recommendation services module presents this information in a consistent way regardless of source, and supports workflows to track, close out, and document the recommendation follow-up. According to various embodiments, the recommendation follow-up is employed to improve the overall knowledge of the system over time as existing recommendations are validated (or not) or new cause and effect relationships are learned by users and/or analytics.

According to various embodiments, the models are used to accurately predict what will occur before it occurs and interpret the status of the installed base. Thus, the IoT platform 125 enables operators to quickly initiate maintenance measures when irregularities occur. According to various embodiments, the digital twin architecture of the IoT platform 125 employs a variety of modeling techniques. According to various embodiments, the modeling techniques include, for example, rigorous models, fault detection and diagnostics (FDD), descriptive models, predictive maintenance, prescriptive maintenance, process optimization, and/or any other modeling technique.

According to various embodiments, the rigorous models are converted from process design simulation. In this manner, process design is integrated with feed conditions and production requirement. Process changes and technology improvement provide business opportunities that enable more effective maintenance schedule and deployment of resources in the context of production needs. The fault detection and diagnostics include generalized rule sets that are specified based on industry experience and domain knowledge and can be easily incorporated and used working together with equipment models. According to various embodiments, the descriptive models identifies a problem and the predictive models determines possible damage levels and maintenance options. According to various embodiments, the descriptive models include models for defining the operating windows for the edge devices 161a-161n.

Predictive maintenance includes predictive analytics models developed based on rigorous models and statistic models, such as, for example, principal component analysis (PCA) and partial least square (PLS). According to various embodiments, machine learning methods are applied to train models for fault prediction. According to various embodiments, predictive maintenance leverages FDD-based algorithms to continuously monitor individual control and equipment performance. Predictive modeling is then applied to a selected condition indicator that deteriorates in time. Prescriptive maintenance includes determining an optimal maintenance option and when it should be performed based on actual conditions rather than time-based maintenance schedule. According to various embodiments, prescriptive analysis selects the right solution based on the company's capital, operational, and/or other requirements. Process optimization is determining optimal conditions via adjusting set-points and schedules. The optimized set-points and schedules can be communicated directly to the underlying controllers, which enables automated closing of the loop from analytics to control.

The data insight layer 220 includes one or more components for time series databases (TDSB), relational/document databases, data lakes, blob, files, images, and videos, and/or an API for data query. According to various embodiments, when raw data is received at the IoT platform 125, the raw data is stored as time series tags or events in warm storage (e.g., in a TSDB) to support interactive queries and to cold storage for archive purposes. According to various embodiments, data is sent to the data lakes for offline analytics development. According to various embodiments, the data pipeline layer 215 accesses the data stored in the databases of the data insight layer 220 to perform analytics, as detailed above.

The application services layer 225 includes one or more components for rules engines, workflow/notifications, KPI framework, insights (e.g., actionable insights), decisions, recommendations, machine learning, and/or an API for application services. The application services layer 225 enables building of applications 146a-d. The applications layer 230 includes one or more applications 146a-d of the IoT platform 125. For example, according to various embodiments, the applications 146a-d includes a buildings application 146a, a plants application 146b, an aero application 146c, and other enterprise applications 146d. According to various embodiments, the applications 146 includes general applications 146 for portfolio management, asset management, autonomous control, and/or any other custom applications. According to various embodiments, portfolio management includes the KPI framework and a flexible user interface (UI) builder. According to various embodiments, asset management includes asset performance and asset health. According to various embodiments, autonomous control includes energy optimization and/or predictive maintenance. As detailed above, according to various embodiments, the general applications 146 is extensible such that each application 146 is configurable for the different types of enterprises 160a-160n (e.g., buildings application 146a, plants application 146b, aero application 146c, and other enterprise applications 146d).

The applications layer 230 also enables visualization of performance of the enterprise 160a-160n. For example, dashboards provide a high-level overview with drill downs to support deeper investigations. Recommendation summaries give users prioritized actions to address current or potential issues and opportunities. Data analysis tools support ad hoc data exploration to assist in troubleshooting and process improvement.

The core services layer 235 includes one or more services of the IoT platform 125. According to various embodiments, the core services 235 include data visualization, data analytics tools, security, scaling, and monitoring. According to various embodiments, the core services 235 also include services for tenant provisioning, single login/common portal, self-service admin, UI library/UI tiles, identity/access/entitlements, logging/monitoring, usage metering, API gateway/dev portal, and the IoT platform 125 streams.

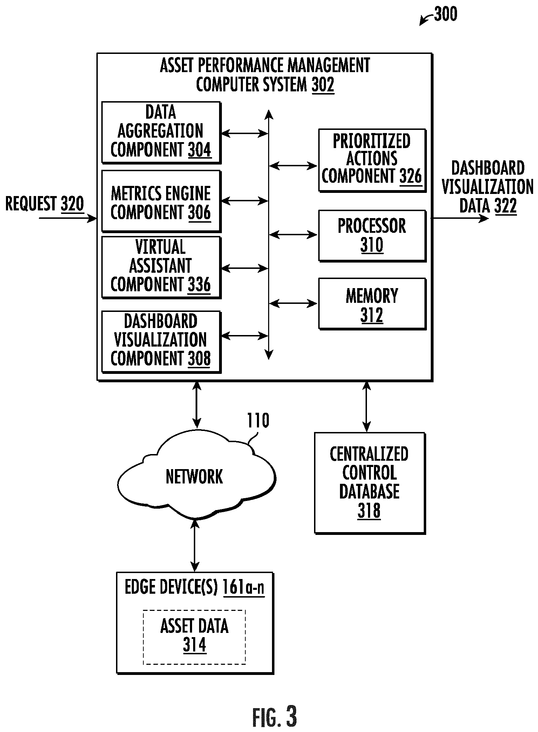

FIG. 3 illustrates a system 300 that provides an exemplary environment according to one or more described features of one or more embodiments of the disclosure. According to an embodiment, the system 300 includes an asset performance management computer system 302 to facilitate a practical application of data analytics technology and/or digital transformation technology to provide optimization related to enterprise performance management. In one or more embodiments, the asset performance management computer system 302 facilitates a practical application of metrics modeling and/or dynamic cache storage related to dashboard technology to provide optimization related to enterprise performance management. In one or more embodiments, the asset performance management computer system 302 stores and/or analyzes data that is aggregated from one or more assets and/or one or more data sources associated with an enterprise system (e.g., a building system, an industrial system or another type of enterprise system). In one or more embodiments, the asset performance management computer system 302 facilitates a practical application of a virtual assistant related to dashboard technology to provide optimization related to enterprise performance management. In one or more embodiments, the asset performance management computer system 302 employs artificial intelligence to provide the practical application of a virtual assistant related to dashboard technology to provide optimization related to enterprise performance management.

In an embodiment, the asset performance management computer system 302 is a server system (e.g., a server device) that facilitates a data analytics platform between one or more computing devices, one or more data sources, and/or one or more assets. In one or more embodiments, the asset performance management computer system 302 is a device with one or more processors and a memory. In one or more embodiments, the asset performance management computer system 302 is a computer system from the computer systems 120. For example, in one or more embodiments, the asset performance management computer system 302 is implemented via the cloud 105. The asset performance management computer system 302 is also related to one or more technologies, such as, for example, enterprise technologies, connected building technologies, industrial technologies, Internet of Things (IoT) technologies, data analytics technologies, digital transformation technologies, cloud computing technologies, cloud database technologies, server technologies, network technologies, private enterprise network technologies, wireless communication technologies, machine learning technologies, artificial intelligence technologies, digital processing technologies, electronic device technologies, computer technologies, supply chain analytics technologies, aircraft technologies, industrial technologies, cybersecurity technologies, navigation technologies, asset visualization technologies, oil and gas technologies, petrochemical technologies, refinery technologies, process plant technologies, procurement technologies, and/or one or more other technologies.

Moreover, the asset performance management computer system 302 provides an improvement to one or more technologies such as enterprise technologies, connected building technologies, industrial technologies, IoT technologies, data analytics technologies, digital transformation technologies, cloud computing technologies, cloud database technologies, server technologies, network technologies, private enterprise network technologies, wireless communication technologies, machine learning technologies, artificial intelligence technologies, digital processing technologies, electronic device technologies, computer technologies, supply chain analytics technologies, aircraft technologies, industrial technologies, cybersecurity technologies, navigation technologies, asset visualization technologies, oil and gas technologies, petrochemical technologies, refinery technologies, process plant technologies, procurement technologies, and/or one or more other technologies. In an implementation, the asset performance management computer system 302 improves performance of a computing device. For example, in one or more embodiments, the asset performance management computer system 302 improves processing efficiency of a computing device (e.g., a server), reduces power consumption of a computing device (e.g., a server), improves quality of data provided by a computing device (e.g., a server), etc.

The asset performance management computer system 302 includes a data aggregation component 304, a metrics engine component 306, a prioritized actions component 326, a virtual assistant component 336, and/or a dashboard visualization component 308. Additionally, in one or more embodiments, the asset performance management computer system 302 includes a processor 310 and/or a memory 312. In certain embodiments, one or more aspects of the asset performance management computer system 302 (and/or other systems, apparatuses and/or processes disclosed herein) constitute executable instructions embodied within a computer-readable storage medium (e.g., the memory 312). For instance, in an embodiment, the memory 312 stores computer executable component and/or executable instructions (e.g., program instructions). Furthermore, the processor 310 facilitates execution of the computer executable components and/or the executable instructions (e.g., the program instructions). In an example embodiment, the processor 310 is configured to execute instructions stored in the memory 312 or otherwise accessible to the processor 310.

The processor 310 is a hardware entity (e.g., physically embodied in circuitry) capable of performing operations according to one or more embodiments of the disclosure. Alternatively, in an embodiment where the processor 310 is embodied as an executor of software instructions, the software instructions configure the processor 310 to perform one or more algorithms and/or operations described herein in response to the software instructions being executed. In an embodiment, the processor 310 is a single core processor, a multi-core processor, multiple processors internal to the asset performance management computer system 302, a remote processor (e.g., a processor implemented on a server), and/or a virtual machine. In certain embodiments, the processor 310 is in communication with the memory 312, the data aggregation component 304, the metrics engine component 306, the prioritized actions component 326, the virtual assistant component 336 and/or the dashboard visualization component 308 via a bus to, for example, facilitate transmission of data among the processor 310, the memory 312, the data aggregation component 304, the metrics engine component 306, the prioritized actions component 326, the virtual assistant component 336 and/or the dashboard visualization component 308. The processor 310 may be embodied in a number of different ways and, in certain embodiments, includes one or more processing devices configured to perform independently. Additionally or alternatively, in one or more embodiments, the processor 310 includes one or more processors configured in tandem via a bus to enable independent execution of instructions, pipelining of data, and/or multi-thread execution of instructions.

The memory 312 is non-transitory and includes, for example, one or more volatile memories and/or one or more non-volatile memories. In other words, in one or more embodiments, the memory 312 is an electronic storage device (e.g., a computer-readable storage medium). The memory 312 is configured to store information, data, content, one or more applications, one or more instructions, or the like, to enable the asset performance management computer system 302 to carry out various functions in accordance with one or more embodiments disclosed herein. As used herein in this disclosure, the term "component," "system," and the like, is a computer-related entity. For instance, "a component," "a system," and the like disclosed herein is either hardware, software, or a combination of hardware and software. As an example, a component is, but is not limited to, a process executed on a processor, a processor, circuitry, an executable component, a thread of instructions, a program, and/or a computer entity.

In an embodiment, the asset performance management computer system 302 (e.g., the data aggregation component 304 of the asset performance management computer system 302) receives asset data 314 from the edge devices 161a-161n. In one or more embodiments, the edge devices 161a-161n are associated with a portfolio of assets. For instance, in one or more embodiments, the edge devices 161a-161n include one or more assets in a portfolio of assets. The edge devices 161a-161n include, in one or more embodiments, one or more databases, one or more assets (e.g., one or more building assets, one or more industrial assets, etc.), one or more IoT devices (e.g., one or more industrial IoT devices), one or more connected building assets, one or more sensors, one or more actuators, one or more processors, one or more computers, one or more valves, one or more pumps (e.g., one or more centrifugal pumps, etc.), one or more motors, one or more compressors, one or more turbines, one or more ducts, one or more heaters, one or more chillers, one or more coolers, one or more boilers, one or more furnaces, one or more heat exchangers, one or more fans, one or more blowers, one or more conveyor belts, one or more vehicle components, one or more cameras, one or more displays, one or more security components, one or more HVAC components, industrial equipment, factory equipment, and/or one or more other devices that are connected to the network 110 for collecting, sending, and/or receiving information. In one or more embodiments, the edge device 161a-161n include, or is otherwise in communication with, one or more controllers for selectively controlling a respective edge device 161a-161n and/or for sending/receiving information between the edge devices 161a-161n and the asset performance management computer system 302 via the network 110. The asset data 314 includes, for example, industrial data, connected building data, sensor data, real-time data, historical data, event data, process data, location data, and/or other data associated with the edge devices 161a-161n.

In certain embodiments, at least one edge device from the edge devices 161a-161n incorporates encryption capabilities to facilitate encryption of one or more portions of the asset data 314. Additionally, in one or more embodiments, the asset performance management computer system 302 (e.g., the data aggregation component 304 of the asset performance management computer system 302) receives the asset data 314 via the network 110. In one or more embodiments, the network 110 is a Wi-Fi network, a Near Field Communications (NFC) network, a Worldwide Interoperability for Microwave Access (WiMAX) network, a personal area network (PAN), a short-range wireless network (e.g., a Bluetooth^{®} network), an infrared wireless (e.g., IrDA) network, an ultra-wideband (UWB) network, an induction wireless transmission network, and/or another type of network. In one or more embodiments, the edge devices 161a-161n are associated with an industrial environment (e.g., a plant, etc.). Additionally or alternatively, in one or more embodiments, the edge devices 161a-161n are associated with components of the edge 115 such as, for example, one or more enterprises 160a-160n.

In one or more embodiments, the data aggregation component 304 aggregates the asset data 314 from the edge devices 161a-161n. For instance, in one or more embodiments, the data aggregation component 304 aggregates the asset data 314 into a centralized control database 318 configured as a database structure. The centralized control database 318 is a cache memory (e.g., a dynamic cache) that dynamically stores the asset data 314 based on interval of time and/or asset hierarchy level. For instance, in one or more embodiments, the centralized control database 318 stores the asset data 314 for one or more intervals of time (e.g., 1 minute to 12 minutes, 1 hour to 24 hours, 1 day to 31 days, 1 month to 12 months, etc.) and/or for one or more asset hierarchy levels (e.g., asset level, asset zone, building level, building zone, plant level, plant zone, industrial site level, etc.). In a non-limiting embodiment, the centralized control database 318 stores the asset data 314 for a first interval of time (e.g., 1 hour to 24 hours minutes) for a first asset (e.g., a first asset hierarchy level), for a second interval of time (e.g., 1 day to 31 days) for the first asset, and for a third interval of time (e.g., 1 month to 12 months) for the first asset.

In an example embodiment, the centralized control database 318 stores the asset data 314 for the first interval of time (e.g., 1 hour to 24 hours minutes) for all assets in a connected building (e.g., a second asset hierarchy level), for the second interval of time (e.g., 1 day to 31 days) for all the assets in the connected building, and for the third interval of time (e.g., 1 month to 12 months) for the all the assets in the connected building. In the example embodiment, the centralized control database 318 also stores the asset data 314 for the first interval of time (e.g., 1 hour to 24 hours minutes) for all connected buildings within a particular geographic region (e.g., a third asset hierarchy level), for the second interval of time (e.g., 1 day to 31 days) for all connected buildings within the particular geographic region, and for the third interval of time (e.g., 1 month to 12 months) for all connected buildings within the particular geographic region.

In another example embodiment, the centralized control database 318 stores the asset data 314 for the first interval of time (e.g., 1 hour to 24 hours minutes) for all assets in a plant (e.g., a second asset hierarchy level), for the second interval of time (e.g., 1 day to 31 days) for all the assets in the plant, and for the third interval of time (e.g., 1 month to 12 months) for the all the assets in the plant. In the example embodiment, the centralized control database 318 also stores the asset data 314 for the first interval of time (e.g., 1 hour to 24 hours minutes) for all plants at an industrial site (e.g., a third asset hierarchy level), for the second interval of time (e.g., 1 day to 31 days) for all plants at the industrial site, and for the third interval of time (e.g., 1 month to 12 months) for all plants at the industrial site.

In one or more embodiments, the data aggregation component 304 repeatedly updates data of the centralized control database 318 based on the asset data 314 provided by the edge devices 161a-161n during the one or more intervals of time associated with the centralized control database 318. For instance, in one or more embodiments, the data aggregation component 304 stores new data and/or modified data associated with the asset data 314. In one or more embodiments, the data aggregation component 304 repeatedly scans the edge devices 161a-161n to determine new data for storage in the centralized control database 318. In one or more embodiments, the data aggregation component 304 formats one or more portions of the asset data 314. For instance, in one or more embodiments, the data aggregation component 304 provides a formatted version of the asset data 314 to the centralized control database 318. In an embodiment, the formatted version of the asset data 314 is formatted with one or more defined formats associated with the one or more intervals of time and/or the one or more asset hierarchy levels. A defined format is, for example, a structure for data fields of the centralized control database 318. In various embodiments, the formatted version of the asset data 314 is stored in the centralized control database 318.

In one or more embodiments, the data aggregation component 304 identifies and/or groups data types associated with the asset data 314 based on the one or more intervals of time (e.g., one or more reporting intervals of time) and/or the one or more asset hierarchy levels. In one or more embodiments, the data aggregation component 304 employs batching, concatenation of the asset data 314, identification of data types, merging of the asset data 314, grouping of the asset data 314, reading of the asset data 314 and/or writing of the asset data 314 to facilitate storage of the asset data 314 within the centralized control database 318. In one or more embodiments, the data aggregation component 304 groups data from the asset data 314 based on corresponding features and/or attributes of the data. In one or more embodiments, the data aggregation component 304 groups data from the asset data 314 based on corresponding identifiers (e.g., a matching asset hierarchy level, a matching asset, a matching connected building, etc.) for the asset data 314. In one or more embodiments, the data aggregation component 304 employs one or more locality-sensitive hashing techniques to group data from the asset data 314 based on similarity scores and/or calculated distances between different data in the asset data 314.

In one or more embodiments, the data aggregation component 304 organizes the formatted version of the asset data 314 based on a time series mapping of attributes for the asset data 314. For instance, in one or more embodiments, the data aggregation component 304 employs a hierarchical data format technique to organize the formatted version of the asset data 314 in the centralized control database 318. In one or more embodiments, the centralized control database 318 dynamically stores data (e.g., one or more portions of the asset data 314) based on type of data presented via a dashboard visualization. In one or more embodiments, data (e.g., one or more portions of the asset data 314) aggregated from the edge devices 161a-161n is converted into one or more metrics (e.g., a KPI metric, a duty KPI, a duty target KPI) prior to being stored in the centralized control database 318. In one or more embodiments, a metric (e.g. a KP metrics) consists of aspect data indicative of an aspect employed in a model to map an attribute to the metric (e.g., an operating power asset type attribute is mapped to a duty aspect, etc.), aggregation data indicative of information related to aggregation across time, rollup data indicative of an aggregate metric of an asset across an asset at one level as well as across a hierarchy asset, low limit data indicative of a low-limit constant derived from a digital twin model in real-time, high limit data indicative of a high-limit constant derived from a digital twin model in real-time, target data indicative of a target constant derived from a digital twin model in real-time, custom calculation data indicative of information related to custom calculations using aggregate data across time or asset, and/or other data related to the metric.

In one or more embodiments, the asset performance management computer system 302 (e.g., the prioritized actions component 326 of the asset performance management computer system 302) receives a request 320. In an embodiment, the request 320 is a request to generate a dashboard visualization associated with a portfolio of assets. For instance, in one or more embodiments, the request 320 is a request to generate a dashboard visualization associated with the edge devices 161a-161n (e.g., the edge devices 161a-161n included in a portfolio of assets).

In one or more embodiments, the request 320 includes one or more asset descriptors that describe one or more assets in the portfolio of assets. For instance, in one or more embodiments, the request 320 includes one or more asset descriptors that describe the edge devices 161a-161n. An asset descriptor includes, for example, an asset name, an asset identifier, an asset level and/or other information associated with an asset. Additionally or alternatively, in one or more embodiments, the request 320 includes one or more user identifiers describing a user role for a user associated with access of a dashboard visualization. A user identifier includes, for example, an identifier for a user role name (e.g., a manager, an executive, a maintenance engineer, a process engineer, etc.). Additionally or alternatively, in one or more embodiments, the request 320 includes one or more metrics context identifiers describing context for the metrics. A metrics context identifier includes, for example, an identifier for a plant performance metric, an asset performance metric, a goal (e.g., review production related to one or more assets, etc.). Additionally or alternatively, in one or more embodiments, the request 320 includes one or more time interval identifier describing an interval of time for the metrics. A time interval identifier describes, for example, an interval of time for aggregated data such as hourly, daily, monthly, yearly etc. In one or more embodiments, a time interval identifier is a reporting time identifier describing an interval of time for the metrics.

In one or more embodiments, the request 320 is a voice input. In an embodiment, the voice input includes and/or initiates a request to generate a dashboard visualization associated with the portfolio of assets. For instance, in one or more embodiments, the voice input includes and/or initiates a request to generate a dashboard visualization associated with the edge devices 161a-161n (e.g., the edge devices 161a-161n included in a portfolio of assets). In one or more embodiments, the voice input comprises voice input data associated with the request to generate the dashboard visualization. For example, in one or more embodiments, the voice input data associated with the voice input comprises one or more asset insight requests associated with the portfolio of assets. In an embodiment, the one or more asset insight requests include a phrase provided via the voice input data. In another embodiment, the one or more asset insight requests include a question provided via the voice input data. For instance, in an embodiment, a user can speak a phrase or a question via a computing device to provide the voice input data associated with the voice input.

In one or more embodiments, the voice input includes one or more attributes (e.g., asset insight attributes, a metrics context identifier, etc.) associated with the one or more asset insight requests. For instance, in one or more embodiments, the voice input includes, for example, an identifier for a plant performance metric, an asset performance metric indicator, a goal indicator, etc. In an example, for a phrase "What was the production and quality of product A?", the word "production" can be a first attribute and the word "quality" can be a second attribute. In one or more embodiments, the voice input additionally or alternatively includes one or more asset descriptors that describe one or more assets in the portfolio of assets. For instance, in one or more embodiments, the voice input additionally or alternatively includes one or more asset descriptors that describe the edge devices 161a-161n. An asset descriptor includes, for example, an asset name, an asset identifier, an asset level and/or other information associated with an asset. Additionally or alternatively, in one or more embodiments, the voice input includes the one or more user identifiers describing a user role for a user associated with access of a dashboard visualization. Additionally or alternatively, in one or more embodiments, the voice input includes time data describing a time and/or an interval of time for the metrics and/or one or more asset insights.

In one or more embodiments, in response to the request 320, the metrics engine component 306 determines one or more metrics for an asset hierarchy associated with the portfolio of assets. For instance, in one or more embodiments, the metrics engine component 306 determines one or more metrics for an asset hierarchy associated with the edge devices 161a-161n in response to the request 320. In one or more embodiments, the metrics engine component 306 converts a portion of the asset data 314 into a metric for the portion of the asset data 314 and stores the metric for the portion of the asset data 314 into the centralized control database 318. In one or more embodiments, the metrics engine component 306 determines the one or more metrics for the asset hierarchy based on a model related to a time series mapping of attributes for the asset data 314. For example, in one or more embodiments, the metrics engine component 306 determines the one or more metrics for the asset hierarchy based on time series mapping of attributes for the asset data 314 with respect to the centralized control database 318.

In one or more embodiments, in response to the request 320, the prioritized actions component 326 determines prioritized actions for the portfolio of assets based on attributes for the aggregated data stored in the centralized control database 318. In an embodiment, the prioritized actions indicate which assets from the portfolio of assets should be serviced first. For example, in an embodiment, the prioritized actions indicate a first asset from the portfolio of assets that should be serviced first, a second asset from the portfolio of assets that should be serviced second, a third asset from the portfolio of assets that should be serviced third, etc. In one or more embodiments, the prioritized actions is a list of prioritized actions for the portfolio of assets based on impact to the portfolio. For instance, in one or more embodiments, the prioritized actions component 326 ranks, based on impact of respective prioritized actions with respect to the portfolio of assets, the prioritized actions to generate the list of the prioritized actions. In one or more embodiments, the prioritized actions component 326 groups the prioritized actions for the portfolio of assets based on relationships, features, and/or attributes between the aggregated data. In one or more embodiments, the prioritized actions component 326 determines the prioritized actions for the portfolio of assets based on a digital twin model associated with one or more assets from the portfolio of assets. Additionally or alternatively, in one or more embodiments, the prioritized actions component 326 determines the prioritized actions for the portfolio of assets based on a digital twin model associated with an operator identity associated with one or more assets from the portfolio of assets.

In one or more embodiments, the prioritized actions component 326 determines the list of the prioritized actions for the portfolio of assets based on metrics associated with the aggregated data. In certain embodiments, in response to the request 320, the prioritized actions component 326 determines one or more metrics for an asset hierarchy associated with the portfolio of assets. For instance, in one or more embodiments, the prioritized actions component 326 determines one or more metrics for an asset hierarchy associated with the edge devices 161a-161n in response to the request 320. In one or more embodiments, the prioritized actions component 326 converts a portion of the asset data 314 into a metric for the portion of the asset data 314 and stores the metric for the portion of the asset data 314 into the centralized control database 318. In one or more embodiments, the prioritized actions component 326 determines the one or more metrics for the asset hierarchy based on a model related to a time series mapping of attributes, features, and/or relationships for the asset data 314. For example, in one or more embodiments, the prioritized actions component 326 determines the one or more metrics for the asset hierarchy based on time series mapping of attributes, features, and/or relationships for the asset data 314 with respect to the centralized control database 318.

In one or more embodiments, in response to the request 320, the virtual assistant component 336 performs a natural language query with respect to the voice input data to obtain the one or more attributes associated with the one or more asset insight requests. For example, in one or more embodiments, the virtual assistant component 336 performs natural language processing with respect to the voice input data to obtain the one or more attributes associated with the one or more asset insight requests. In one or more embodiments, the virtual assistant component 336 converts the voice input data into a text string such that the text string associated with one or more textual elements. In one or more embodiments, the virtual assistant component 336 employs natural language processing (e.g., one or more natural language processing techniques) to determine textual data associated with the voice input data. In one or more embodiments, the virtual assistant component 336 queries a natural language database based on the voice input to determine the one or more attributes associated with the one or more asset insight requests. In one or more embodiments, the virtual assistant component 336 provides the one or more attributes, one or more tags, one or more labels, one or more classifications, and/or one or more other inferences with respect to the voice input data. For example, in one or more embodiments, the virtual assistant component 336 performs part-of-speech tagging with respect to the voice input data to obtain the one or more attributes, one or more tags, one or more labels, one or more classifications, and/or one or more other inferences with respect to the voice input data. In one or more embodiments, the virtual assistant component 336 performs one or more natural language processing queries with respect to the centralized control database 318 based on the one or more tags, the one or more labels, the one or more classifications, the one or more attributes, and/or the one or more other inferences with respect to the voice input data.

In one or more embodiments, the virtual assistant component 336 employs one or more machine learning techniques to facilitate determination of the one or more attributes, the one or more tags, the one or more labels, the one or more classifications, and/or the one or more other inferences with respect to the voice input data. For instance, in one or more embodiments, the virtual assistant component 336 performs a fuzzy matching technique with respect to the voice input data to determine the one or more attributes associated with the one or more asset insight requests. Additionally or alternatively, in one or more embodiments, the virtual assistant component 336 provides the voice input data to a neural network model configured for determining the one or more attributes associated with the one or more asset insight requests.

In one or more embodiments, the virtual assistant component 336 obtains aggregated data associated with the portfolio of assets based on the one or more attributes, the one or more labels, the one or more tags, the one or more classifications, /or the one or more other inferences with respect to the voice input data. Additionally, in one or more embodiments, the virtual assistant component 336 determines one or more asset insights for the portfolio of assets based on the aggregated data. In one or more embodiments, the virtual assistant component 336 groups, based on the one or more attributes, the aggregated data based on one or more relationships between assets from the portfolio of assets. In one or more embodiments, the virtual assistant component 336 applies the one or more attributes to at least a first model associated with a first type of asset insight and a second model associated with a second type of asset insight. In one or more embodiments, the virtual assistant component 336 aggregates first output data from the first model and second output data from the second model to determine at least a portion of the aggregated data. In one or more embodiments, in response to the voice input, the virtual assistant component 336 determines prioritized actions for the portfolio of assets based on the one or more attributes. In certain embodiments, in response to the voice input, the virtual assistant component 336 determines one or more metrics for an asset hierarchy associated with the portfolio of assets. For instance, in one or more embodiments, the virtual assistant component 336 determines one or more metrics for an asset hierarchy associated with the edge devices 161a-161n in response to the voice input.

In one or more embodiments, in response to the request 320, the dashboard visualization component 308 generates dashboard visualization data 322 associated with the one or more metrics for the asset hierarchy. For instance, in one or more embodiments, the dashboard visualization component 308 provides the dashboard visualization to an electronic interface of a computing device based on the dashboard visualization data 322. In one or more embodiments, the dashboard visualization data 322 and/or the dashboard visualization associated with the dashboard visualization data 322 includes the metrics for an asset hierarchy associated with the portfolio of assets. In one or more embodiments, in response to the request 320, the dashboard visualization component 308 associates aspects of the asset data 314 and/or metrics associated with the asset data 314 stored in the centralized control database 318 to provide the one or more metrics. For example, in one or more embodiment, in response to the voice input, the dashboard visualization component 308 associates aspects of the asset data 314 and/or metrics associated with the asset data 314 stored in the centralized control database 318 to provide the one or more metrics. In an aspect, the dashboard visualization component 308 determines the aspects of the asset data 314 and/or metrics associated with the asset data 314 stored in the centralized control database 318 based on the time series structure and/or the hierarchy structure of asset level of the centralized control database 318.

In one or more embodiments, the dashboard visualization data 322 and/or the dashboard visualization associated with the dashboard visualization data 322 includes the prioritized actions for the portfolio of assets. In one or more embodiments, the dashboard visualization data 322 and/or the dashboard visualization associated with the dashboard visualization data 322 includes the list of the prioritized actions. In one or more embodiments, the dashboard visualization data 322 and/or the dashboard visualization associated with the dashboard visualization data 322 includes the grouping of the prioritized actions for the portfolio of assets. In one or more embodiments, the dashboard visualization data 322 and/or the dashboard visualization associated with the dashboard visualization data 322 includes the metrics for an asset hierarchy associated with the portfolio of assets.

In one or more embodiments, in response to the voice input, the dashboard visualization component 308 generates the dashboard visualization data 322 associated with the one or more metrics for the asset hierarchy. In one or more embodiments, the dashboard visualization data 322 and/or the dashboard visualization associated with the dashboard visualization data 322 is configured based on the one or more attributes associated with the voice input. In one or more embodiments, the dashboard visualization data 322 and/or the dashboard visualization associated with the dashboard visualization data 322 includes a dashboard visualization element configured to present sensor data related to the portfolio of assets, a dashboard visualization element configured to present control data related to the portfolio of assets, a dashboard visualization element configured to present labor management data related to the portfolio of assets, a dashboard visualization element configured to present warehouse execution data related to the portfolio of assets, a dashboard visualization element configured to present inventory data related to the portfolio of assets, a dashboard visualization element configured to present warehouse management data related to the portfolio of assets, a dashboard visualization element configured to present machine control data related to the portfolio of assets, and/or one or more other dashboard visualization elements associated with the one or more asset insights.

Additionally, in one or more embodiments, the dashboard visualization component 308 performs one or more actions based on the metrics. For instance, in one or more embodiments, the dashboard visualization component 308 generates dashboard visualization data 322 associated with the one or more actions. In an embodiment, an action includes generating a user-interactive electronic interface that renders a visual representation of the one or more metrics. In another embodiment, an action from the one or more actions includes transmitting, to a computing device, one or more notifications associated with the one or more metrics. In another embodiment, an action from the one or more actions includes providing an optimal process condition for an asset associated with the asset data 314. For example, in another embodiment, an action from the one or more actions includes adjusting a set-point and/or a schedule for an asset associated with the asset data 314. In another embodiment, an action from the one or more actions includes one or more corrective action to take for an asset associated with the asset data 314. In another embodiment, an action from the one or more actions includes providing an optimal maintenance option for an asset associated with the asset data 314. In another embodiment, an action from the one or more actions includes an action associated with the application services layer 225, the applications layer 230, and/or the core services layer 235.

Additionally, in one or more embodiments, the dashboard visualization component 308 performs one or more actions based on the prioritized actions for the portfolio of assets. In an embodiment, an action includes generating a user-interactive electronic interface that renders a visual representation of the prioritized actions for the portfolio of assets and/or the one or more metrics. In another embodiment, an action from the one or more actions includes transmitting, to a computing device, one or more notifications associated with the prioritized actions for the portfolio of assets and/or the one or more metrics. In one or more embodiments, the dashboard visualization data 322 and/or the dashboard visualization associated with the dashboard visualization data 322 configures the dashboard visualization for remote control of one or more assets from the portfolio of assets based on the one or more attributes associated with the voice input. In one or more embodiments, the dashboard visualization data 322 and/or the dashboard visualization associated with the dashboard visualization data 322 configures a three-dimensional (3D) model of an asset from the portfolio of assets for the dashboard visualization based on the one or more attributes associated with the voice input (e.g., the voice input associated with the request 320). In one or more embodiments, the dashboard visualization data 322 and/or the dashboard visualization associated with the dashboard visualization data 322 filters one or more events associated with the asset related to the 3D model based on the one or more attributes associated with the voice input. In one or more embodiments, the dashboard visualization data 322 and/or the dashboard visualization associated with the dashboard visualization data 322 configures the dashboard visualization for real-time collaboration between two or more computing devices based on the one or more attributes associated with the voice input.

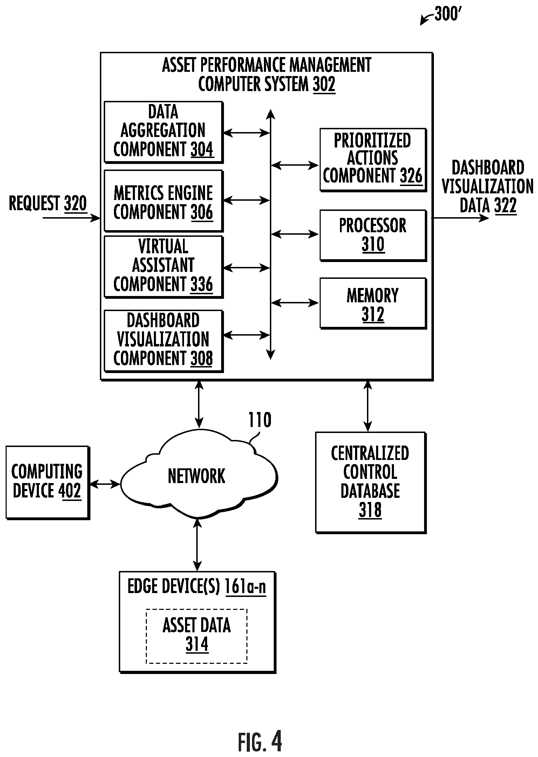

FIG. 4 illustrates a system 300' that provides an exemplary environment according to one or more described features of one or more embodiments of the disclosure. In an embodiment, the system 300' corresponds to an alternate embodiment of the system 300 shown in FIG. 3. According to an embodiment, the system 300' includes the asset performance management computer system 302, the edge devices 161a-161n, the centralized control database 318 and/or a computing device 402. In one or more embodiments, the asset performance management computer system 302 is in communication with the edge devices 161a-161n and/or the computing device 402 via the network 110. The computing device 402 is a mobile computing device, a smartphone, a tablet computer, a mobile computer, a desktop computer, a laptop computer, a workstation computer, a wearable device, a virtual reality device, an augmented reality device, or another type of computing device located remote from the asset performance management computer system 302. In one or more embodiments, the computing device 402 generates the request 320. For example, in one or more embodiments, the request 320 is generated via a visual display (e.g., a user interface) of the computing device 402. In one or more embodiments, the computing device 402 generates the voice input. For example, in one or more embodiments, the voice input (e.g., the voice input associated with the request 320) is generated via one or more microphones of the computing device 402 and/or one or more microphones communicatively coupled to the computing device 402.

In one or more embodiments, the dashboard visualization component 308 communicates the dashboard visualization data 322 to the computing device 402. For example, in one or more embodiments, the dashboard visualization data 322 includes one or more visual elements for a visual display (e.g., a user-interactive electronic interface) of the computing device 402 that renders a visual representation of the one or more metrics. In one or more embodiments, the dashboard visualization data 322 includes one or more visual elements for a visual display (e.g., a user-interactive electronic interface) of the computing device 402 that renders a visual representation of the prioritized actions for the portfolio of assets and/or the one or more metrics associated with the portfolio of assets. In certain embodiments, the visual display of the computing device 402 displays one or more graphical elements associated with the dashboard visualization data 322 (e.g., the one or more metrics). In another example, in one or more embodiments, the dashboard visualization data 322 includes one or notifications associated with the one or more metrics and/or the prioritized actions for the portfolio of assets. In one or more embodiments, the dashboard visualization data 322 allows a user associated with the computing device 402 to make decisions and/or perform one or more actions with respect to the prioritized actions for the portfolio of assets and/or the one or more metrics associated with the portfolio of assets. In one or more embodiments, the dashboard visualization data 322 allows a user associated with the computing device 402 to control the one or more portions of the assets of the portfolio of assets (e.g., one or more portions of the edge devices 161a-161n). In one or more embodiments, the dashboard visualization data 322 allows a user associated with the computing device 402 to generate one or more work orders for the one or more assets of the portfolio of assets.

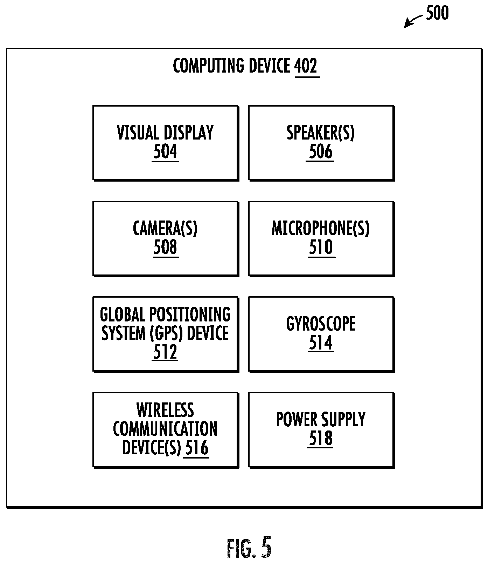

FIG. 5 illustrates a system 500 according to one or more embodiments of the disclosure. The system 500 includes the computing device 402. In one or more embodiments, the computing device 402 employs mobile computing, augmented reality, cloud-based computing, IoT technology and/or one or more other technologies to provide performance data, video, audio, text, graphs, charts, real-time data, graphical data, one or more communications, one or more messages, one or more notifications, and/or other media data associated with the one or more metrics. The computing device 402 includes mechanical components, electrical components, hardware components and/or software components to facilitate determining prioritized actions and/or one or more metrics associated with the asset data 314. In the embodiment shown in FIG. 5, the computing device 402 includes a visual display 504, one or more speakers 506, one or more cameras 508, one or more microphones 510, a global positioning system (GPS) device 512, a gyroscope 514, one or more wireless communication devices 516, and/or a power supply 518.

In an embodiment, the visual display 504 is a display that facilitates presentation and/or interaction with one or more portions of the dashboard visualization data 322. In one or more embodiments, the computing device 402 displays an electronic interface (e.g., a graphical user interface) associated with an asset performance management platform. In one or more embodiments, the visual display 504 is a visual display that renders one or more interactive media elements via a set of pixels. The one or more speakers 506 include one or more integrated speakers that project audio. The one or more cameras 508 include one or more cameras that employ autofocus and/or image stabilization for photo capture and/or real-time video. The one or more microphones 510 include one or more digital microphones that employ active noise cancellation to capture audio data. In one or more embodiments, at least a portion of the voice input is generated via the one or more microphones 510. The GPS device 512 provides a geographic location for the computing device 402. The gyroscope 514 provides an orientation for the computing device 402. The one or more wireless communication devices 516 includes one or more hardware components to provide wireless communication via one or more wireless networking technologies and/or one or more short-wavelength wireless technologies. The power supply 518 is, for example, a power supply and/or a rechargeable battery that provides power to the visual display 504, the one or more speakers 506, the one or more cameras 508, the one or more microphones 510, the GPS device 512, the gyroscope 514, and/or the one or more wireless communication devices 516. In certain embodiments, the dashboard visualization data 322 associated with the one or more metrics, the prioritized actions and/or the one or more asset insights related to the portfolio of assets is presented via the visual display 504 and/or the one or more speakers 506.

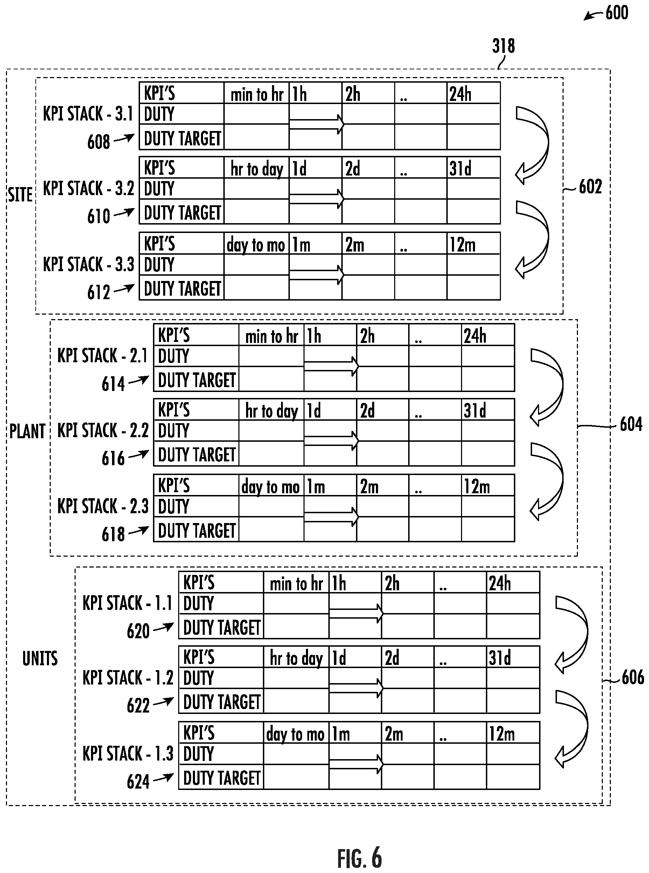

FIG. 6 illustrates a system 600 according to one or more described features of one or more embodiments of the disclosure. In an embodiment, the system 600 includes a non-limiting embodiment of the centralized control database 318. In one or more embodiments, the centralized control database 318 stores data (e.g., one or more portions of the asset data 314) aggregated from the edge devices 161a-161n. The centralized control database 318 is a cache memory (e.g., a database structure) that dynamically stores data (e.g., one or more portions of the asset data 314) based on interval of time and/or asset hierarchy level. For instance, in one or more embodiments, the centralized control database 318 stores data (e.g., one or more portions of the asset data 314) for one or more intervals of time (e.g., 1 minute to 12 minutes, 1 hour to 24 hours, 1 day to 31 days, 1 month to 12 months, etc.) and/or for one or more asset hierarchy levels (e.g., asset level, plant level, industrial site level, etc.). In one or more embodiments, the centralized control database 318 is related to a time series mapping of attributes for data (e.g., one or more portions of the asset data 314) aggregated from the edge devices 161a-161n. In one or more embodiments, the centralized control database 318 dynamically stores data (e.g., one or more portions of the asset data 314) based on type of data presented via a dashboard visualization. In one or more embodiments, data (e.g., one or more portions of the asset data 314) aggregated from the edge devices 161a-161n is converted into one or more metrics (e.g., a KPI metric, a duty KPI, a duty target KPI) prior to being stored in the centralized control database 318. In one or more embodiments, a metric (e.g. a KP metrics) consists of aspect data indicative of an aspect employed in a model to map an attribute to the metric (e.g., an operating power asset type attribute is mapped to a duty aspect, etc.), aggregation data indicative of information related to aggregation across time, rollup data indicative of an aggregate metric of an asset across an asset at one level as well as across a hierarchy asset, low limit data indicative of a low-limit constant derived from a digital twin model in real-time, high limit data indicative of a high-limit constant derived from a digital twin model in real-time, target data indicative of a target constant derived from a digital twin model in real-time, custom calculation data indicative of information related to custom calculations using aggregate data across time or asset, and/or other data related to the metric.

In an embodiment illustrated in FIG. 6, the centralized control database 318 includes a first set of data structures 602 associated with a first asset hierarchy level (e.g., a site) in an industrial environment, a second set of data structures 604 associated with a second asset hierarchy level (e.g., a plant) in the industrial environment, and a third set of data structures 606 associated with a third asset hierarchy level (e.g., units) in the industrial environment. For instance, in one or more embodiments, the centralized control database 318 organizes and/or stores data for the first asset hierarchy level (e.g., the site) in the first set of data structures 602. In an embodiment, the data aggregation component 304 aggregates and/or repeatedly updates data for the first asset hierarchy level (e.g., the site) per interval of time. In one or more embodiments, the data aggregation component 304 repeatedly aggregates data for the first asset hierarchy level (e.g., the site) per hour and stores the aggregated data in a first data structure 608 of the first set of data structures 602 until an end of a first cycle (e.g., an end of a 24 hour cycle) is satisfied. Additionally, in one or more embodiments, the data aggregation component 304 repeatedly aggregates data for the first asset hierarchy level (e.g., the site) per day and stores the aggregated data in a second data structure 610 of the first set of data structures 602 until an end of a second cycle (e.g., an end of a 31 day cycle) is satisfied. In one or more embodiments, the data aggregation component 304 also repeatedly aggregates data for the first asset hierarchy level (e.g., the site) per month and stores the aggregated data in a third data structure 612 of the first set of data structures 602 until an end of a third cycle (e.g., an end of a 12 month cycle) is satisfied. In one or more embodiments, a change to the first data structure 608 initiates a change to the second data structure 610 and/or the third data structure 612. Additionally or alternatively, in one or more embodiments, a change to the second data structure 610 initiates a change to the first data structure 608 and/or the third data structure 612. Additionally or alternatively, in one or more embodiments, a change to the third data structure 612 initiates a change to the first data structure 608 and/or the second data structure 610.

In one or more embodiments, a portion of the data in the first data structure 608 is moved within the first data structure 608 and/or into another data structure (e.g., the second data structure 610) in response to an end of a cycle being satisfied. For instance, in an embodiment, a portion of the data in the first data structure 608 that corresponds to a data field for an interval of time from 0-1 hour is moved to another data field in the first data structure 608 for an interval of time from 1-2 hour in response to a cycle that corresponds to the interval of time from 0-1 hour being satisfied. In another embodiment, a portion of the data in the first data structure 608 that corresponds to data fields for an interval of time from 0-24 hours is moved to another data field in the second data structure 610 for an interval of time from 0-1 day in response to a cycle that corresponds to the interval of time from 0-24 hours being satisfied. Similarly, in one or more embodiments, a portion of the data in the second data structure 610 is moved within the second data structure 610 and/or into another data structure (e.g., the third data structure 612) in response to an end of a cycle being satisfied. For instance, in an embodiment, a portion of the data in the second data structure 610 that corresponds to a data field for an interval of time from 0-1 day is moved to another data field in the second data structure 610 for an interval of time from 1-2 day in response to a cycle that corresponds to the interval of time from 0-1 day being satisfied. In another embodiment, a portion of the data in the second data structure 610 that corresponds to data fields for an interval of time from 0-31 days is moved to another data field in the third data structure 612 for an interval of time from 0-1 month in response to a cycle that corresponds to the interval of time from 0-31 days being satisfied. Similarly, in one or more embodiments, a portion of the data in the third data structure 612 is moved within the third data structure 612 and/or into another data structure in response to an end of a cycle being satisfied. For instance, in an embodiment, a portion of the data in the third data structure 612 that corresponds to a data field for an interval of time from 0-1 month is moved to another data field in the third data structure 612 for an interval of time from 1-2 months in response to a cycle that corresponds to the interval of time from 0-1 month being satisfied.

Additionally, in one or more embodiments, the centralized control database 318 organizes and/or stores data for the second asset hierarchy level (e.g., the plant) in the second set of data structures 604. In an embodiment, the data aggregation component 304 aggregates and/or repeatedly updates data for the second asset hierarchy level (e.g., the plant) per interval of time. In one or more embodiments, the data aggregation component 304 repeatedly aggregates data for the second asset hierarchy level (e.g., the plant) per hour and stores the aggregated data in a first data structure 614 of the second set of data structures 604 until an end of a first cycle (e.g., an end of a 24 hour cycle) is satisfied. Additionally, in one or more embodiments, the data aggregation component 304 repeatedly aggregates data for the second asset hierarchy level (e.g., the plant) per day and stores the aggregated data in a second data structure 616 of the second set of data structures 604 until an end of a second cycle (e.g., an end of a 31 day cycle) is satisfied. In one or more embodiments, the data aggregation component 304 also repeatedly aggregates data for the second asset hierarchy level (e.g., the plant) per month and stores the aggregated data in a third data structure 618 of the second set of data structures 604 until an end of a third cycle (e.g., an end of a 12 month cycle) is satisfied. In one or more embodiments, a change to the first data structure 614 initiates a change to the second data structure 616 and/or the third data structure 618. Additionally or alternatively, in one or more embodiments, a change to the second data structure 616 initiates a change to the first data structure 614 and/or the third data structure 618. Additionally or alternatively, in one or more embodiments, a change to the third data structure 618 initiates a change to the first data structure 614 and/or the second data structure 616.

In one or more embodiments, a portion of the data in the first data structure 614 is moved within the first data structure 614 and/or into another data structure (e.g., the second data structure 616) in response to an end of a cycle being satisfied. For instance, in an embodiment, a portion of the data in the first data structure 614 that corresponds to a data field for an interval of time from 0-1 hour is moved to another data field in the first data structure 614 for an interval of time from 1-2 hour in response to a cycle that corresponds to the interval of time from 0-1 hour being satisfied. In another embodiment, a portion of the data in the first data structure 614 that corresponds to data fields for an interval of time from 0-24 hours is moved to another data field in the second data structure 616 for an interval of time from 0-1 day in response to a cycle that corresponds to the interval of time from 0-24 hours being satisfied. Similarly, in one or more embodiments, a portion of the data in the second data structure 616 is moved within the second data structure 616 and/or into another data structure (e.g., the third data structure 618) in response to an end of a cycle being satisfied. For instance, in an embodiment, a portion of the data in the second data structure 616 that corresponds to a data field for an interval of time from 0-1 day is moved to another data field in the second data structure 616 for an interval of time from 1-2 day in response to a cycle that corresponds to the interval of time from 0-1 day being satisfied. In another embodiment, a portion of the data in the second data structure 616 that corresponds to data fields for an interval of time from 0-31 days is moved to another data field in the third data structure 618 for an interval of time from 0-1 month in response to a cycle that corresponds to the interval of time from 0-31 days being satisfied. Similarly, in one or more embodiments, a portion of the data in the third data structure 618 is moved within the third data structure 618 and/or into another data structure in response to an end of a cycle being satisfied. For instance, in an embodiment, a portion of the data in the third data structure 618 that corresponds to a data field for an interval of time from 0-1 month is moved to another data field in the third data structure 618 for an interval of time from 1-2 months in response to a cycle that corresponds to the interval of time from 0-1 month being satisfied.

Additionally, in one or more embodiments, the centralized control database 318 organizes and/or stores data for the third asset hierarchy level (e.g., the units) in the third set of data structures 606. In an embodiment, the data aggregation component 304 aggregates and/or repeatedly updates data for the third asset hierarchy level (e.g., the assets) per interval of time. In one or more embodiments, the data aggregation component 304 repeatedly aggregates data for the third asset hierarchy level (e.g., the assets) per hour and stores the aggregated data in a first data structure 620 of the third set of data structures 606 until an end of a first cycle (e.g., an end of a 24 hour cycle) is satisfied. Additionally, in one or more embodiments, the data aggregation component 304 repeatedly aggregates data for the third asset hierarchy level (e.g., the assets) per day and stores the aggregated data in a second data structure 622 of the third set of data structures 606 until an end of a second cycle (e.g., an end of a 31 day cycle) is satisfied. In one or more embodiments, the data aggregation component 304 also repeatedly aggregates data for the third asset hierarchy level (e.g., the assets) per month and stores the aggregated data in a third data structure 624 of the third set of data structures 606 until an end of a third cycle (e.g., an end of a 12 month cycle) is satisfied. In one or more embodiments, a change to the first data structure 620 initiates a change to the second data structure 622 and/or the third data structure 624. Additionally or alternatively, in one or more embodiments, a change to the second data structure 622 initiates a change to the first data structure 620 and/or the third data structure 624. Additionally or alternatively, in one or more embodiments, a change to the third data structure 624 initiates a change to the first data structure 620 and/or the second data structure 622.

In one or more embodiments, a portion of the data in the first data structure 620 is moved within the first data structure 620 and/or into another data structure (e.g., the second data structure 622) in response to an end of a cycle being satisfied. For instance, in an embodiment, a portion of the data in the first data structure 620 that corresponds to a data field for an interval of time from 0-1 hour is moved to another data field in the first data structure 620 for an interval of time from 1-2 hour in response to a cycle that corresponds to the interval of time from 0-1 hour being satisfied. In another embodiment, a portion of the data in the first data structure 620 that corresponds to data fields for an interval of time from 0-24 hours is moved to another data field in the second data structure 622 for an interval of time from 0-1 day in response to a cycle that corresponds to the interval of time from 0-24 hours being satisfied. Similarly, in one or more embodiments, a portion of the data in the second data structure 622 is moved within the second data structure 622 and/or into another data structure (e.g., the third data structure 624) in response to an end of a cycle being satisfied. For instance, in an embodiment, a portion of the data in the second data structure 622 that corresponds to a data field for an interval of time from 0-1 day is moved to another data field in the second data structure 622 for an interval of time from 1-2 day in response to a cycle that corresponds to the interval of time from 0-1 day being satisfied. In another embodiment, a portion of the data in the second data structure 622 that corresponds to data fields for an interval of time from 0-31 days is moved to another data field in the third data structure 624 for an interval of time from 0-1 month in response to a cycle that corresponds to the interval of time from 0-31 days being satisfied. Similarly, in one or more embodiments, a portion of the data in the third data structure 624 is moved within the third data structure 624 and/or into another data structure in response to an end of a cycle being satisfied. For instance, in an embodiment, a portion of the data in the third data structure 624 that corresponds to a data field for an interval of time from 0-1 month is moved to another data field in the third data structure 624 for an interval of time from 1-2 months in response to a cycle that corresponds to the interval of time from 0-1 month being satisfied.

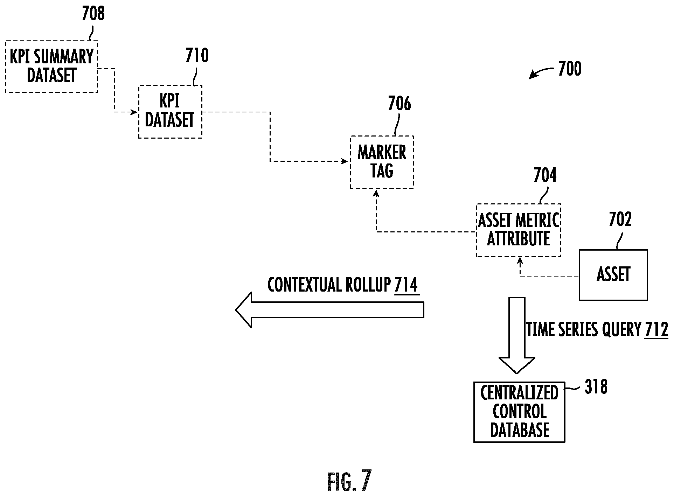

FIG. 7 illustrates a system 700 according to one or more described features of one or more embodiments of the disclosure. According to various embodiments, the system 700 corresponds to a model (e.g., a contribution model, an extensible object model, a metrics model, an asset model, another type of model, etc.) related to a time series mapping of attributes for aggregated data. In an embodiment, the system 700 includes an asset 702. In one or more embodiments, the asset 702 corresponds to an edge device from the edge devices 161a-161n. Furthermore, in one or more embodiments, the asset 702 corresponds to one or more assets (e.g., one or more industrial assets), one or more databases, one or more IoT devices (e.g., one or more industrial IoT devices), one or more sensors, one or more actuators, one or more processors, one or more computers, one or more valves, one or more pumps (e.g., one or more centrifugal pumps, etc.), one or more motors, one or more compressors, one or more turbines, one or more ducts, one or more heaters, one or more coolers, one or more boilers, one or more furnaces, one or more heat exchangers, one or more fans, one or more blowers, one or more conveyor belts, one or more vehicle components, one or more cameras, one or more displays, one or more security components, one or more HVAC components, factory equipment, and/or one or more other devices. In addition, in one or more embodiments, the asset 702 is associated with one or more asset hierarchy levels for an industrial environment. For instance, in an embodiment, the asset 702 is an asset or a sub-asset within an area of a plant at an industrial site.

In an embodiment, the metrics engine component 306 generates an asset metric attribute 704 for the asset 702. For instance, in an embodiment, the asset metric attribute 704 is an asset API attribute for the asset 702 such as an API metric for the for the asset 702, an opportunity metric for the asset 702, a safety risk value for the asset 702, an energy/utility cost value for the asset 702, a plant performance metric for the asset 702, an overall equipment effectiveness for the asset 702, a fault summary metric for the asset 702, a fault status metric for the asset 702, a design duty metric for the asset 702, a design fouling resistance metric for the asset 702, a frequency of failing metric for the asset 702, and/or another type of metric related to performance of the for the asset 702. In one or more embodiments, the asset metric attribute 704 is provided to the centralized control database 318 for storage in the centralized control database 318. In one or more embodiments, the asset metric attribute 704 is provided to one or more asset hierarchy levels (e.g., plant, unit, area, asset, sub-asset, etc.) associated with the centralized control database 318 (e.g., via a rollup process related to distribution of the asset metric attribute 704 to the one or more asset hierarchy levels). In one or more embodiments, the asset metric attribute 704 is provided to the centralized control database 318 via a time series query 712 of one or more data structures of the centralized control database 318. In one or more embodiments, the asset metric attribute 704 and/or the time series query 712 are employed to provide a contextual rollup 714 of industrial metrics associated with the centralized control database 318 to facilitate asset performance management with respect to the asset 702.

Additionally, in an embodiment, the metrics engine component 306 generates a marker tag 706 for the asset metric attribute 704. According to one or more embodiments, the marker tag 706 is a tag that identifies the asset 702 and/or the asset metric attribute 704 for the asset 702. In one or more embodiments, the marker tag 706 is employed to facilitate presentation of data associated with the asset 702 and/or the asset metric attribute 704 via a dashboard visualization. For instance, in an embodiment, a dashboard visualization includes a KPI summary dataset 708 associated with one or more dashboard reports related to the asset 702 and/or one or more other assets in an industrial environment. In one or more embodiments, a KPI dataset 710 from the KPI summary dataset 708 is determined, generated and/or rendered based on the marker tag 706 associated with the asset 702 and/or the asset metric attribute 704 for the asset 702.

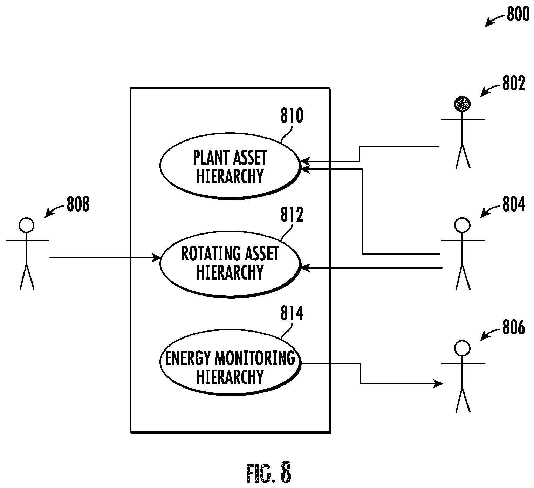

FIG. 8 illustrates a system 800 according to one or more described features of one or more embodiments of the disclosure. According to various embodiments, the system 800 is related to asset performance management using a configured model to present relevant metrics to a user based on user role, user context associated with invoking one or more metrics via a dashboard visualization, and/or a hierarchy mapped for a metrics model. According to an embodiment illustrated in FIG. 8, the system 800 includes a first user 802 (e.g., a plant manager), a second user 804 (e.g., a maintenance engineer), a third user 806 (e.g., a process & energy engineer) and a fourth user 808 (e.g., an application configuration engineer). In an embodiment, the first user 802 is associated with a first computing device that generates a request to review plant performance and/or opportunity to improve with respect to a plant asset hierarchy 810 that includes a hierarchy of asset in a plant. Furthermore, in an embodiment, a dashboard visualization associated with the plant asset hierarchy 810 provides one or more metrics (e.g., production metrics, OEE metrics, availability metrics, performance metrics, quality metrics, energy metrics and/or other metrics) via a visual display of the first computing device associated with the first user 802.

In another embodiment, the second user 804 is associated with a second computing device that generates a request to review asset performance and/or opportunity to improve with respect to a rotating asset hierarchy 812 that includes a hierarchy of assets. Furthermore, in an embodiment, a dashboard visualization associated with the rotating asset hierarchy 812 provides one or more metrics (e.g., OEE metrics, availability metrics, quality metrics, energy metrics, fault metrics, and/or other metrics) via a visual display of the second computing device associated with the second user 804. In one or more embodiments, the fourth user 808 is additionally or alternatively able to view one or more metrics (e.g., OEE metrics, availability metrics, quality metrics, energy metrics, fault metrics, and/or other metrics) associated with the dashboard visualization via a visual display of a computing device associated with the fourth user 808. In yet another embodiment, the third user 806 is associated with a third computing device that generates a request to review production, energy consumption and efficiency/loss with respect to an energy monitoring hierarchy 814 that includes a hierarchy of assets. Furthermore, in an embodiment, a dashboard visualization associated with the energy monitoring hierarchy 814 provides one or more metrics via a visual display of the third computing device associated with the third user 806.

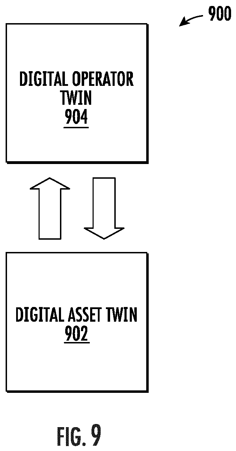

FIG. 9 illustrates a system 900 according to one or more described features of one or more embodiments of the disclosure. In an embodiment, the system 900 includes a digital asset twin 902 and a digital operator twin 904. In one or more embodiments, the digital asset twin 902 is associated with one or more assets from the portfolio of assets. Furthermore, in one or more embodiments, the digital operator twin 904 is associated with an operator identity associated with one or more assets from the portfolio of assets. In certain embodiments, the edge devices 161a-161n includes the digital asset twin 902. For example, in an embodiment, the digital asset twin 902 is a digital simulation (e.g., a digital replication) of an asset (e.g., a boiler, etc.) from the portfolio of assets.

In an exemplary embodiment, the asset performance management computer system 302 determines that temperature for the digital asset twin 902 is 5 degrees out of range. Furthermore, in the exemplary embodiment, the asset performance management computer system 302 recommends modification of a temperature set-point associated with the digital asset twin 902. For example, in the exemplary embodiment, the asset performance management computer system 302 recommends changing the temperature set-point to 65 degrees and the asset performance management computer system 302 generates a work order associated with the temperature set-point change. In one or more embodiments, the asset performance management computer system 302 sends a notification associated with the temperature set-point change to the digital operator twin 904. In certain embodiments, the digital operator twin 904 is a digital simulation of an operator. For example, in certain embodiments, the digital operator twin 904 corresponds to the computing device 402. Additionally, in the exemplary embodiment, the digital operator twin 904 receives the notification associated with the temperature set-point change. In one or more embodiments, the digital operator twin 904 analyzes the work order with respect to a set of previously generated work orders. In one or more embodiments, the digital operator twin 904 additionally or alternatively analyzes an asset zone, occupant status, and/or one or more predefined configurations for the asset associated with the digital asset twin 902. In one or more embodiments, the digital operator twin 904 sends one or more control setting changes to the digital asset twin 902. In one or more embodiments, the digital operator twin 904 additionally or alternatively confirms the set point changes and/or removes a manual override associated with the work order. In one or more embodiments, the digital operator twin 904 additionally or alternatively monitors for any manual override reoccurrence. In one or more embodiments, the digital operator twin 904 additionally or alternatively closes the work order in response to the set point changes. As such, in certain embodiments, an operator is notified of an issue associated with an asset (e.g., the digital asset twin 902) and, in certain embodiments, is provided with predefined operating configurations and/or service case documentation.

In another exemplary embodiment, the asset performance management computer system 302 determines that an upper valve for the digital asset twin 902 has failed. Furthermore, in this exemplary embodiment, the asset performance management computer system 302 recommends replacement of the upper valve associated with the digital asset twin 902. For example, in this exemplary embodiment, the asset performance management computer system 302 recommends replacement of the upper valve and the asset performance management computer system 302 generates a work order associated with the upper valve replacement. In one or more embodiments, the asset performance management computer system 302 sends a notification associated with the upper valve replacement to the digital operator twin 904. Additionally, in this exemplary embodiment, the digital operator twin 904 receives the notification associated with the upper valve replacement. In one or more embodiments, the digital operator twin 904 analyzes the work order with respect to a set of previously generated work orders. In one or more embodiments, the digital operator twin 904 additionally or alternatively determines an optimal service technician for the upper valve replacement. In one or more embodiments, the digital operator twin 904 sends a work order associated with the upper valve replacement to a computing device associated with the service technician. In one or more embodiments, the digital operator twin 904 additionally or alternatively generates one or more system security keys for the service technician associated with the work order. In one or more embodiments, the digital operator twin 904 additionally or alternatively closes the work order in response to the upper valve replacement. In one or more embodiments, the digital operator twin 904 additionally or alternatively performs an auto-test associated with the new upper valve for the asset (e.g., the digital asset twin 902). In one or more embodiments, the digital operator twin 904 additionally or alternatively pays a bill associated with the upper valve replacement. As such, in certain embodiments, a service technician is sourced, dispatched, performs a repair associated with an asset, and/or is paid by employing the digital asset twin 902 and/or the digital operator twin 904.

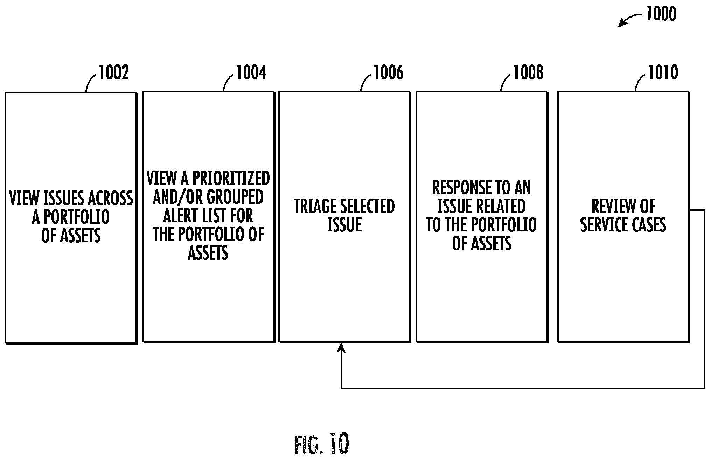

FIG. 10 illustrates a system 1000 according to one or more described features of one or more embodiments of the disclosure. The system 1000 illustrates functionality provided via a dashboard visualization according to one or more embodiments of the disclosure. In an embodiment, a dashboard visualization associated with the dashboard visualization data 322 provides functionality 1002 associated with viewing issues across a portfolio of assets. In one or more embodiments, a portfolio status is based on one or more alerts and/or one or more service cases. In one or more embodiments, one or more details associated with issues across a portfolio of assets is provided. In another embodiment, a dashboard visualization associated with the dashboard visualization data 322 provides functionality 1004 associated with viewing a prioritized and/or grouped alert list for a portfolio of assets. In one or more embodiments, one or more analytics alerts and/or one or more alarms (e.g., one or more BMS alarms) are provided via the dashboard visualization. In one or more embodiments, alerts are grouped into common issues associated with assets. In one or more embodiments, priorities associated with the portfolio of assets are presented based on factors associated with the assets to facilitate generation of one or more actions for the portfolio of assets. In one or more embodiments, one or more notifications (e.g., one or more web-app notifications, one or more mobile notifications, etc.) are provided.

In another embodiment, a dashboard visualization associated with the dashboard visualization data 322 provides functionality 1006 associated with triaging a selected issue. In one or more embodiments, one or more alerts across several assets is provided. In one or more embodiments, live asset properties (e.g., value, status, trends, service cases, etc.) are displayed via the dashboard visualization. In one or more embodiments, a predicted root cause of an issue associated with the portfolio of assets is provided via the dashboard visualization. In one or more embodiments, insights and/or logs are recorded for one or more previously generated services cases and/or one or more new service cases. In another embodiment, a dashboard visualization associated with the dashboard visualization data 322 provides functionality 1008 associated with a response to an issue related to the portfolio of assets. In one or more embodiments, one or more control changes (e.g. set-points, status, automatic control changes, manual control changes, etc.) can be made via the dashboard visualization. In one or more embodiments, a service case can be assigned to an operator (e.g., a service technician) via the dashboard visualization. In another embodiment, a dashboard visualization associated with the dashboard visualization data 322 provides functionality 1010 associated with review of services cases. In one or more embodiments, a service case view provided via the dashboard visualization facilitates viewing services cases, updating service cases, performing actions with respect to service cases, and/or closing services cases. In one or more embodiments, the dashboard visualization provides for reports on service case trends for on-going improvements with respect to the portfolio of assets.

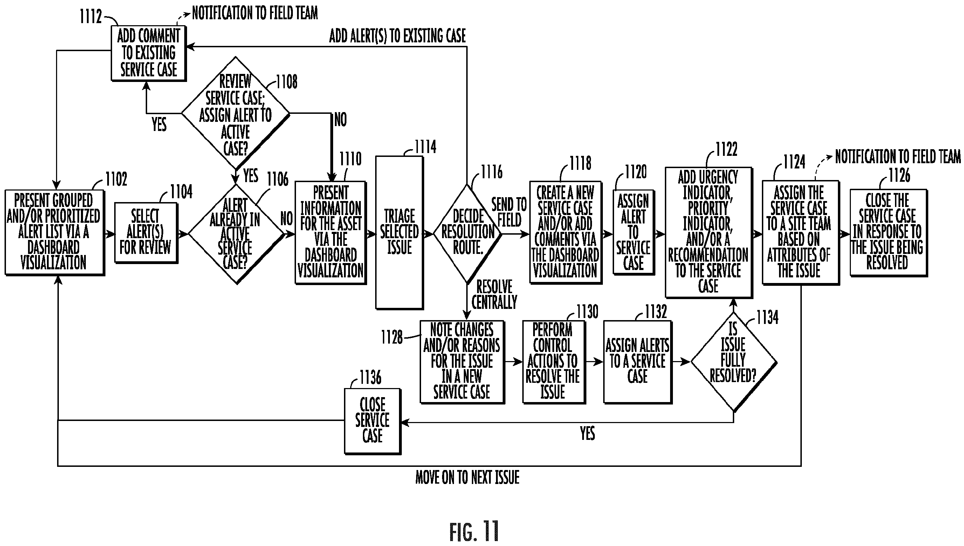

FIG. 11 illustrates a system 1100 according to one or more described features of one or more embodiments of the disclosure. The system 1100 illustrates an operator workflow facilitated via a dashboard visualization, in accordance with one or more embodiments of the disclosure. At step 1102, a grouped and/or prioritized alert list is presented via a dashboard visualization for review. At step 1104, one or more alerts from the grouped and/or prioritized alert list is selected for review. At step 1106, it is determined if an alert is already active in a service case. If yes, it is determined at step 1108 if the alert should be assigned to the active service case. If no, at step 1110, information for the asset related to the alert is presented via the dashboard visualization for review. Returning to step 1108, if it is determined that the alert should be assigned to the active case, a comment is added to the existing service case at step 1112. However, if it is determined that the alert should not be assigned to the active case, information for the asset related to the alert is presented via the dashboard visualization for review at step 1110. At step 1114, information related to properties, trends, associated equipment, live service cases and/or closed service cases are presented via the dashboard visualization for review. At step 1116, a resolution route for the alert is decided via the dashboard visualization. If it is determined to send a worker to the field associated with the asset, at step 1118, a new service case is created and/or comments are added via the dashboard visualization. At step 1120, alerts are assigned to a service case. At step 1122, an urgency indicator, a priority indicator and/or a recommendation is added to the service case. At step 1124, the service case is assigned to a site team (e.g., mechanical team, electrical team, controls team, etc.) based on attributes of the issue. At step 1126, the service case is closed in response to the issue being resolved. However, it is determined at step 1116 to centrally resolve an issue associated with the asset, changes and/or reasons for the issue is noted in a new service case at step 1128. At step 1130, control actions are performed to resolve the issue. At step 1132, alerts are assigned to a service case. At step 1134, it is determined whether the issue is fully resolved. If no, then an urgency indicator, a priority indicator and/or a recommendation is added to the service case at step 1122. However, if yes, the service case is closed at step 1136.

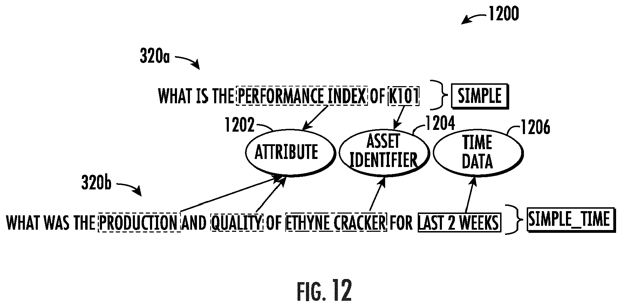

FIG. 12 illustrates a system 1200 according to one or more described features of one or more embodiments of the disclosure. The system 1200 includes a voice input 320a that corresponds to an exemplary voice input (e.g., the request 320) generated by the computing device 402 and/or provided to the asset performance management computer system 302. For instance, the voice input 320a includes voice input data that corresponds to a phrase "What is the performance index of k101." In one or more embodiments, the virtual assistant component 336 employs natural language processing and/or performs a natural language query to determine an attribute 1202 that corresponds to "performance index" and an asset identifier 1204 that corresponds to "k101." The system 1200 also includes a voice input 320b that corresponds to another exemplary voice input generated by the computing device 402 and/or provided to the asset performance management computer system 302. For instance, the voice input 320b includes voice input data that corresponds to a phrase "What was the production and quality of ethyne cracker for last 2 weeks." In one or more embodiments, the virtual assistant component 336 employs natural language processing and/or performs a natural language query to determine a first attribute 1202 that corresponds to "production," a second attribute 1202 that corresponds to "quality," an asset identifier 1204 that corresponds to "ethyne cracker," and time data 1206 that corresponds to "last 2 weeks."

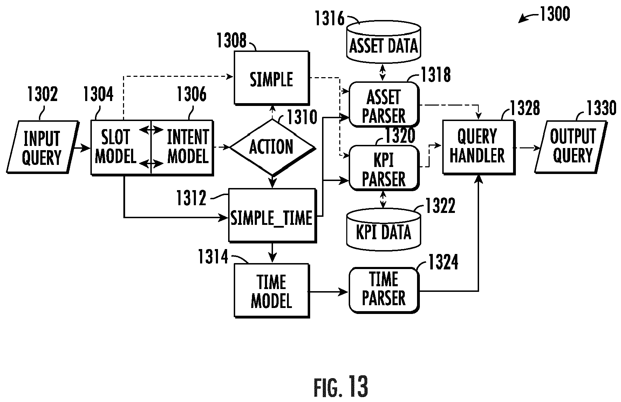

FIG. 13 illustrates a system 1300 according to one or more described features of one or more embodiments of the disclosure. In one or more embodiments, the system 1300 is employed to produce a structured query for a data API based on a natural language query. The system 1300 includes an input query 1302 that corresponds to a voice input (e.g., the request 320), for example. In one or more embodiments, a slot model 1304 and/or an intent model 1306 associated with natural language processing is employed to determine a phrase that does not include time data (e.g., simple 1308 that corresponds to voice input 320a) and/or a phrase that include times data (e.g., simple_time 1312 that corresponds to voice input 320b). In one or more embodiments, the slot model 1304 tags one or more words associated with the input query 1302 with one or more slots. For instance, in one or more embodiments, the slot model 1304 is configured to identify meaning of individual words associated with the input query 1302 via slot detection. In one or more embodiments, each word is provided to a slot to understand which type of information is being shared with the word. In one example, the input query 1302 includes an input sentence "give me the capacity of DCC plant" and the slot model 1304 determines a first slot (e.g., an attribute_name slot) that corresponds to "capacity" and a second slot (e.g., an asset_name slot) that corresponds to "DCC". Other tokens may be labeled as "others". In one or more embodiments, the intent model 1306 labels a sentence associated with the input query 1302 with an intent. For example, the intent model 1306 translates a type of query associated with the input query 1302.

In one or more embodiments, the slot model 1304 includes one or more encoders and/or one or more decoders configured for slot-filling. Additionally or alternatively, in one or more embodiments, the intent model 1306 includes one or more encoders and/or one or more decoders configured for intent classification. In one or more embodiments, respective encoders for the slot model 1304 and/or the intent model 1306 include an embedding layer, a long short-term memory (LSTM) layer, and/or a linear layer (e.g., a linear layer for classification). In one or more embodiments, respective decoders for the slot model 1304 and/or the intent model 1306 employ hidden states provide by the encoders. In one or more embodiments, hidden states associated with two or more encoders are provided as input to a decoder of the slot model 1304 and/or a decoder of the intent model 1306. As such, in one or more embodiments, processing performed by the slot model 1304 and the intent model 1306 are interdependent. In one or more embodiments, the slot model 1304 and/or the intent model 1306 are repeatedly trained based on training data and/or test data associated with words tagged with a slot and/or labeled sentences until a certain accuracy (e.g., a certain F1 score) is achieved. In one or more embodiments, the training data includes an input sentence in natural language along with corresponding slot labels and/or an intent. For example, a portion of the training data may include "What:O is:O the:O quality:B-attribute_name of:O cdu:B-asset_name inlet:I-asset_name stream:E-asset_name <=> simple" where each word is followed by a slot after the colon ":", and the intent is located at the end. In one or more embodiments, every word present in the training data is added to a dictionary of the slot model 1304 and/or the intent model 1306, where each word is mapped to a number.

In one or more embodiments, an action 1310 is performed with respect to simple 1308 and/or simple_time 1312 to facilitate asset parsing via asset parser 1318, KPI parsing via KPI parser 1320, and/or time parsing via time parser 1324. In one or more embodiments, the asset parser 1318 employs asset data 1316 to facilitate the asset parsing. In one or more embodiments, the KPI parser 1320 employs KPI data 1322 to facilitate the KPI parsing. In one or more embodiments, depending on an intent of the input query 1302, a corresponding action function is invoked via the action 1310. For example, an action function may be configured for each possible intent. In one or more embodiments, each action function contains parsers for the slots present in a query of the respective intent. Respective parsers identify words having a certain slot and is then employed with respect to query of a database to determine a closest match. In one or more embodiments, a closest match is determined based on a fuzzy matching technique to account for spelling errors, different writing styles employed by respective users, and/or different spoken language employed by respective users.

In one or more embodiments, the time parser 1324 employs data provided by a time model 1314. In one or more embodiments, the time model 1314 is configured to classify a format in which time data has been given in the input query 1302. In one or more embodiments, the time model 1314 is configured to classify a relative time format and/or an absolute time format. In one or more embodiments, the time model 1314 is a trained neural network model configured to identify time information. For instance, in one or more embodiments, the time model 1314 is a fully connected feed forward neural network that includes two or more hidden layers. In one or more embodiments, input provided to the time model 1314 includes a set of words created based on the input query 1302. Additionally or alternatively, the input provided to the time model 1314 includes time data which contains one or more words that can be employed to identify time associated with the input query 1302. In one or more embodiments, a size of an input layer of the time model 1314 corresponds to a size of the time data. Furthermore, in one or more embodiments, a size of an output layer of the time model 1314 corresponds to a number of time formats to be identified by the time model 1314. In one or more embodiments, the time model 1314 is configured to classify the time information into a fixed format. In response to identification of a time format, in one or more embodiments, the time parser 1324 is configured to calculate a start time and an end time based on data provided by the time model 1314. In one or more embodiments, training data for the time model 1314 is generated using a random time data generator. In one or more embodiments, a query handler 1328 is employed to perform a search with respect to the centralized control database 318 based on one or more attributes, one or more asset identifiers, and/or time data provided by the asset parser 1318, the KPI parser 1320, and/or the time parser 1324. Additionally, in one or more embodiments, an output query 1330 associated with aggregated data and/or one or more asset insights is provided in response to one or more searches performed via the query handler 1328. The output query 1330 is, for example, a structured query associated with a syntax of the input query 1302 (e.g., a syntax of the query language). For example, in one or more embodiments, the output query 1330 is a query string created by combining asset parser information, KPI parser information, time parser information, and/or other information into the syntax. In one or more embodiments, the output query 1330 (e.g., the syntax of the output query 1330) is configured for employment by a data API.

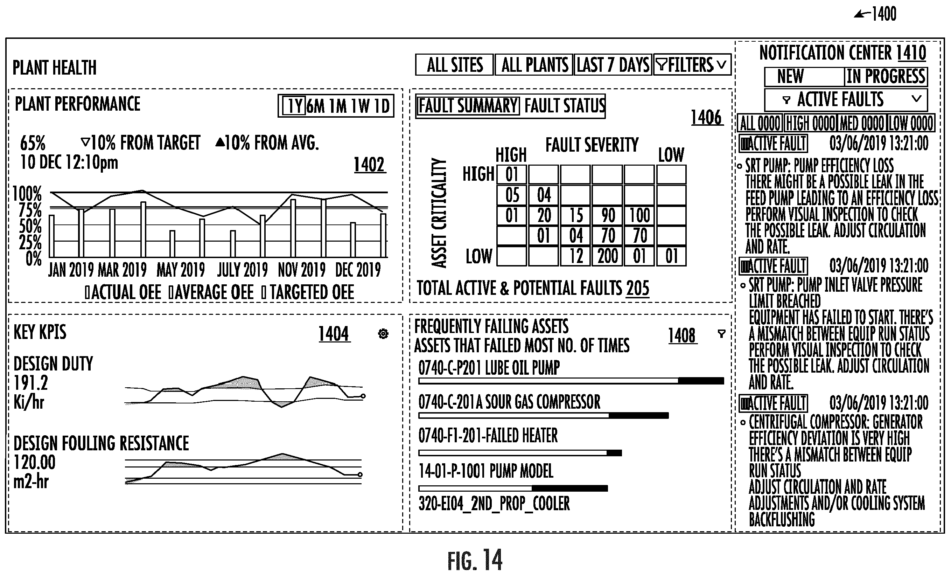

FIG. 14 illustrates an exemplary electronic interface 1400 according to one or more embodiments of the disclosure. In an embodiment, the electronic interface 1400 is an electronic interface of the computing device 402 that is presented via the visual display 504. In one or more embodiments, a data visualization is presented via the electronic interface 1400. In certain embodiments, the data visualization presented via the electronic interface 1400 presents a visualization of plant health for an industrial plant. In one or more embodiments, the asset performance management computer system 302 receives the request 320 via the electronic interface 1400. Furthermore, in one or more embodiments, the dashboard visualization component 308 provides the dashboard visualization data 322 to the electronic interface 1400. According to an embodiment illustrated in FIG. 14, the electronic interface 1400 presents first metrics data 1402 associated with plant performance for a hierarchy of assets associated with one or more intervals of time (e.g., per year, per 6 months, per 1 month, per week, per day, etc.), second metrics data 1404 associated with key KPIs for the hierarchy of assets associated with the one or more intervals of time, third metrics data 1406 associated with a fault summary and/or a fault status for the hierarchy of assets associated with the one or more intervals of time, and fourth metrics data 1408 associated with frequently failing assets for the hierarchy of assets associated with the one or more intervals of time. Additionally, in certain embodiments, the electronic interface 1400 includes a notification center 1410 that presents one or more notifications associated with the hierarchy of assets and/or one or more other assets from a portfolio of assets.

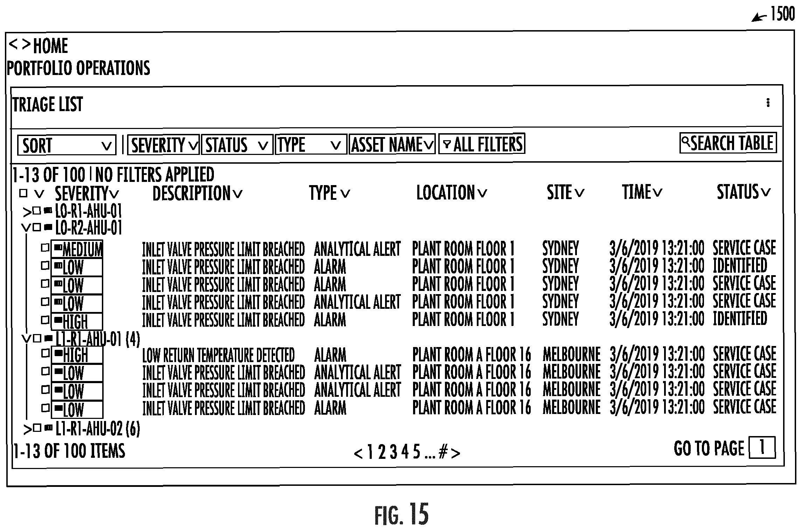

FIG. 15 illustrates an exemplary electronic interface 1500 according to one or more embodiments of the disclosure. In an embodiment, the electronic interface 1500 is an electronic interface of the computing device 402 that is presented via the visual display 504. In one or more embodiments, a dashboard visualization is presented via the electronic interface 1500. In certain embodiments, the data visualization presented via the electronic interface 1500 presents a visualization of alerts grouped by asset to facilitate analysis of a portfolio of assets via the dashboard visualization associated with the electronic interface 1500.

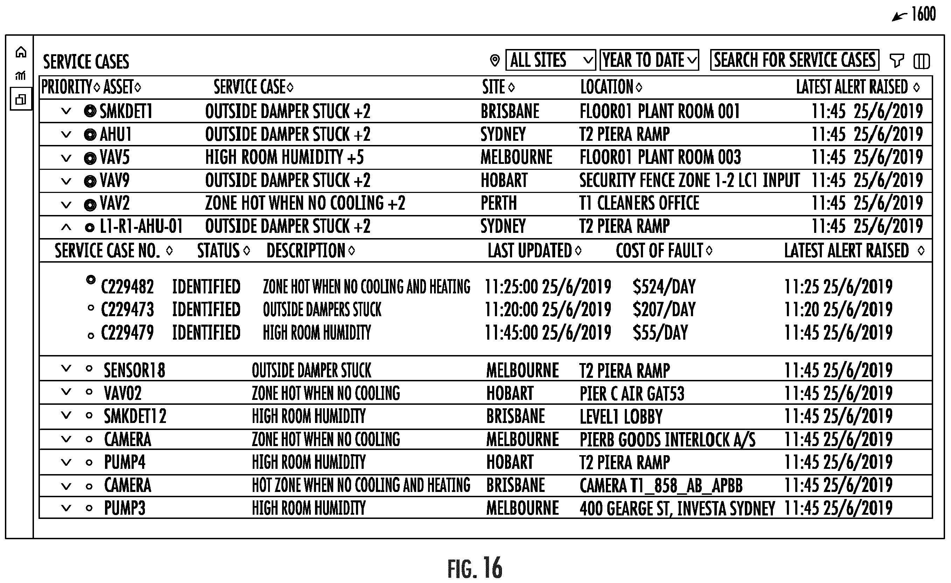

FIG. 16 illustrates an exemplary electronic interface 1600 according to one or more embodiments of the disclosure. In an embodiment, the electronic interface 1600 is an electronic interface of the computing device 402 that is presented via the visual display 504. In one or more embodiments, a dashboard visualization is presented via the electronic interface 1600. In certain embodiments, the data visualization presented via the electronic interface 1600 presents a visualization of a view list of service cases grouped by asset to facilitate analysis of a portfolio of assets via the dashboard visualization associated with the electronic interface 1600.

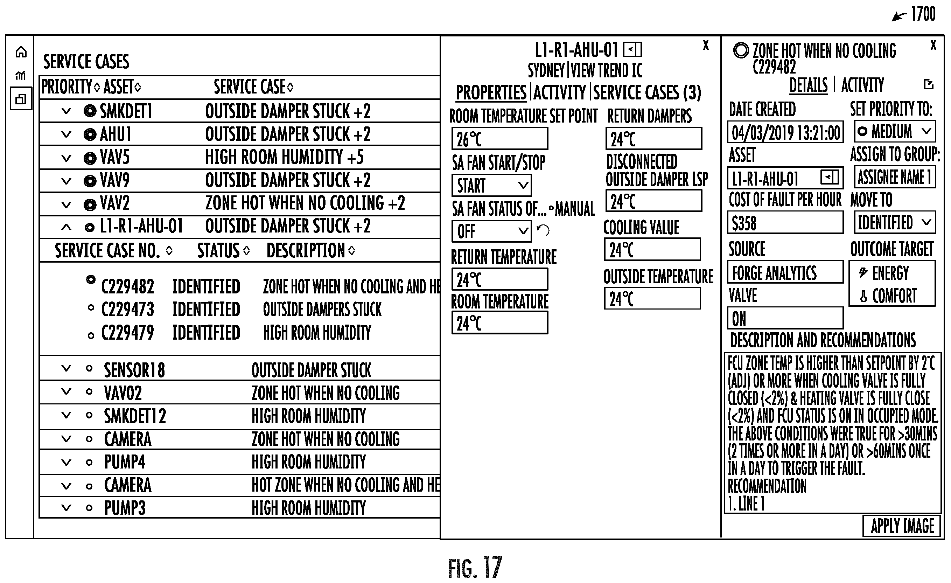

FIG. 17 illustrates an exemplary electronic interface 1700 according to one or more embodiments of the disclosure. In an embodiment, the electronic interface 1700 is an electronic interface of the computing device 402 that is presented via the visual display 504. In one or more embodiments, a dashboard visualization is presented via the electronic interface 1700. In certain embodiments, the data visualization presented via the electronic interface 1700 presents a visualization of details of a service case and real-time values of properties for associated assets to facilitate analysis of a portfolio of assets via the dashboard visualization associated with the electronic interface 1700.

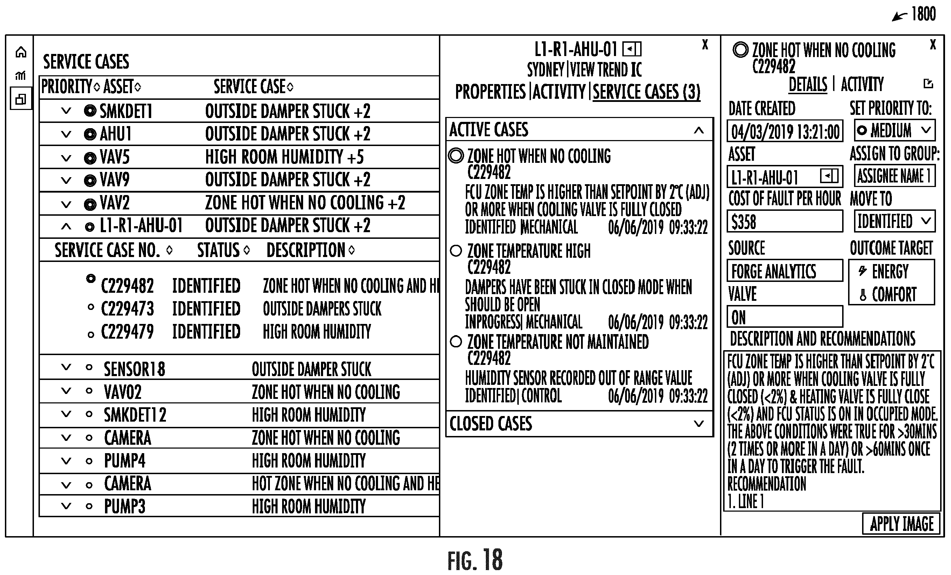

FIG. 18 illustrates an exemplary electronic interface 1800 according to one or more embodiments of the disclosure. In an embodiment, the electronic interface 1800 is an electronic interface of the computing device 402 that is presented via the visual display 504. In one or more embodiments, a dashboard visualization is presented via the electronic interface 1800. In certain embodiments, the data visualization presented via the electronic interface 1800 presents a visualization of service cases related to assets to facilitate analysis of a portfolio of assets via the dashboard visualization associated with the electronic interface 1800.

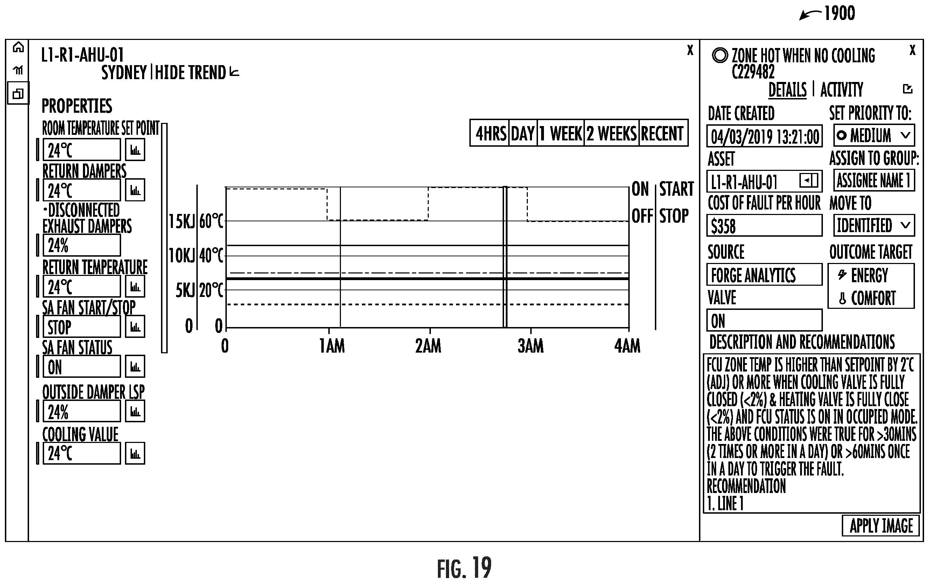

FIG. 19 illustrates an exemplary electronic interface 1900 according to one or more embodiments of the disclosure. In an embodiment, the electronic interface 1900 is an electronic interface of the computing device 402 that is presented via the visual display 504. In one or more embodiments, a dashboard visualization is presented via the electronic interface 1900. In certain embodiments, the data visualization presented via the electronic interface 1900 presents a visualization of trends of digital and/or analog properties related to assets to facilitate analysis of a portfolio of assets via the dashboard visualization associated with the electronic interface 1900.

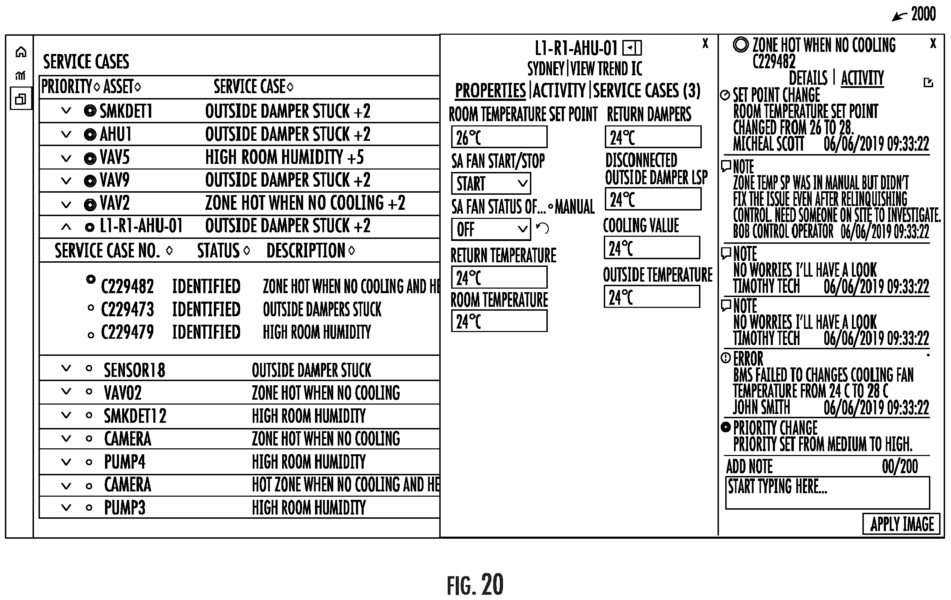

FIG. 20 illustrates an exemplary electronic interface 2000 according to one or more embodiments of the disclosure. In an embodiment, the electronic interface 2000 is an electronic interface of the computing device 402 that is presented via the visual display 504. In one or more embodiments, a dashboard visualization is presented via the electronic interface 2000. In certain embodiments, the data visualization presented via the electronic interface 2000 presents a visualization of control properties related to assets to facilitate analysis of a portfolio of assets via the dashboard visualization associated with the electronic interface 2000.

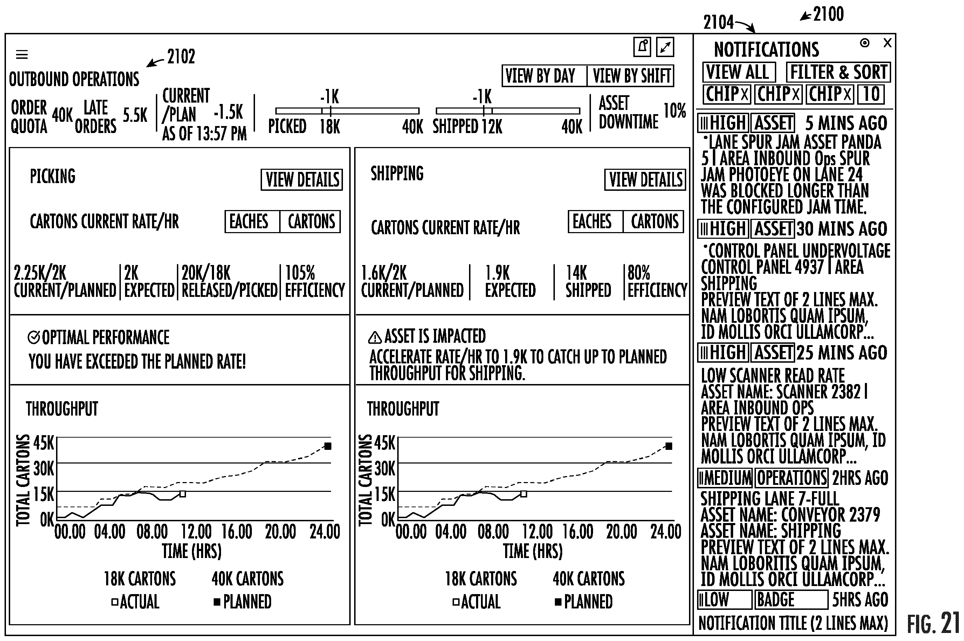

FIG. 21 illustrates an exemplary electronic interface 2100 according to one or more embodiments of the disclosure. In an embodiment, the electronic interface 2100 is an electronic interface of the computing device 402 that is presented via the visual display 504. In one or more embodiments, a dashboard visualization is presented via the electronic interface 2100. In certain embodiments, the data visualization presented via the electronic interface 2100 presents one or more asset insights 2102 and/or one or more notifications 2104 via the dashboard visualization associated with the electronic interface 2100.

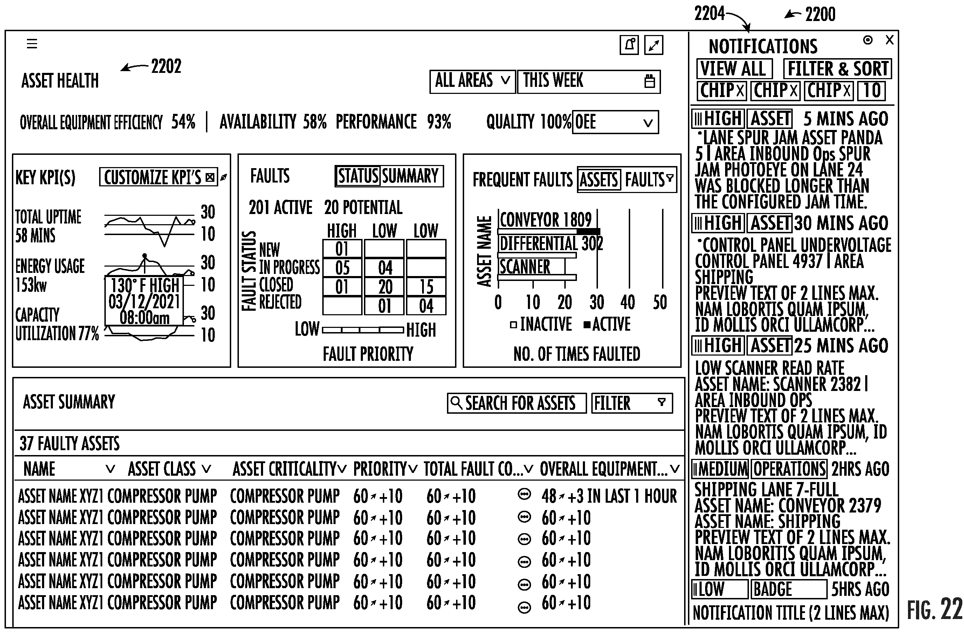

FIG. 22 illustrates an exemplary electronic interface 2200 according to one or more embodiments of the disclosure. In an embodiment, the electronic interface 2200 is an electronic interface of the computing device 402 that is presented via the visual display 504. In one or more embodiments, a dashboard visualization is presented via the electronic interface 2200. In certain embodiments, the data visualization presented via the electronic interface 2200 presents one or more asset insights 2202 and/or one or more notifications 2204 via the dashboard visualization associated with the electronic interface 2200.

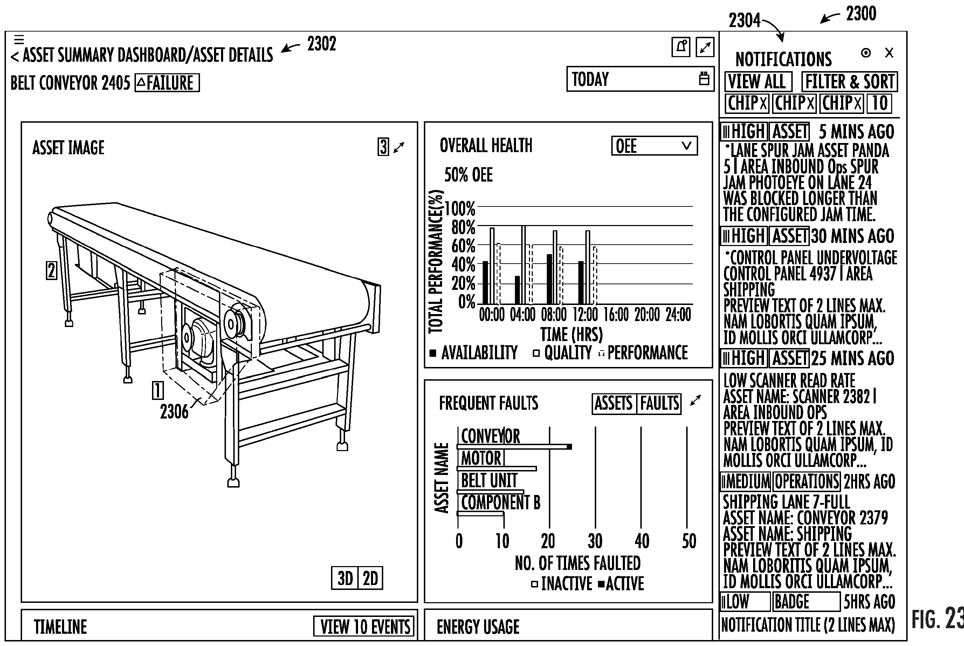

FIG. 23 illustrates an exemplary electronic interface 2300 according to one or more embodiments of the disclosure. In an embodiment, the electronic interface 2300 is an electronic interface of the computing device 402 that is presented via the visual display 504. In one or more embodiments, a dashboard visualization is presented via the electronic interface 2300. In certain embodiments, the data visualization presented via the electronic interface 2300 presents one or more asset insights 2302 and/or one or more notifications 2304 via the dashboard visualization associated with the electronic interface 2300. In one or more embodiments, the data visualization presented via the electronic interface 2300 includes a 3D model 2306 associated with an asset from a portfolio of assets. In one or more embodiments, one or more events associated with the 3D model 2306 can be filtered and/or information associated with the one or more events can be displayed in response to selection of one or more interactive buttons associated with the 3D model 2306.

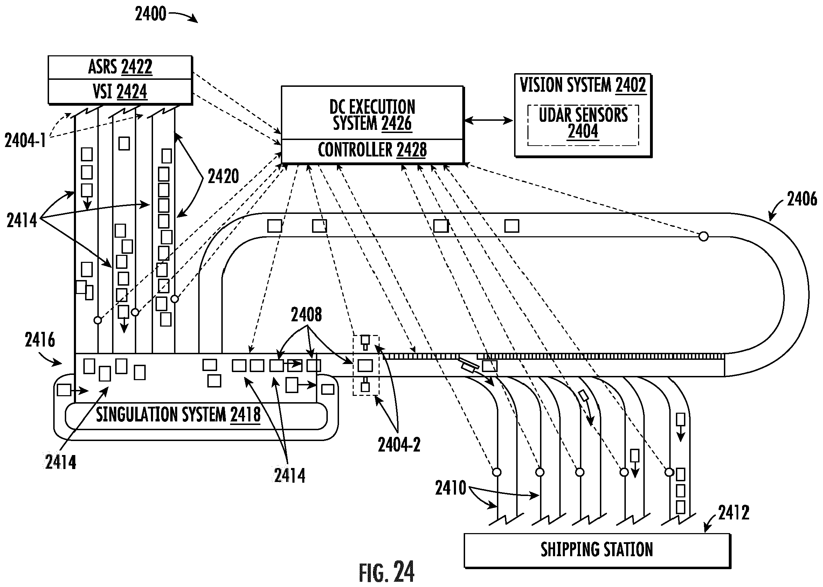

FIG. 24 illustrates a schematic view of a material handling system 2400, in accordance with one or more embodiments described herein. In one or more embodiments, the material handling system 2400 corresponds to an enterprise from the enterprises 160a-n. In one or more embodiments, the material handling system 2400 includes one or more assets from a portfolio of assets. The material handling system 2400 includes at least one vision system 2402 with one or more LiDAR based sensors 2404, according to an example embodiment. The material handling system 2400 may correspond to a material handling environment for example, but not limited to, a distribution center, a shipping station, a warehouse, an inventory, etc. According to some example embodiments, the material handling system 2400 includes one or more conveyors for handling various items such as, cartons, totes, shipping packages, boxes etc. As illustrated, the material handling system 2400 includes a sorter portion 2406 for selectively identifying, sorting and/or diverting one or more articles 2408 to one of the destinations 2410, such as, but not limited to, takeaway conveyors, chutes, and the like. In some examples, the diverted articles may be sent to shipping 2412 for shipping to a destination, for example, a store. While the example as shown in FIG. 24 may illustrate a paddle sorter, it is noted that the scope of the present disclosure is not limited to a paddle sorter. In some examples, the material handling system 2400 may include other types of sorter(s) may be implemented, including, but not limited to, pusher/puller sorters, pop-up transfer sorters, and/or cross-belt sorters.

Although the LiDAR sensors 2404 are illustrated to be located within the vision system 2402, however, according to various example embodiments described herein, multiple LiDAR based sensors are installed at various sections of the material handling system 2400. In other words, the LiDAR sensors 2404 may be positioned at various different sections (e.g. workstations) within the material handling system 2400. Further, in one or more embodiments, these LiDAR based sensors are communicatively coupled (e.g. remotely connected) to the vision system 2402, via a communication network (e.g. wireless or wired network).

Referring to FIG. 24, illustratively, a first LiDAR sensor unit 2404-1 is installed near an area corresponding to an automated storage and retrieval system (ASRS) 2422. Similarly, a second LiDAR sensor unit 2404-2 may be installed near another area corresponding to a singulation system along the sorter 2406. In another example, similar LiDAR based sensor units may be located at the shipping station 2412 or at various other positions (not shown) along the sorter 2406. Accordingly, the material handling system 2400 may include many more such LiDAR sensor units that are installed or mounted at various sections (e.g. dedicated zones) of a material handling environment. As stated before, in one or more embodiments, these sensor units are communicatively coupled to the vision system 2402, via the communication network. These LiDAR based sensor units may be capable of capturing a data stream (e.g. 3D data stream) representative of a 3D scan of that area where the respective LiDAR sensor unit is located. In one or more embodiments, the data stream is used by the vision system 2402 to monitor, one or more articles 2414, machines, and/or workers present in various sections of the material handling system 2400.

As illustrated, in one or more embodiments, the material handling system 2400 includes a sorter portion (e.g. the sorter 2406) that receives the one or more articles 2414 from an induction portion 2416. In some examples, the induction portion 2416 is associated with a singulation system 2418 that is configured to generate spacing between the one or more articles 2414. For example, the induction portion 2416 may comprise various mechanical components e.g. configurations of belt units and/or mechanical actuators with end effectors, which may create the required spacing between the one or more articles 2414. In accordance with some example embodiments, LiDAR based sensors of the LiDAR sensor unit 2404-2 may capture a 3D scan of various operations and/or activities that may be performed on the singulation system 2418.

In some examples, the induction portion 2416 receives articles 2414 from a merge portion 2420, as shown in FIG. 24. The merge portion 2420 may have multiple accumulation lanes and/or conveyors for releasing articles in a slug and/or zipper fashion onto the induction portion 2416. In some examples, the merge portion 2420 may receive the one or more articles 2414 from a receiving system and/or an automated storage and retrieval system (ASRS) 2422. Additionally, or alternatively, the merge portion 2420 may receive the one or more articles from other sources. In some example embodiments, the ASRS 2422 may also include a separate vision system (VS1) 2424 with one or more LiDAR based sensor units (similar to 2404-1, 2404-2) that may be installed at various locations within the ASRS 2422.

According to some example embodiments, the LiDAR sensors 2404 of the vision system 2402 are configured for scanning a target area of the material handling environment and generate one or more data streams. In some example embodiments, a processor of the vision system 2402 may utilize a data stream to construct 3D point cloud that may represent a 3D-scan of the target area. As an example, a data stream recorded by these LiDAR sensors may capture various operations of a material handling site e.g. movement of the one or more articles 2414, e.g. from the induction portion 2416 towards the sorter portion 2406 or from the ASRS 2422 to the merge portion 2420, and so on. Further, data streams from various LiDAR sensors 2404 may also capture operations and/or actions performed by various machines of the material handling site. For instance, in an example, the data stream may capture movement of various mechanical components e.g. conveyor belts etc. of the singulation system. Furthermore, the data streams may also capture operations performed by one or more workers in that target area.

According to some example embodiments, one or more components of the example material handling system 2400, such as, but not limited to, the sorter portion 2406, the induction portion 2416, the merge portion 2420, the vision system 2402, and/or the like, may be communicably coupled to at least one of a central system e.g., a distribution center (DC) execution system 2426 (or a warehouse management system, a labor management system, a machine control system, and/or another system) and/or a controller 2428. In one or more embodiments, the controller 2428 is configured for machine control. The term "communicably coupled" refers to two or more components (for example, but not limited to, the sorter portion 2406, the induction portion 2416, the merge portion 2420, the vision system 2402, the DC execution system 2426 and the controller 2428 as shown in FIG. 24) being connected through wired means (for example but not limited to, wired Ethernet) and/or wireless means (for example but not limited to, Wi-Fi, Bluetooth, ZigBee), such that data and/or information may be transmitted to and/or received from these components.

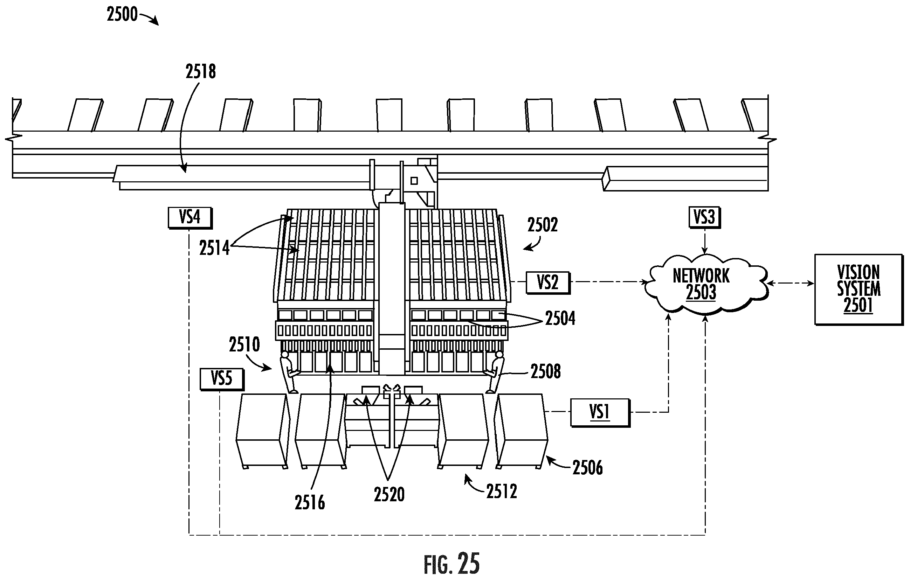

FIG. 25 illustrates a schematic view 2500 of a target area of the material handling system 2400 including the LiDAR based vision system, according to an example embodiment. The target area may correspond to an area of a distribution center (DC). In one or more embodiments, the DC may receive goods in bulk from various manufacturers, suppliers, stores, shipping stations, and the like, and may store and/or handle received goods until the goods are further picked and/or shipped. Further, the received goods may be transferred into totes and/or containers of appropriate size, shape, material, etc. for storage and/or further processing. In accordance with some example embodiments described herein, the DC may include a vision system 2501 that may be communicatively coupled, via a network 2503, to multiple LiDAR based sensor units VS1, VS2, VS3, VS4, etc., as illustrated in FIG. 25. Similar to as described earlier in reference to FIG. 24, these LiDAR based sensor units (VS1-VSn) may be capable of recording data streams including 3D scan of a target area. The network 2503 may correspond to a wired or wireless communication network. In one or more embodiments, the vision system 101 corresponds to an asset from a portfolio of assets.

Illustratively, in some example embodiments, the DC may have a replenishment area 2502 for replenishing one or more containers 2504 with goods arriving at the replenishment area 2502 in multiple stock keeping units (SKUs) 2506. The term 'replenishment area' as used herein may refer to an area, system, workstation, and the like in the DC for transferring goods from the multiple SKUs 2506 into one or more containers 2504. The replenishment area 2502 may have a collaborative system of multiple material handling devices and systems, such as, but not limited to, infeed conveyors, outfeed conveyors, goods to operator workstations, devices, staging units, and the like. Transferring goods from an SKU into the containers 2504 may be automated, for example, may be done by a robotic tool, and/or may be a manual process carried out by an operator, such as operators 2508 and 2510, as shown in FIG. 25. In accordance with some example embodiments described herein, one or more LiDAR based sensors are associated with the replenishment area 2502 to perform a 3D scan that captures activities, operations, devices, and/or workers in the replenishment area 2502. Accordingly, in one or more embodiments, there are multiple vision systems that may be associated with different sections of the DC. In one or more embodiments, these vision systems employ LiDAR based sensors to record the activities related to operators, items, and/or machines within the respective section. As an example, as illustrated in FIG. 25, a vision system unit VS2 with one or more LiDAR sensors 204 is associated with the replenishment area 2502.

According to said example embodiments, an SKU 2506 may include goods of a similar type, size, shape, and/or any other common characteristic. In an embodiment, one or more SKUs 2506 may be grouped together and stacked on a pallet 2512, as shown in FIG. 25. The SKUs 2506 may be grouped based on a common characteristic, such as type of goods. Additionally, or alternatively, mixed SKUs 2506 may be grouped randomly and placed on the pallet 2512. The SKUs 2506 may be grouped and stacked on the pallet 2512 at the DC for ease of handling. In some embodiments, each SKU 2506 and each pallet 2512 may include a respective identifier (e.g. a barcode label, RFID tag) that is scanned at the replenishment area 2502. The scanned information indicates, in one or more embodiments, a location of the pallet 2512 at the replenishment area 2502. In some example embodiments, one or more LiDAR based sensor units may also be located in the DC to perform 3D scan of an area including the SKUs 2506 and/or pallets 2512. Illustratively, in an example, two vision system units VS1 and VS4 with LiDAR sensors may be located to track activities, operations, and/or characteristics associated with the SKUs 2506 and/or the pallets 2512.

In accordance with one or more embodiments, the replenishment area 2502 includes a gravity flow rack 2514 for staging and/or conveying one or more containers 2504. Further, the replenishment area 2502 may include multiple replenishment zones. The gravity flow rack 2514 may be placed between different replenishment zones, such that the gravity flow rack 2514 may convey replenished containers from a first replenishment zone 2516 to a second replenishment zone 2518 and convey empty containers back from the second replenishment zone 2518 to the first replenishment zone 2516. The gravity flow rack 2514 may also function as a staging area for the empty and/or filled containers 2504 until the containers 2504 are handled by the operator 2508 and/or a robotic tool. In accordance with some example embodiments, the vision system unit VS2 may scan the area including the gravity flow rack 2514.

The replenishment area 2502 may further include one or more devices 2520. The devices 2520 may refer to any portable and/or fixed device (e.g. a human machine interface HMI) that may be communicably coupled to a central controller (e.g. the controller 2428). In some examples, the devices 2520 may include an input/output interface which may be used for assisting the operator 2508 in the replenishment process. According one or more embodiments, the devices 2520 correspond to or include for example, but not limited to, scanners, imagers, displays, computers, communication devices, headsets, and the like. According to some example embodiments, the devices 2520 may further receive data, commands, workflows, etc. from the central controller and/or any other device that may be communicably coupled to the devices 2520. According to some example embodiments, the vision system units VS1 and VS5 using the LiDAR based sensors may perform a 3D scan of area including the one or more devices 2520.

According to some example embodiments, the data stream captured by the vision system 2501 may monitor various activities, operations, individuals, and/or equipment in the DC. For instance, the data stream may be used to monitor arrival of the pallets 2512 having one or more SKUs 2506 at the replenishment area 2502 of the DC. Further, the data stream may monitor scanning of a pallet identifier and/or an SKU identifier using the devices 2520 by any of the operators 2508 and/or 2510. In some example embodiments, the data stream captured by the LiDAR sensors 204 of the vision system 2501 may also include an operation by a robotic tool (not shown) and/or the operators (2508, 2510) to pick one or more of the containers 2504 on the gravity flow rack 2514 for replenishing the one or more containers 2504 with the goods that may be in the SKU 2506 and/or the pallet 2512. Further, in some example embodiments, the data stream captured by the LiDAR sensors 204 of the vision system units VS2, VS3, and/or VS4 may include conveyance or movement of the one or more containers 2504 that may be on the gravity flow rack 2514. In this aspect, the containers 2504 may be conveyed from the first replenishment zone 2516 to the second replenishment zone 2518 through the gravity flow rack 2514. In some example embodiments, the data stream may also include monitoring of empty container(s) that may be placed on the gravity flow rack 2514 for transferring back to the first replenishment zone 2516 for receiving goods from a next SKU and/or pallet. In an example embodiment, the data stream also includes movement of some containers to one or more shuttle totes that can be moved for storing goods in an Automated Storage and Retrieval System (ASRS) in the DC.

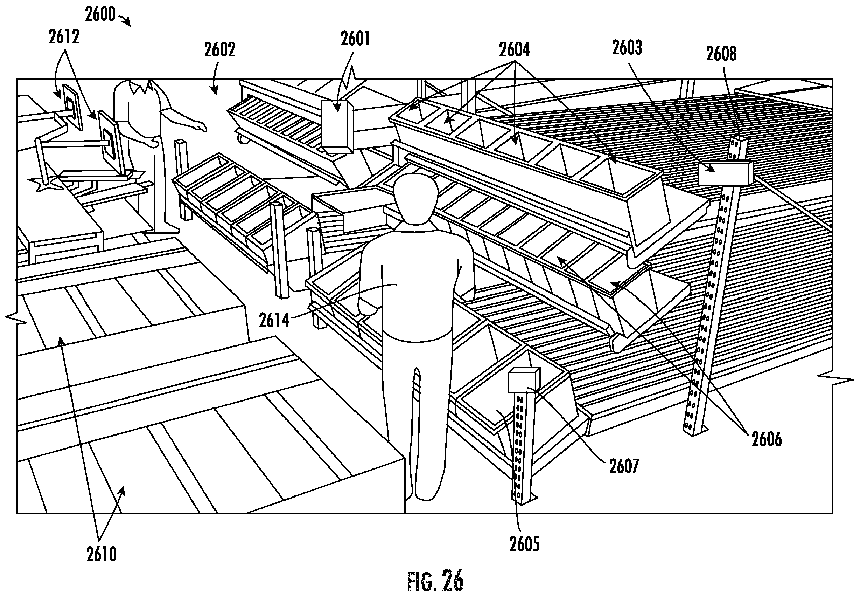

FIG. 26 illustrates an example scenario 2600 depicting monitoring of an operation performed by a worker in a material handling environment by using LiDAR based vision system (e.g. the vision system 2402), according to an example embodiment. In some example embodiments, the operation may be performed in a replenishment zone of a distribution center. FIG. 26 illustrates an example of a replenishment zone 2602 of a distribution center. As described earlier, in one or more embodiments, a material handling environment includes a plurality of vision systems. Illustratively, in some example embodiments, a distribution center DC includes a plurality of vision systems (2601, 2603, 2607 etc.). Each of these vision systems (2601-2607) include one or more LiDAR based sensors that may be installed and/or mounted at various sections of the material handling environment. In this aspect, each of these vision systems 2601-2607 are capable of capturing a data stream (i.e. a 3D scan) of a target area. In one or more embodiments, the vision systems 2601-2607 correspond to respective assets from a portfolio of assets.

According to some example embodiments, the operation monitored by using LiDAR based vision systems corresponds to replenishing of one or more containers. The containers may be placed on a gravity flow rack 2608 and, in one or more embodiments, is replenished with goods from the one or more SKUs 2610 that may be arriving at a replenishment area of the replenishment zone 2602. According to some example embodiments, there may be different sizes of containers for replenishment in the DC. For instance, a first set of containers 2604 may be of moderate size, whereas a second set of containers 2606 may be smaller than the first set of containers 2604, and a third set of containers 2605 may be larger than containers of the first set of containers 2604. In one or more embodiments, the replenishment of containers is based on a size of the containers. According to one or more embodiments, each of the containers 2604, 2606, 2605 have an associated container identifier (not shown). The container identifier may refer to a unique identifier that may be used to identify a particular container, such as, but not limited to, a serial number, a barcode label, RFID tag, etc. The container identifier may include information regarding the container, such as, but not limited to, type, size, capacity, weight, shape, and the like.

In accordance with said example embodiments, a container identifier for a container may be scanned before performing each replenishment operation for that container. By scanning the container identifier, a central controller (e.g. the controller 2428) and/or any other computing device in the DC, may track an occupied volume of the container. Further, based on this information, the central controller may calculate a current capacity i.e. based on a maximum capacity of the container and the occupied volume. Said that, in accordance with said example embodiments, to maximize storage capacity and overall efficiency, it may be desired to pick appropriately sized container(s) from various sized containers for storing goods from the SKUs 2610.

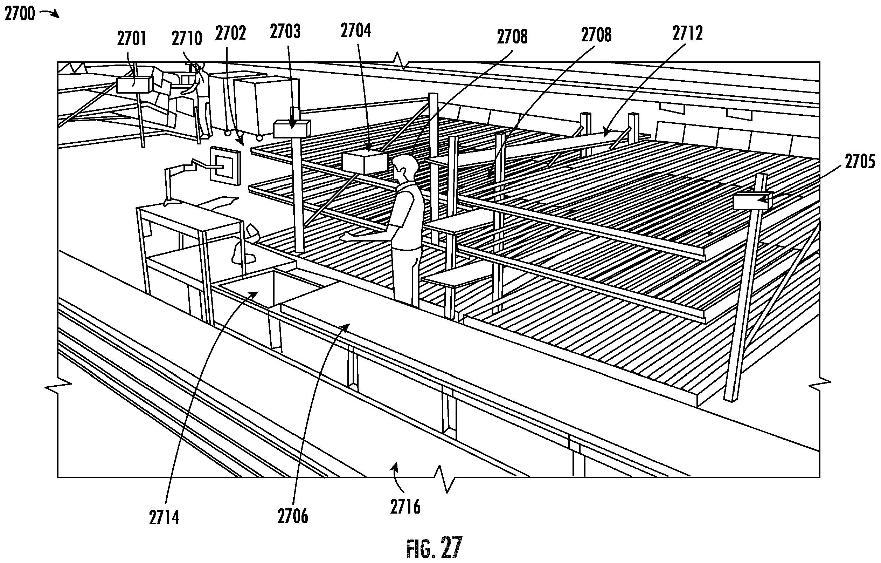

FIG. 27 illustrates another example scenario 2700 depicting another operation performed in a material handling environment that is monitored by using LiDAR based vision system (e.g. the vision system 2402), according to an example embodiment. FIG. 27 illustrates a perspective view of a second replenishment zone 2702 of the distribution center (DC), in accordance with one or more embodiments of the present disclosure. Illustratively, in some example embodiments, a distribution center DC includes a plurality of vision systems (2701, 2703, 2705 etc.). Each of these vision systems (2701-2705) includes one or more LiDAR based sensors that may be installed and/or mounted at various sections of the material handling environment. In this aspect, each of these vision systems 2701-2705 is configured to capture a data stream (i.e. a 3D scan) of a target area. In one or more embodiments, the plurality of vision systems (2701-2705) correspond to respective assets from a portfolio of assets. In accordance with some example embodiments, the data stream from the LiDAR sensor-based vision system captures an operation related to a replenishment process in the second replenishment zone 2702.

According to some example embodiments, a replenishment process illustrated in FIG. 27 includes replenishing of one or more containers from a second set of containers 2704 with goods from the replenished first set of containers 2706 that may be arriving at the second replenishment zone 2702 (e.g. through the gravity flow rack 2708). In some example embodiments, the second set of containers 2704 may correspond to shuttle totes used in an ASRS (e.g., the ASRS 2422) that may be having multiple compartments of different size. The shuttle totes may be partially filled or empty and may be used to store goods in a storage facility, such as the ASRS 2422 as illustrated in FIG. 24.

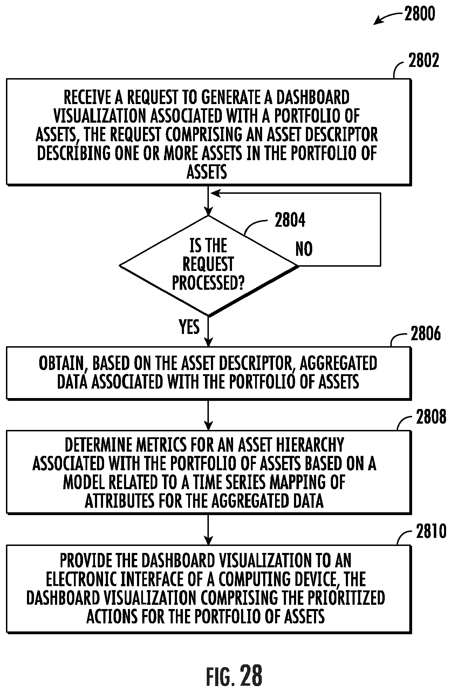

FIG. 28 illustrates a method 2800 for creating create a dashboard visualization of metrics for an asset hierarchy associated with a portfolio of assets, in accordance with one or more embodiments described herein. The method 2800 is associated with the asset performance management computer system 302, for example. For instance, in one or more embodiments, the method 2800 is executed at a device (e.g. the asset performance management computer system 302) with one or more processors and a memory. In one or more embodiments, the method 2800 begins at block 2802 that receives (e.g., by the metrics engine component 306 and/or the dashboard visualization component 308) a request to generate a dashboard visualization associated with a portfolio of assets, the request comprising an asset descriptor describing one or more assets in the portfolio of assets. The request to generate the dashboard visualization provides one or more technical improvements such as, but not limited to, facilitating interaction with a computing device and/or extended functionality for a computing device.

At block 2804, it is determined whether the request is processed. If no, block 2804 is repeated to determine whether the request is processed. If yes, the method 2800 proceeds to block 2806. In response to the request, block 2806 that obtains, based on the asset descriptor, aggregated data associated with the portfolio of assets. The obtaining the aggregated data based on the asset descriptor provides one or more technical improvements such as, but not limited to, extended functionality for a computing device.

The method 2800 also includes a block 2808 that, in response to the request, determines (e.g., by the metrics engine component 306) metrics for an asset hierarchy associated with the portfolio of assets based on a model related to a time series mapping of attributes for the aggregated data. The determining the metrics for the asset hierarchy provides one or more technical improvements such as, but not limited to, improving accuracy of the dashboard visualization.

The method 2800 also includes a block 2810 that, in response to the request, provides (e.g., by the dashboard visualization component 308) the dashboard visualization to an electronic interface of a computing device, the dashboard visualization comprising the metrics for an asset hierarchy associated with the portfolio of assets. The providing the dashboard visualization with the metrics provides one or more technical improvements such as, but not limited to, what and/or how to present information via a computing device.

In one or more embodiments, the request additionally or alternatively includes a user identifier describing a user role for a user associated with access of the dashboard visualization via the electronic interface. Furthermore, in one or more embodiments, the obtaining the aggregated data additionally or alternatively includes obtaining the aggregated data based on the user identifier. The obtaining the aggregated data based on the user identifier provides one or more technical improvements such as, but not limited to, extended functionality for a computing device. In one or more embodiments, the method 2800 also includes configuring the dashboard visualization based on the user identifier. The configuring the dashboard visualization based on the user identifier provides one or more technical improvements such as, but not limited to, what and/or how to present information via a computing device.

In one or more embodiments, the request additionally or alternatively includes a metrics context identifier describing context for the metrics. Furthermore, in one or more embodiments, the obtaining the aggregated data includes obtaining the aggregated data based on the metrics context identifier. The obtaining the aggregated data based on the metrics context identifier provides one or more technical improvements such as, but not limited to, extended functionality for a computing device. In one or more embodiments, different types of aggregates such as maximum, minimum, count, sum, and/or average are supported. Additionally, in one or more embodiments, a calculation is custom defined based on the metrics being aggregated at different levels to, for example, provide improved extensibility.

In one or more embodiments, the request additionally or alternatively includes a time interval identifier (e.g., a reporting time interval identifier) describing an interval of time for the metrics. Furthermore, in one or more embodiments, the obtaining the aggregated data includes obtaining the aggregated data based on the time interval identifier (e.g., the reporting time interval identifier). The obtaining the aggregated data based on the time interval identifier (e.g., the reporting time interval identifier) provides one or more technical improvements such as, but not limited to, extended functionality for a computing device.

In one or more embodiments, the method 2800 also includes determining a list of prioritized actions for the portfolio of assets based on the metrics. Additionally, in one or more embodiments, the method 2800 also includes providing the list of prioritized actions to the electronic interface via the dashboard visualization. The providing the list of prioritized actions to the electronic interface provides one or more technical improvements such as, but not limited to, what and/or how to present information via a computing device.

In one or more embodiments, the determining the metrics includes determining the metrics for different hierarchy level of assets. Furthermore, in one or more embodiments, the providing the dashboard visualization includes providing the metrics for the different hierarchy level of assets. The providing the metrics for the different hierarchy level of assets provides one or more technical improvements such as, but not limited to, what and/or how to present information via a computing device.

In one or more embodiments, the method 2800 also includes aggregating multiple types of metrics for the portfolio of assets based on the aggregated data. The aggregating the multiple types of metrics provides one or more technical improvements such as, but not limited to, improving accuracy of the dashboard visualization.

In one or more embodiments, the method 2800 also includes determining an alerts list associated with one or more recommendations for the portfolio of assets based on the metrics. Additionally, in one or more embodiments, the method 2800 also includes providing the alerts list to the electronic interface via the dashboard visualization. The providing the alerts list to the electronic interface provides one or more technical improvements such as, but not limited to, what and/or how to present information via a computing device.

In one or more embodiments, the method 2800 also includes modeling of the aggregated data based on different hierarchy level of assets. The modeling of the aggregated data provides one or more technical improvements such as, but not limited to, extending functionality of the dashboard visualization.

In one or more embodiments, the method 2800 also includes configuring the dashboard visualization to facilitate viewing of performance of the portfolio of assets with respect to different hierarchy level of assets. The providing the configuring the dashboard visualization provides one or more technical improvements such as, but not limited to, extending functionality of the dashboard visualization and providing what and/or how to present information via a computing device.

In one or more embodiments, the method 2800 also includes mapping the attributes for the aggregated data via a dynamic cache that stores the attributes for the aggregated data. The dynamic cache provides one or more technical improvements such as, but not limited to, faster storage via the dynamic cache, improving accuracy of the metrics provided via the dashboard visualization, and improving efficiency of storage of data and/or retrieval of data for the dashboard visualization.

In one or more embodiments, the method 2800 also includes dynamically caching the aggregated data in a dynamic cache based on different hierarchy level of assets. The dynamic caching provides one or more technical improvements such as, but not limited to, faster storage via the dynamic cache, improving accuracy of the metrics provided via the dashboard visualization, and improving efficiency of storage of data and/or retrieval of data for the dashboard visualization.

In one or more embodiments, the method 2800 also includes configuring the dashboard visualization to provide individual control of the one or more assets in the portfolio of assets via the dashboard visualization. The control of the one or more assets provides one or more technical improvements such as, but not limited to, necessary interaction with the dashboard visualization and/or improved performance of the one or more assets.

In one or more embodiments, the method 2800 also includes configuring the dashboard visualization to facilitate creation of one or more work orders for the one or more assets in the portfolio of assets. The creation of the one or more work orders provides one or more technical improvements such as, but not limited to, necessary interaction with the dashboard visualization and/or improved performance of the one or more assets.

In one or more embodiments, the method 2800 also includes configuring the metrics across different hierarchy instances. The configuring the metrics provides one or more technical improvements such as, but not limited to, improving accuracy of the dashboard visualization. In one or more embodiments, the configuring the metrics comprises selecting one or more metrics for presentation via the dashboard visualization. In one or more embodiments, the configuring the metrics additionally or alternatively comprises configuring a view of the metrics via the dashboard visualization. For example, in one or more embodiments, metrics rollup across different hierarchy instances is dynamically configured, one or more exclusions with respect to the metrics is determined, different views with respect to the metrics are dynamically configured, and/or metrics rollup calculation of the metrics is dynamically configured. In one or more embodiments, the configuring the metrics additionally or alternatively comprises performing a metrics calculation in real-time with respect to presentation of the metrics via the dashboard visualization. In one or more embodiments, the configuring the metrics additionally or alternatively comprises providing current metrics data and historical trend data for the asset hierarchy associated with the portfolio of assets. For example, in one or more embodiments, metrics calculation and/or rollup is provided in real time to provide, for example, accurate aggregated metrics values with reduced storage requirements (e.g., min 67 values for 1 year) and/or to provide visualization of current metric and historical trends related to the portfolio of assets.

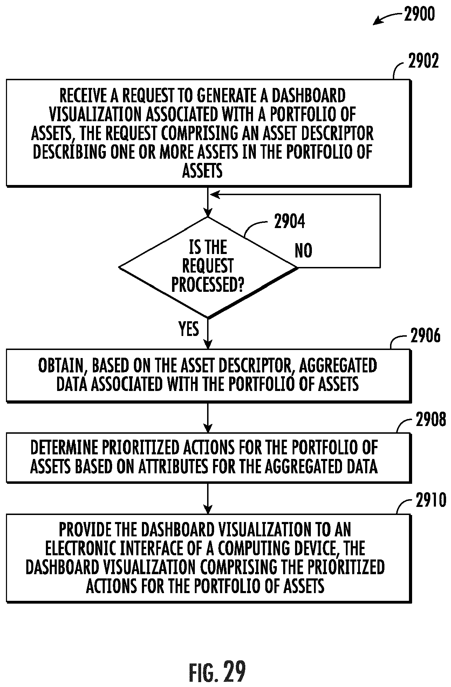

FIG. 29 illustrates a method 2900 for aggregating data across a portfolio of assets to create a dashboard visualization of prioritized actions for the portfolio of assets, in accordance with one or more embodiments described herein. The method 2900 is associated with the asset performance management computer system 302, for example. For instance, in one or more embodiments, the method 2900 is executed at a device (e.g. the asset performance management computer system 302) with one or more processors and a memory. In one or more embodiments, the method 2900 begins at block 2902 that receives (e.g., by the prioritized actions component 326 and/or the dashboard visualization component 308) a request to generate a dashboard visualization associated with a portfolio of assets, the request comprising an asset descriptor describing one or more assets in the portfolio of assets. The request to generate the dashboard visualization provides one or more technical improvements such as, but not limited to, facilitating interaction with a computing device and/or extended functionality for a computing device.

At block 2904, it is determined whether the request is processed. If no, block 2904 is repeated to determine whether the request is processed. If yes, the method 2900 proceeds to block 2906. In response to the request, block 2906 that obtains, based on the asset descriptor, aggregated data associated with the portfolio of assets. The obtaining the aggregated data based on the asset descriptor provides one or more technical improvements such as, but not limited to, extended functionality for a computing device.

The method 2900 also includes a block 2908 that, in response to the request, determines (e.g., by the prioritized actions component 326) prioritized actions for the portfolio of assets based on attributes for the aggregated data. The determining the prioritized actions for the portfolio of assets provides one or more technical improvements such as, but not limited to, improving accuracy of the dashboard visualization. In one or more embodiments, the determining the prioritized actions for the portfolio of assets includes determining the prioritized actions for the portfolio of assets based on a digital twin model associated with one or more assets from the portfolio of assets. Additionally or alternatively, in one or more embodiments, the determining the prioritized actions for the portfolio of assets includes determining the prioritized actions for the portfolio of assets based on a digital twin model associated with an operator identity associated with one or more assets from the portfolio of assets.

The method 2900 also includes a block 2910 that, in response to the request, provides (e.g., by the dashboard visualization component 308) the dashboard visualization to an electronic interface of a computing device, the dashboard visualization comprising the prioritized actions for the portfolio of assets. The providing the dashboard visualization with the prioritized actions for the portfolio of assets provides one or more technical improvements such as, but not limited to, what and/or how to present information via a computing device.

In one or more embodiments, the request additionally or alternatively includes a user identifier describing a user role for a user associated with access of the dashboard visualization via the electronic interface. Furthermore, in one or more embodiments, the obtaining the aggregated data additionally or alternatively includes obtaining the aggregated data based on the user identifier. The obtaining the aggregated data based on the user identifier provides one or more technical improvements such as, but not limited to, extended functionality for a computing device. In one or more embodiments, the method 2900 also includes configuring the dashboard visualization based on the user identifier. The configuring the dashboard visualization based on the user identifier provides one or more technical improvements such as, but not limited to, what and/or how to present information via a computing device.

In one or more embodiments, the request additionally or alternatively includes a metrics context identifier describing context for metrics. Furthermore, in one or more embodiments, the obtaining the aggregated data includes obtaining the aggregated data based on the metrics context identifier. The obtaining the aggregated data based on the metrics context identifier provides one or more technical improvements such as, but not limited to, extended functionality for a computing device. In one or more embodiments, different types of aggregates such as maximum, minimum, count, sum, and/or average are supported. Additionally, in one or more embodiments, a calculation is custom defined based on the metrics being aggregated at different levels to, for example, provide improved extensibility.

In one or more embodiments, the request additionally or alternatively includes a time interval identifier (e.g., a reporting time interval identifier) describing an interval of time for the metrics. Furthermore, in one or more embodiments, the obtaining the aggregated data includes obtaining the aggregated data based on the time interval identifier (e.g., the reporting time interval identifier). The obtaining the aggregated data based on the time interval identifier (e.g., the reporting time interval identifier) provides one or more technical improvements such as, but not limited to, extended functionality for a computing device.

In one or more embodiments, the method 2900 also includes grouping the prioritized actions for the portfolio of assets based on relationships between the aggregated data, the dashboard visualization configuring the prioritized actions based on the grouping of the prioritized actions for the portfolio of assets. The grouping the prioritized actions provides one or more technical improvements such as, but not limited to, what and/or how to present information via a computing device.

In one or more embodiments, the method 2900 also includes ranking, based on impact of respective prioritized actions with respect to the portfolio of assets, the prioritized actions to generate a list of the prioritized actions. Additionally or alternatively, in one or more embodiments, the method 2900 also includes providing the list of the prioritized actions to the electronic interface via the dashboard visualization. The ranking provides one or more technical improvements such as, but not limited to, what and/or how to present information via a computing device.

In one or more embodiments, the method 2900 also includes determining a list of the prioritized actions for the portfolio of assets based on metrics associated with the aggregated data. Additionally or alternatively, in one or more embodiments, the method 2900 also includes providing the list of prioritized actions to the electronic interface via the dashboard visualization. The determining the list of the prioritized actions provides one or more technical improvements such as, but not limited to, what and/or how to present information via a computing device.

In one or more embodiments, the method 2900 also includes determining a list of prioritized actions for the portfolio of assets based on the metrics. Additionally, in one or more embodiments, the method 2900 also includes providing the list of prioritized actions to the electronic interface via the dashboard visualization. The providing the list of prioritized actions to the electronic interface provides one or more technical improvements such as, but not limited to, what and/or how to present information via a computing device.

In one or more embodiments, the determining the metrics includes determining the metrics for different hierarchy level of assets. Furthermore, in one or more embodiments, the providing the dashboard visualization includes providing the metrics for the different hierarchy level of assets. The providing the metrics for the different hierarchy level of assets provides one or more technical improvements such as, but not limited to, what and/or how to present information via a computing device.

In one or more embodiments, the method 2900 also includes aggregating multiple types of metrics for the portfolio of assets based on the aggregated data. The aggregating the multiple types of metrics provides one or more technical improvements such as, but not limited to, improving accuracy of the dashboard visualization.

In one or more embodiments, the method 2900 also includes determining an alerts list associated with one or more recommendations for the portfolio of assets based on the prioritized actions for the portfolio of assets. Additionally, in one or more embodiments, the method 2900 also includes providing the alerts list to the electronic interface via the dashboard visualization. The providing the alerts list to the electronic interface provides one or more technical improvements such as, but not limited to, what and/or how to present information via a computing device.

In one or more embodiments, the method 2900 also includes modeling of the aggregated data based on different hierarchy level of assets. The modeling of the aggregated data provides one or more technical improvements such as, but not limited to, extending functionality of the dashboard visualization.

In one or more embodiments, the method 2900 also includes configuring the dashboard visualization to facilitate viewing of performance of the portfolio of assets with respect to different hierarchy level of assets. The providing the configuring the dashboard visualization provides one or more technical improvements such as, but not limited to, extending functionality of the dashboard visualization and providing what and/or how to present information via a computing device.

In one or more embodiments, the method 2900 also includes configuring the dashboard visualization to provide individual control of the one or more assets in the portfolio of assets via the dashboard visualization. The control of the one or more assets provides one or more technical improvements such as, but not limited to, necessary interaction with the dashboard visualization and/or improved performance of the one or more assets.

In one or more embodiments, the method 2900 also includes configuring the dashboard visualization to facilitate creation of one or more work orders for the one or more assets in the portfolio of assets. The creation of the one or more work orders provides one or more technical improvements such as, but not limited to, necessary interaction with the dashboard visualization and/or improved performance of the one or more assets.

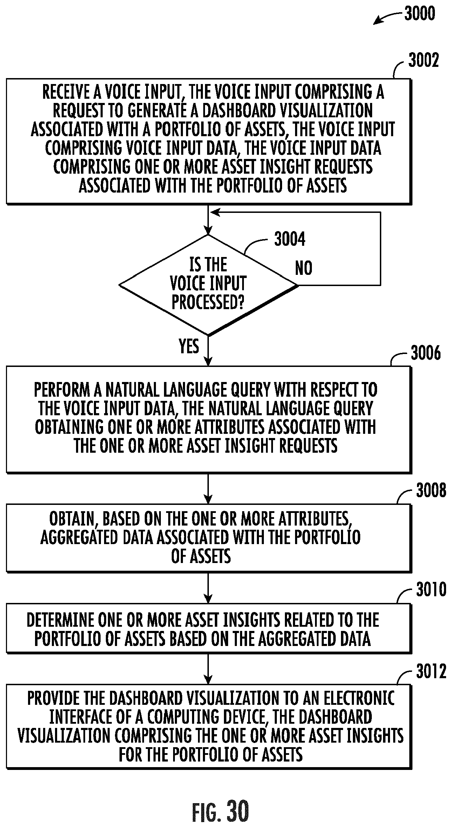

FIG. 30 illustrates a method 3000 for performing a natural language query to obtain data across a portfolio of assets and to create a dashboard visualization report for the portfolio of assets, in accordance with one or more embodiments described herein. The method 3000 is associated with the asset performance management computer system 302, for example. For instance, in one or more embodiments, the method 3000 is executed at a device (e.g., the asset performance management computer system 302) with one or more processors and a memory. In one or more embodiments, the method 3000 begins at block 3002 that receives (e.g., by the virtual assistant component 336 and/or the dashboard visualization component 308) a voice input, the voice input comprising a request to generate a dashboard visualization associated with a portfolio of assets, the voice input comprising voice input data, the voice input data comprising one or more asset insight requests associated with the portfolio of assets. The voice input provides one or more technical improvements such as, but not limited to, facilitating interaction with a computing device and/or extended functionality for a computing device.

At block 3004, it is determined whether the request is processed. If no, block 3004 is repeated to determine whether the voice input is processed. If yes, the method 3000 proceeds to block 3006. In response to the voice input, the method 3000 includes a block 3006 that performs (e.g., by the virtual assistant component 336) a natural language query with respect to the voice input data, the natural language query obtaining one or more attributes associated with the one or more asset insight requests. The natural language query provides one or more technical improvements such as, but not limited to, extended functionality for a computing device and/or improving accuracy of a dashboard visualization.

In certain embodiments, the performing the natural language query comprises querying a natural language database based on the voice input to determine the one or more attributes associated with the one or more asset insight requests. In certain embodiments, the performing the natural language query comprises classifying one or more portions of the voice input with a tag to determine the one or more attributes associated with the one or more asset insight requests. In certain embodiments, the performing the natural language query comprises performing a fuzzy matching technique with respect to the voice input data to determine the one or more attributes associated with the one or more asset insight requests. In certain embodiments, the performing the natural language query comprises providing the voice input data to a neural network model configured for determining the one or more attributes associated with the one or more asset insight requests. In certain embodiments, the performing the natural language query comprises obtaining one or more asset identifiers associated with the one or more asset insight requests, and the obtaining the aggregated data comprising obtaining the aggregated data based on the one or more asset identifiers. In certain embodiments, the performing the natural language query comprises obtaining time data associated with the one or more asset insight requests, and the obtaining the aggregated data comprising obtaining the aggregated data based on the time data.

The method 3000 also includes a block 3008 that, in response to the voice input, obtains (e.g., by the virtual assistant component 336) aggregated data associated with the portfolio of assets abed on the one or more attributes. The obtaining the aggregated data provides one or more technical improvements such as, but not limited to, improving accuracy of the dashboard visualization. In certain embodiments, the obtaining the aggregated data comprising grouping, based on the one or more attributes, the aggregated data based on one or more relationships between assets from the portfolio of assets. In certain embodiments, the obtaining the aggregated data comprising aggregating first output data from the first model and second output data from the second model to determine at least a portion of the aggregated data.

The method 3000 also includes a block 3010 that, in response to the voice input, determines (e.g., by the virtual assistant component 336) one or more asset insights related to the portfolio of assets based on the aggregated data. The determining the one or more asset insights provides one or more technical improvements such as, but not limited to, improving accuracy of the dashboard visualization.

The method 3000 also includes a block 3012 that, in response to the voice input, provides (e.g., by the dashboard visualization component 308) the dashboard visualization to an electronic interface of a computing device, the dashboard visualization comprising the one or more asset insights for the portfolio of assets. The providing the dashboard visualization with the prioritized actions for the portfolio of assets provides one or more technical improvements such as, but not limited to, what and/or how to present information via a computing device.

In certain embodiments, the providing the dashboard visualization comprises providing a dashboard visualization element configured to present sensor data related to the portfolio of assets. In certain embodiments, the providing the dashboard visualization comprises providing a dashboard visualization element configured to present control data related to the portfolio of assets. In certain embodiments, the providing the dashboard visualization comprises providing a dashboard visualization element configured to present labor management data related to the portfolio of assets. In certain embodiments, the providing the dashboard visualization comprises providing a dashboard visualization element configured to present warehouse execution data related to the portfolio of assets. In certain embodiments, the providing the dashboard visualization comprises providing a dashboard visualization element configured to present inventory data related to the portfolio of assets.

In certain embodiments, the providing the dashboard visualization comprises providing a list of prioritized actions for the portfolio of assets based on the one or more asset insights. In certain embodiments, the providing the dashboard visualization comprises providing one or more metrics for the portfolio of assets based on the one or more asset insights. In certain embodiments, the method 3000 additionally or alternatively includes determining one or more actions associated with the portfolio of assets based on the one or more metrics. In certain embodiments, the providing the dashboard visualization comprises providing an alerts list associated with the one or more asset insights for the portfolio of assets. In certain embodiments, the method 3000 additionally or alternatively includes configuring the dashboard visualization based on the one or more attributes associated with the voice input. In certain embodiments, the method 3000 additionally or alternatively includes configuring the dashboard visualization for remote control of one or more assets from the portfolio of assets based on the one or more attributes associated with the voice input.

In certain embodiments, the method 3000 additionally or alternatively includes configuring a 3D model of an asset from the portfolio of assets for the dashboard visualization based on the one or more attributes associated with the voice input. In certain embodiments, the method 3000 additionally or alternatively includes filtering one or more events associated with the asset related to the 3D model based on the one or more attributes associated with the voice input. In certain embodiments, the method 3000 additionally or alternatively includes configuring the dashboard visualization for real-time collaboration between two or more computing devices based on the one or more attributes associated with the voice input. In certain embodiments, the method 3000 additionally or alternatively includes applying the one or more attributes to at least a first model associated with a first type of asset insight and a second model associated with a second type of asset insight.

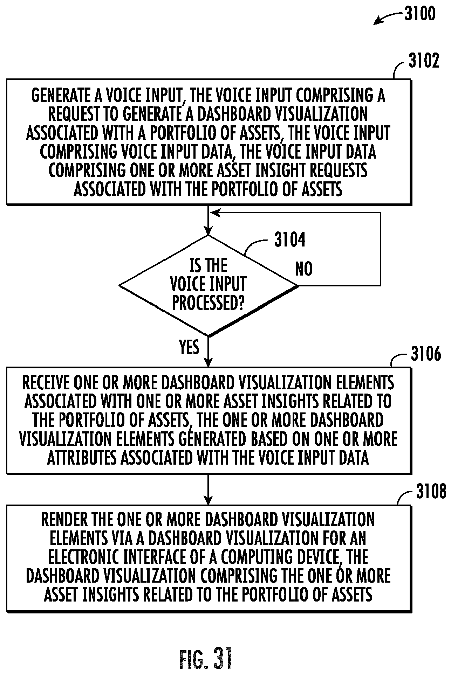

FIG. 31 illustrates a method 3100 for generating a voice input to create a dashboard visualization report for a portfolio of assets, in accordance with one or more embodiments described herein. The method 3100 is associated with the computing device 402, for example. For instance, in one or more embodiments, the method 3100 is executed at a device (e.g., the computing device 402) with one or more processors and a memory. In one or more embodiments, the method 3100 begins at block 3102 that generates (e.g., by the computing device 402) a voice input, the voice input comprising a request to generate a dashboard visualization associated with a portfolio of assets, the voice input comprising voice input data, the voice input data comprising one or more asset insight requests associated with the portfolio of assets. The voice input provides one or more technical improvements such as, but not limited to, facilitating interaction with a computing device and/or extended functionality for a computing device.

At block 3104, it is determined whether the request is processed. If no, block 3104 is repeated to determine whether the voice input is processed. If yes, the method 3100 proceeds to block 3106. In response to the voice input, the method 3100 includes a block 3106 that receives (e.g., by the computing device 402) one or more dashboard visualization elements associated with one or more asset insights related to the portfolio of assets, the one or more dashboard visualization elements generated based on one or more attributes associated with the voice input data. The one or more dashboard visualization elements provide one or more technical improvements such as, but not limited to, extended functionality for a computing device and/or improving accuracy of a dashboard visualization.

The method 3100 includes a block 3108 that, in response to the voice input, renders (e.g., by the computing device 402) the one or more dashboard visualization elements via the dashboard visualization for an electronic interface of a computing device, the dashboard visualization comprising the one or more asset insights related to the portfolio of assets. The rendering the one or more dashboard visualization elements provides one or more technical improvements such as, but not limited to, what and/or how to present information via a computing device.

In certain embodiments, the rendering the one or more dashboard visualization elements comprises rendering a dashboard visualization element configured to present sensor data related to the portfolio of assets. In certain embodiments, the rendering the one or more dashboard visualization elements comprises rendering a dashboard visualization element configured to present control data related to the portfolio of assets. In certain embodiments, the rendering the one or more dashboard visualization elements comprises rendering a dashboard visualization element configured to present labor management data related to the portfolio of assets. In certain embodiments, the rendering the one or more dashboard visualization elements comprises rendering a dashboard visualization element configured to present warehouse execution data related to the portfolio of assets. In certain embodiments, the rendering the one or more dashboard visualization elements comprises rendering a dashboard visualization element configured to present inventory data related to the portfolio of assets.

In certain embodiments, the rendering the dashboard visualization comprises rendering a list of prioritized actions for the portfolio of assets. In certain embodiments, the rendering the dashboard visualization comprises rendering a visualization associated with one or more metrics for the portfolio of assets. In certain embodiments, the method 3100 additionally or alternatively includes initiating one or more actions associated with the portfolio of assets via the dashboard visualization. In certain embodiments, the rendering the dashboard visualization comprises rendering an alerts list associated with the one or more asset insights for the portfolio of assets. In certain embodiments, the method 3100 additionally or alternatively includes providing remote control of one or more assets from the portfolio of assets via the dashboard visualization

In certain embodiments, the rendering the dashboard visualization comprises rendering a 3D model of an asset from the portfolio of assets for the dashboard visualization. In certain embodiments, the rendering the dashboard visualization comprises rendering a visualization associated with one or more events for the asset related to the 3D model. In certain embodiments, the method 3100 additionally or alternatively includes initiating real-time collaboration between two or more computing devices via the dashboard visualization.

In some example embodiments, certain ones of the operations herein can be modified or further amplified as described below. Moreover, in some embodiments additional optional operations can also be included. It should be appreciated that each of the modifications, optional additions or amplifications described herein can be included with the operations herein either alone or in combination with any others among the features described herein.

The foregoing method descriptions and the process flow diagrams are provided merely as illustrative examples and are not intended to require or imply that the steps of the various embodiments must be performed in the order presented. As will be appreciated by one of skill in the art the order of steps in the foregoing embodiments can be performed in any order. Words such as "thereafter," "then," "next," etc. are not intended to limit the order of the steps; these words are simply used to guide the reader through the description of the methods. Further, any reference to claim elements in the singular, for example, using the articles "a," "an" or "the" is not to be construed as limiting the element to the singular.

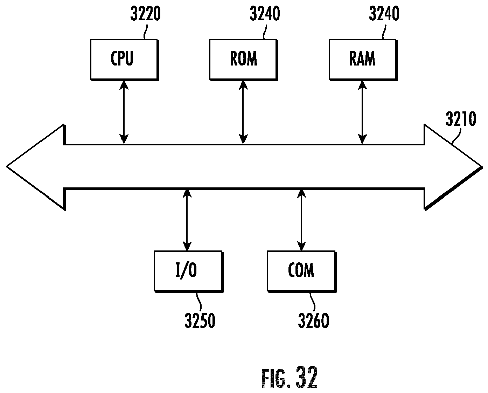

FIG. 32 depicts an example system 3200 that may execute techniques presented herein. FIG. 32 is a simplified functional block diagram of a computer that may be configured to execute techniques described herein, according to exemplary embodiments of the present disclosure. Specifically, the computer (or "platform" as it may not be a single physical computer infrastructure) may include a data communication interface 3260 for packet data communication. The platform also may include a central processing unit ("CPU") 3220, in the form of one or more processors, for executing program instructions. The platform may include an internal communication bus 3210, and the platform also may include a program storage and/or a data storage for various data files to be processed and/or communicated by the platform such as ROM 3230 and RAM 3240, although the system 3200 may receive programming and data via network communications. The system 3200 also may include input and output ports 3250 to connect with input and output devices such as keyboards, mice, touchscreens, monitors, displays, etc. Of course, the various system functions may be implemented in a distributed fashion on a number of similar platforms, to distribute the processing load. Alternatively, the systems may be implemented by appropriate programming of one computer hardware platform.

The general discussion of this disclosure provides a brief, general description of a suitable computing environment in which the present disclosure may be implemented. In one embodiment, any of the disclosed systems, methods, and/or graphical user interfaces may be executed by or implemented by a computing system consistent with or similar to that depicted and/or explained in this disclosure. Although not required, aspects of the present disclosure are described in the context of computer-executable instructions, such as routines executed by a data processing device, e.g., a server computer, wireless device, and/or personal computer. Those skilled in the relevant art will appreciate that aspects of the present disclosure can be practiced with other communications, data processing, or computer system configurations, including: Internet appliances, hand-held devices (including personal digital assistants ("PDAs")), wearable computers, all manner of cellular or mobile phones (including Voice over IP ("VoIP") phones), dumb terminals, media players, gaming devices, virtual reality devices, multi-processor systems, microprocessor-based or programmable consumer electronics, set-top boxes, network PCs, mini-computers, mainframe computers, and the like. Indeed, the terms "computer," "server," and the like, are generally used interchangeably herein, and refer to any of the above devices and systems, as well as any data processor.

Aspects of the present disclosure may be embodied in a special purpose computer and/or data processor that is specifically programmed, configured, and/or constructed to perform one or more of the computer-executable instructions explained in detail herein. While aspects of the present disclosure, such as certain functions, are described as being performed exclusively on a single device, the present disclosure also may be practiced in distributed environments where functions or modules are shared among disparate processing devices, which are linked through a communications network, such as a Local Area Network ("LAN"), Wide Area Network ("WAN"), and/or the Internet. Similarly, techniques presented herein as involving multiple devices may be implemented in a single device. In a distributed computing environment, program modules may be located in both local and/or remote memory storage devices.

Aspects of the present disclosure may be stored and/or distributed on non-transitory computer-readable media, including magnetically or optically readable computer discs, hard-wired or preprogrammed chips (e.g., EEPROM semiconductor chips), nanotechnology memory, biological memory, or other data storage media. Alternatively, computer implemented instructions, data structures, screen displays, and other data under **aspects** of the present disclosure may be distributed over the Internet and/or over other networks (including wireless networks), on a propagated signal on a propagation medium (e.g., an electromagnetic wave(s), a sound wave, etc.) over a period of time, and/or they may be provided on any analog or digital network (packet switched, circuit switched, or other scheme).

Program aspects of the technology may be thought of as "products" or "articles of manufacture" typically in the form of executable code and/or associated data that is carried on or embodied in a type of machine-readable medium. "Storage" type media include any or all of the tangible memory of the computers, processors or the like, or associated modules thereof, such as various semiconductor memories, tape drives, disk drives and the like, which may provide non-transitory storage at any time for the software programming. All or portions of the software may at times be communicated through the Internet or various other telecommunication networks. Such communications, for example, may enable loading of the software from one computer or processor into another, for example, from a management server or host computer of the mobile communication network into the computer platform of a server and/or from a server to the mobile device. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links, or the like, also may be considered as media bearing the software. As used herein, unless restricted to non-transitory, tangible "storage" media, terms such as computer or machine "readable medium" refer to any medium that participates in providing instructions to a processor for execution.

It is to be appreciated that 'one or more' includes a function being performed by one element, a function being performed by more than one element, e.g., in a distributed fashion, several functions being performed by one element, several functions being performed by several elements, or any combination of the above.

Moreover, it will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

The systems, apparatuses, devices, and methods disclosed herein are described in detail by way of examples and with reference to the figures. The examples discussed herein are examples only and are provided to assist in the explanation of the apparatuses, devices, systems, and methods described herein. None of the features or components shown in the drawings or discussed below should be taken as mandatory for any specific implementation of any of these the apparatuses, devices, systems or methods unless specifically designated as mandatory. For ease of reading and clarity, certain components, modules, or methods may be described solely in connection with a specific figure. In this disclosure, any identification of specific techniques, arrangements, etc. are either related to a specific example presented or are merely a general description of such a technique, arrangement, etc. Identifications of specific details or examples are not intended to be, and should not be, construed as mandatory or limiting unless specifically designated as such. Any failure to specifically describe a combination or sub-combination of components should not be understood as an indication that any combination or sub-combination is not possible. It will be appreciated that modifications to disclosed and described examples, arrangements, configurations, components, elements, apparatuses, devices, systems, methods, etc. can be made and may be desired for a specific application. Also, for any methods described, regardless of whether the method is described in conjunction with a flow diagram, it should be understood that unless otherwise specified or required by context, any explicit or implicit ordering of steps performed in the execution of a method does not imply that those steps must be performed in the order presented but instead may be performed in a different order or in parallel.

Throughout this disclosure, references to components or modules generally refer to items that logically can be grouped together to perform a function or group of related functions. Like reference numerals are generally intended to refer to the same or similar components. Components and modules can be implemented in software, hardware, or a combination of software and hardware. The term "software" is used expansively to include not only executable code, for example machine-executable or machine-interpretable instructions, but also data structures, data stores and computing instructions stored in any suitable electronic format, including firmware, and embedded software. The terms "information" and "data" are used expansively and includes a wide variety of electronic information, including executable code; content such as text, video data, and audio data, among others; and various codes or flags. The terms "information," "data," and "content" are sometimes used interchangeably when permitted by context.

The hardware used to implement the various illustrative logics, logical blocks, modules, and circuits described in connection with the aspects disclosed herein can include a general purpose processor, a digital signal processor (DSP), a special-purpose processor such as an application specific integrated circuit (ASIC) or a field programmable gate array (FPGA), a programmable logic device, discrete gate or transistor logic, discrete hardware components, or any combination thereof designed to perform the functions described herein. A general-purpose processor can be a microprocessor, but, in the alternative, the processor can be any processor, controller, microcontroller, or state machine. A processor can also be implemented as a combination of computing devices, e.g., a combination of a DSP and a microprocessor, a plurality of microprocessors, one or more microprocessors in conjunction with a DSP core, or any other such configuration. Alternatively, or in addition, some steps or methods can be performed by circuitry that is specific to a given function.

In one or more example embodiments, the functions described herein can be implemented by special-purpose hardware or a combination of hardware programmed by firmware or other software. In implementations relying on firmware or other software, the functions can be performed as a result of execution of one or more instructions stored on one or more non-transitory computer-readable media and/or one or more non-transitory processor-readable media. These instructions can be embodied by one or more processorexecutable software modules that reside on the one or more non-transitory computer-readable or processor-readable storage media. Non-transitory computer-readable or processor-readable storage media can in this regard comprise any storage media that can be accessed by a computer or a processor. By way of example but not limitation, such non-transitory computer-readable or processor-readable media can include random access memory (RAM), read-only memory (ROM), electrically erasable programmable read-only memory (EEPROM), FLASH memory, disk storage, magnetic storage devices, or the like. Disk storage, as used herein, includes compact disc (CD), laser disc, optical disc, digital versatile disc (DVD), floppy disk, and Blu-ray disc^{™}, or other storage devices that store data magnetically or optically with lasers. Combinations of the above types of media are also included within the scope of the terms non-transitory computer-readable and processor-readable media. Additionally, any combination of instructions stored on the one or more non-transitory processor-readable or computer-readable media can be referred to herein as a computer program product.

Many modifications and other embodiments of the inventions set forth herein will come to mind to one skilled in the art to which these inventions pertain having the benefit of teachings presented in the foregoing descriptions and the associated drawings. Although the figures only show certain components of the apparatus and systems described herein, it is understood that various other components can be used in conjunction with the supply management system. Therefore, it is to be understood that the inventions are not to be limited to the specific embodiments disclosed and that modifications and other embodiments are intended to be included within the scope of the appended claims. Moreover, the steps in the method described above can not necessarily occur in the order depicted in the accompanying diagrams, and in some cases one or more of the steps depicted can occur substantially simultaneously, or additional steps can be involved. Although specific terms are employed herein, they are used in a generic and descriptive sense only and not for purposes of limitation.

It is intended that the specification and examples be considered as exemplary only, with a true scope and spirit of the disclosure being indicated by the following claims.

## Claims

1. A method, comprising:
at a device with one or more processors and a memory:
receiving a request to generate a dashboard visualization associated with a portfolio of assets, wherein the request comprises:
an asset descriptor, the asset descriptor describing one or more assets in the portfolio of assets; and
in response to the request:
obtaining, based on the asset descriptor, aggregated data associated with the portfolio of assets;
determining metrics for an asset hierarchy associated with the portfolio of assets based on a model related to a time series mapping of attributes for the aggregated data; and
providing the dashboard visualization to an electronic interface of a computing device, the dashboard visualization comprising the metrics for an asset hierarchy associated with the portfolio of assets.

2. The method of claim 1, the request further comprising a user identifier, the user identifier describing a user role for a user associated with access of the dashboard visualization via the electronic interface, and, in response to the request, obtaining the aggregated data based on the user identifier.

3. The method of claim 2, further comprising:
configuring the dashboard visualization based on the user identifier.

4. The method of any one of claims 1-3, further comprising:
determining a list of prioritized actions for the portfolio of assets based on the metrics; and
providing the list of prioritized actions to the electronic interface via the dashboard visualization.

5. The method of claim 3, further comprising:
grouping the prioritized actions for the portfolio of assets based on relationships between the aggregated data; and
configuring the dashboard visualization based on the grouping of the prioritized actions for the portfolio of assets.

6. The method of any one of claims 4-5, further comprising:
ranking, based on impact of respective prioritized actions with respect to the portfolio of assets, the prioritized actions to generate the list of the prioritized actions;
providing the list of the prioritized actions to the electronic interface via the dashboard visualization.

7. The method of any one of claims 1-6, further comprising:
determining an alerts list associated with one or more recommendations for the portfolio of assets based on the metrics; and
providing the alerts list to the electronic interface via the dashboard visualization.

8. The method of any one of claims 1-7, further comprising:
configuring the dashboard visualization to provide a visualization of performance of the portfolio of assets with respect to different hierarchy level of assets.

9. The method of any one of claims 1-8, further comprising:
configuring the dashboard visualization to provide individual control of the one or more assets in the portfolio of assets via the dashboard visualization.

10. The method of any one of claims 1-8, further comprising:
receiving a voice input, the voice input comprising the request to generate the dashboard visualization, the voice input comprising:
voice input data, the voice input data comprising one or more asset insight requests associated with the portfolio of assets.

11. The method of claim 10, further comprising:
in response to the voice input:
performing a natural language query with respect to the voice input data, the natural language query obtaining one or more attributes associated with the one or more asset insight requests.

12. The method of claim 11, further comprising:
in response to the voice input:
obtaining, based on the one or more attributes, aggregated data associated with the portfolio of assets.

13. The method of claim 12, further comprising:
in response to the voice input:
determining one or more asset insights related to the portfolio of assets based on the aggregated data, the dashboard visualization comprising the one or more asset insights for the portfolio of assets.

14. The method of claim 10, further comprising:
querying a natural language database based on the voice input to determine the one or more attributes associated with the one or more asset insight requests.

15. The method of claim 10, further comprising:
configuring a three-dimensional (3D) model of an asset from the portfolio of assets for the dashboard visualization based on the one or more attributes associated with the voice input.
